(19) Europäisches Patentamt / European Patent Office / Office européen des brevets

(11) **EP 2 240 848 B1**

(12) **EUROPÄISCHE PATENTSCHRIFT**

(45) Veröffentlichungstag und Bekanntmachung des Hinweises auf die Patenterteilung:
**17.08.2011 Patentblatt 2011/33**

(21) Anmeldenummer: **08869998.8**

(22) Anmeldetag: **11.12.2008**

(51) Int Cl.:
***G06F 7/58*** *(2006.01)*

(86) Internationale Anmeldenummer:
**PCT/EP2008/010520**

(87) Internationale Veröffentlichungsnummer:
**WO 2009/086878 (16.07.2009 Gazette 2009/29)**

(54) **SCHALTUNG UND VERFAHREN ZUR GENERIERUNG EINER ECHTEN, SCHALTUNGSSPEZIFISCHEN UND ZEITINVARIANTEN ZUFALLSZAHL**

CIRCUIT AND METHOD FOR GENERATING A TRUE, CIRCUIT-SPECIFIC AND TIME-INVARIANT RANDOM NUMBER

MONTAGE ÉLECTRIQUE ET PROCÉDÉ POUR GÉNÉRER UN VRAI NOMBRE ALÉATOIRE, SPÉCIFIQUE DU MONTAGE ET NON VARIABLE DANS LE TEMPS

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **11.01.2008 DE 102008003946**

(43) Veröffentlichungstag der Anmeldung:
**20.10.2010 Patentblatt 2010/42**

(73) Patentinhaber: **Micronas GmbH**
**79108 Freiburg (DE)**

(72) Erfinder:
• **LAZICH, Dejan**
**76297 Stutensee (DE)**
• **WUENSCHE, Micaela**
**76131 Karlsruhe (DE)**
• **KALUZA, Sebastian**
**81541 München (DE)**

(74) Vertreter: **Koch Müller**
**Patentanwaltsgesellschaft mbH**
**Maaßstraße 32/1**
**69123 Heidelberg (DE)**

(56) Entgegenhaltungen:
• **EDWARD SUH G ET AL: "Physical Unclonable Functions for Device Authentication and Secret Key Generation" DESIGN AUTOMATION CONFERENCE, 2007. DAC '07. 44TH ACM/IEEE, IEEE, PI, 1. Juni 2007 (2007-06-01), Seiten 9-14, XP031183294 ISBN: 978-1-59593-627-1**
• **GASSEND B ET AL: "Identification and authentication of integrated circuits" CONCURRENCY AND COMPUTATION: PRACTICE AND EXPERIENCE, WILEY, LONDON, GB, Bd. 3, 1. Juni 2003 (2003-06-01), Seiten 1-26, XP007908366 ISSN: 1532-0626**
• **SUH G E ET AL: "AEGIS: A single-chip secure processor" INFORMATION SECURITY TECHNICAL REPORT, ELSEVIER ADVANCED TECHNOLOGY, Bd. 10, Nr. 2, 1. Januar 2005 (2005-01-01), Seiten 63-73, XP025369326 ISSN: 1363-4127 [gefunden am 2005-01-01]**
• **EDWARD SUH G ET AL: "Aegis: A Single-Chip Secure Processor" IEEE DESIGN & TEST OF COMPUTERS, IEEE SERVICE CENTER, NEW YORK, NY, US, Bd. 24, Nr. 6, 1. November 2007 (2007-11-01), Seiten 570-580, XP011198556 ISSN: 0740-7475**
• **GHAITH HAMMOURI ET AL: "PUF-HB: A Tamper-Resilient HB Based Authentication Protocol" APPLIED CRYPTOGRAPHY AND NETWORK SECURITY; [LECTURE NOTES IN COMPUTER SCIENCE], SPRINGER BERLIN HEIDELBERG, BERLIN, HEIDELBERG, Bd. 5037, 5. Juni 2007 (2007-06-05), Seiten 346-365, XP019076281 ISBN: 978-3-540-68913-3**
• **ALKABANI Y ET AL: "Remote activation of ICs for piracy prevention and digital right management" COMPUTER-AIDED DESIGN, 2007. ICCAD 2007. IEEE/ACM INTERNATIONAL CONFER ENCE ON, IEEE, PI, 4. November 2007 (2007-11-04), Seiten 674-677, XP031221917 ISBN: 978-1-4244-1381-2**

**Beschreibung**

Eine integrierte Schaltung (IC), die für die Durchführung von kryptografischen Verfahren vorgesehen ist, soll die Möglichkeit haben, ihren privaten (für asymmetrische Kryptoalgorithmen), sowie alle geheimen Schlüssel (für symmetrische Kryptoalgorithmen), die sie mit ihren Kommunikationspartnern (anderen ICs) ausgetauscht hat, in dafür vorgesehenen nichtflüchtigen Speichern sicher (im Sinne der Geheimhaltung) zu bewahren.

Eine derartige Schaltung ist aus EDWARD SUH G ET AL: "Physical Unclonable Functions for Device Authentication and Secret Key Generation" DESIGN AUTOMATION CONFER-ENCE, 2007. DAC '07 44TH ACM/IEEE, PI, 1. Juni 2007 (2007-06-01). Seiten 9-14, XP031183294 ISBN: 978-1-59593-627-1 bekannt. Des Weiteren ist aus GASSEND B ET AL: "Identification and authentication of integrated circuits" CONCURRENCY AND COMPUTA-TION: PRACTICE AND EXPERIENCE. WILEY. LONDON. GB, Bd. 3, 1. Juni 2003 (2003-06-01) Seiten 1-26, XP007908366 ISSN: 1532-0626 eine gattungsbildende Schaltung bekannt.

Weitere Schaltungen und Verfahren sind aus: SUH G E ET AL: "AEGLS: A single-chip secure processor "INFROMATION SECURITY TECHNICAL REPORT, ELSEVIER AD-VANCED TECHNOLOGY, Bd. 10, Nr. 2. 1. Januar 2005 (2005-01-01) Seiten 63-73, XP025369326 ISSN: 1363-4127 und aus EDWARD SUH G ET AL: "Aegis: A Single -Chip Secure Processor" IEEE DESIGN & TEST OF COMPUTERS, IEEE SERVICE CENTER, NEW YORK, NY, US; Bd. 24, Nr. 6, 1. November 2007 (2007-11-01). Seiten 570-580, XP011198556 ISSN 0740-7475 und aus GHAITH KAMMOURI ET AL: "PUF-HB: A Tamper-Resilient HB Based Authentication Protocol "APPLIED CRYPTOHGRAPHY AND NETWORK SECURITY; [LECTURE NOTES IN COMPUTER SCIENDE], SPRINGER BERLIN HEIDELBERG, BERLIN, HEIDELBERG; Bd. 5037, 5. Juni 2007 (2007-06-05), Seiten 346-365, XP019076281 ISBN: 978-3-540-68913-3, sowie aus ALKABANI Y ET AL: "Remote activation of Ics for piracy prevention and digital right management "COMPUTER-AIDED DESIGN, 2007. ICCAD 2007. IEEE/ACM INTERNATIONAL CONFER ENCE ON, IEEE, PI, 4. November 2007 (2007-11-04), Seiten 674-677, XP031221917 ISBN. 978-1-4244-1381- bekannt.

Oft sollen auch andere Daten, die ein IC für seine vorgesehenen kryptografischen Funktionen braucht, geheim gehalten werden. Beispielsweise geheime Schlüssel zur Ver- und Entschlüsselung von sensiblen Daten, die in einem unsicheren Speicher abgelegt werden sollen, Anfangszustände (engl. *initial values*) für einen kryptografischen Modus oder für einen Pseudozufallszahlengenerator, Passworte für den Zugang in bestimmten IC- Bereichen usw. Im weiteren Verlauf dieses Dokuments werden alle geheimen Daten, die ein IC für sein einwandfreies Funktionieren ständig oder gelegentlich braucht, als *IC-Geheimdaten* bezeichnet. Einige Arten von IC-Geheimdaten müssen dem IC noch während seiner Produktion in der sogenannten *Personalisierungsphase* von außen zugeführt werden. Andere Arten von IC-Geheimdaten kann der IC während seiner regulären Nutzung (Betriebsphase) selbst oder in Kooperation mit anderen ICs durch verschiedene Kryptoprotokolle zum Austausch von Geheimnissen bestimmen. Sobald IC-Geheimdaten erzeugt werden, sollen sie nichtflüchtig gespeichert werden, um bei Bedarf für bestimmte Aufgaben im IC sofort eingesetzt zu werden.

Dabei sollten sie ständig, sowohl bei eingeschaltetem (laufendem), als auch bei ausgeschaltetem IC (wenn die Versorgungsspannung unterbrochen ist) gegen möglichst alle Arten von *Implementierungsattacken* geschützt sein. Unter Implementierungsattacken versteht man unbefugte Manipulationen (Angriffe), die Schwachstellen der physikalischen Implementierung von Kryptosystemen in einem IC ausnutzen [1, 2, 3].

Unter *sicherer Speicherung* von IC-Geheimdaten (engl. *data storage cell security mechanism* [4]) versteht man nur den effektiven Schutz vor Implementierungsattacken auf IC-Geheimdaten, die unverschlüsselt (im Klartext) innerhalb des nichtflüchtigen Speichers liegen. Der effektive Schutz während der Erzeugung, des Ein- und Auslesens in/aus dem nichtflüchtigen Speicher sowie während des Einsatzes der IC-Geheimdaten im aktuell ausgeführten Kryptoalgorithmus muss gesondert betrachtet werden und wird als *sichere Verarbeitung* von IC-Geheimdaten bezeichnet.

Sichere Speicherung und sichere Verarbeitung von IC-Geheimdaten kann man durch den Einsatz bekannter Maßnahmen gegen Implementierungsattacken gewährleisten [2, 5]. Dabei wird entweder der ganze IC, oder nur der IC-Teil in dem die IC-Geheimdaten gespeichert und verarbeitet werden, durch geeignete Gegenmaßnamen geschützt. Dieser geschützte Teil des ICs wird als *geschützter IC-Bereich* (engl. *physical security boundary*) bezeichnet. Die Maßnahmen gegen **statische** Implementierungsattacken (bei ausgeschaltetem IC) auf die sichere Speicherung von IC-Geheimdaten sind viel aufwendiger und schwieriger durchzusetzen als die Maßnahmen gegen **dynamische** Implementierungsattacken (bei laufendem IC) auf die sichere Verarbeitung von IC-Geheimdaten. Das liegt hauptsächlich daran, dass der Angriff bei ausgeschaltetem IC keinen Einschränkungen bzgl. Zeit oder Programmablauf unterliegt. Deshalb muss der geschützte IC-Bereich abgeschirmt und durch diverse Sensoren ständig (auch bei ausgeschaltetem IC) überwacht werden [5].

Zum Schutz von gespeicherten IC-Geheimdaten bietet sich, neben sicherer Speicherung, auch eine andere Möglichkeit an, sodass nur noch Schutzmaßnahmen gegen dynamische Implementierungsattacken auf die Verarbeitung von IC-Geheimdaten notwendig sind. Hierfür kann man mittels eines besonderen geheimen Schlüssels, den der IC selbst erzeugt hat und der niemandem bekannt sein darf, alle IC-Geheimdaten symmetrisch verschlüsseln und danach in einem nicht gesondert geschützten nichtflüchtigen Speicher bewahren. Dieser Speicher muss sich nicht im geschützten IC-Bereich befinden, er kann sogar außerhalb des ICs liegen. Der dafür eingesetzte besondere Geheimschlüssel, muss eine echte, binäre und zeitinvariante Zufallszahl sein, die in diesem Dokument als *IC-Eigenschlüssel* bezeichnet wird. Diese Zufallszahl bzw. dieser IC-Eigenschlüssel darf nicht durch einen deterministischen Algorithmus erzeugt werden und muss besonders sicher nichtflüchtig gespeichert werden, da die Sicherheit aller IC-Geheimdaten von ihm abhängt. Deswegen muss die Erzeugung, Speicherung und Verarbeitung des IC-Eigenschlüssels möglichst allen bekannten Implementierungsattacken widerstehen.

Für die Realisierung dieser Eigenschaften reichen die Standardmethoden zur Erzeugung und nichtflüchtigen Speicherung von kryptografischen Schlüsseln in einem IC nicht aus. Es müssen spezielle physikalische Eigenschaften und technische Mechanismen eingesetzt werden, um den IC-Eigenschlüssel in einer nicht-digitalen Form nichtflüchtig im IC zu bewahren, d.h. der IC-Eigenschlüssel muss im IC ständig **getarnt** sein. Nur bei Bedarf soll er aus dieser getarnten (unerkennbaren) nicht-digitalen Form nur durch eine passende Extraktionsschaltung extrahiert (in digitale Form konvertiert) werden. Diese digitale Form soll nach möglichst kurzer Nutzung sofort wieder gelöscht werden. Nur die ursprüngliche, getarnte nichtdigitale Form darf für die nächste Erzeugung der digitalen Form des IC-Eigenschlüssels im IC ständig bewahrt werden.

Im Gegensatz zur sicheren Speicherung von IC-Geheimdaten im Klartext, verlangt die Verschlüsselung von IC-Geheimdaten mit dem IC-Eigenschlüssel mehr Datenverarbeitung, wie z.B. Extrahierung des IC-Eigenschlüssels in die digitale Form, Erzeugung eines Hash-Wertes zur Integritätsprüfung und die Ver- und Entschlüsselung der IC-Geheimdaten selbst. Andererseits ist in diesem Fall der Einsatz von Maßnahmen gegen Implementierungsattacken wesentlich einfacher, da nur Schutzmaßnahmen gegen Implementierungsattacken auf die Verarbeitung von IC-Geheimdaten notwendig sind.

Das betrifft insbesondere eingebettete Systeme, die aufgrund von zunehmender Vernetzung immer mehr IC-Geheimdaten nutzen. Sie sind diesen Attacken besonders häufig ausgesetzt und außerdem sehr kostenempfindlich.

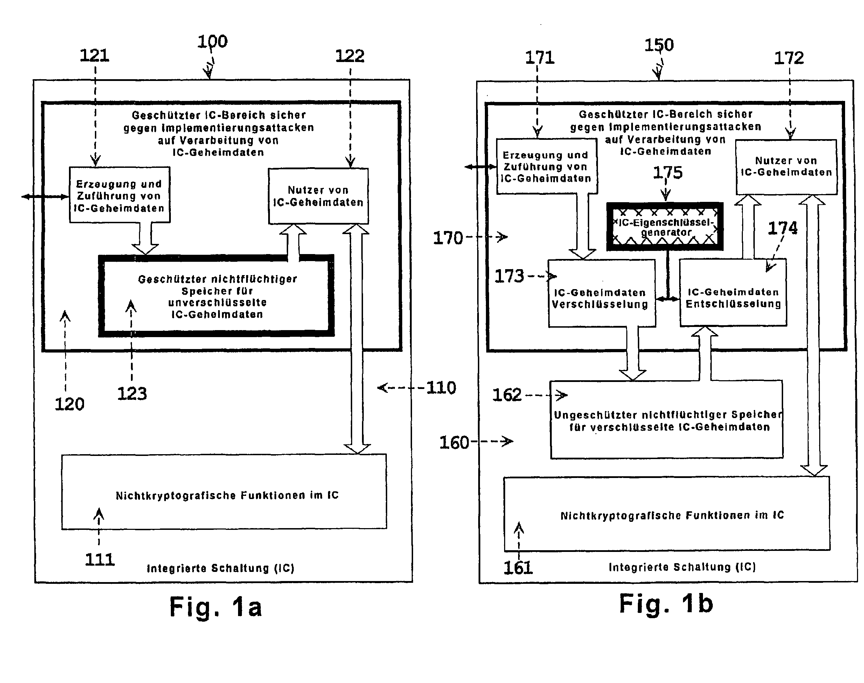

In der unten im Detail erläuterten **Figur 1** ist der Aufbau dieser zwei prinzipiell unterschiedlichen Methoden zum Schutz von IC-Geheimdaten dargestellt: **1a)** die klassische Strategie der sicheren Speicherung durch Abschirmung und Bewachung der IC-Geheimdaten im Klartext und **1b)** die in diesem Dokument betrachtete Strategie der Verschlüsselung von IC-Geheimdaten mit einem manipulationssicheren und getarnten IC-Eigenschlüssel.

Ein IC-Eigenschlüssel muss zwingend eine Reihe von Eigenschaften aufweisen:

Jeder einzelne IC aus eine *IC-Produktionsserie* von **M** funktional identischen ICs mit kryptografischen Funktionen, hergestellt mit denselben lithografischen Masken, soll nach dem ersten Aufruf eines *Initialisierungsbefehls* eine binäre Zahl der Länge **N** erzeugen, die für diesen bestimmten IC einzigartig und vor dem ersten Aufruf unvorsehbar (zufällig) ist. Jeder erneute Aufruf dieses Initialisierungsbefehls in demselben IC soll wieder dieselbe Zahl erzeugen, auch wenn die Versorgungsspannung des ICs inzwischen unterbrochen war (der IC ausgeschaltet war). Diese Zahl, die den IC-Eigenschlüssel darstellt, wird, ausschließlich innerhalb des ICs der sie erzeugt hat, für den Schutz (Geheimhaltung) von sämtlichen IC-Geheimdaten und als eine Quelle für die Generierung von sicheren Identifikations-Daten dieses ICs benutzt.

Der IC-Eigenschlüssel soll insbesondere die folgenden Eigenschaften erfüllen:

**1. Geheimhaltung -** Sowohl während als auch vor und nach dem gesamten Lebenszyklus des ICs darf der IC-Eigenschlüssel niemandem bekannt werden, oder an anderer nicht dazu vorgesehener Stelle reproduziert werden, ohne dass für diese *Kompromittierung* ein Aufwand nötig wäre, der den Nutzen bei weitem übersteigt.

**2. Schutz vor Serienkompromittierung -** Die Kenntnis beliebig vieler IC-Eigenschlüssel einer IC-Produktionsserie, die durch eventuell erfolgreiche Angriffe in Erfahrung gebracht wurden, darf die Kompromittierung von weiteren, noch unbekannten IC-Eigenschlüsseln nicht so weit erleichtern, dass die Kosten den Nutzen nicht mehr weit übersteigen.

**3. Integritätsschutz -** Der erzeugte Wert des IC-Eigenschlüssels darf nicht über die Ein- und Ausgänge des ICs, oder auf anderem Wege beeinflussbar sein und damit geändert werden können. Er darf ausschließlich von einem in einem bestimmten geschützten IC-Bereich platzierten *IC-Eigenschlüsselgenerator* erzeugt werden.

**4. Lokale und zeitliche Beschränkung -** Der IC-Eigenschlüssel darf nie den geschützten IC-Bereich verlassen, oder nichtflüchtig (in digitaler Form) gespeichert werden. Er darf nur den *Schaltungen zur symmetrischen Ver- und Entschlüsselung von IC-Geheimdaten* zur Verfügung gestellt werden. Die hierfür notwendige flüchtige Speicherung darf ausschließlich kurzfristig, und bevorzugt auch nur bitweise oder in Teilen erfolgen. Nach der Nutzung in dem Ver- oder Entschlüsselungsprozess wird sein digitaler Wert sofort gelöscht. Nach dem Entschlüsselungsprozess werden die entschlüsselten IC-Geheimdaten den entsprechenden *Nutzern von IC-Geheimdaten* (die die Kryptoalgorithmen ausführen) zur Verfügung gestellt und nach dem Einsatz gleich gelöscht.

**5. Resistenz gegen Implementierungsattacken -** Der geschützte IC-Bereich, und damit der IC-Eigenschlüsselgenerator selbst, sollen gegen möglichst viele Arten von Implementierungsattacken auf die sichere Verarbeitung von IC-Geheimdaten geschützt werden. Gegen Implementierungsattacken auf die sichere Speicherung (im Klartext) müssen keine besonderen Maßnahmen ergriffen werden, da alle diese Daten mit dem IC-Eigenschlüssel verschlüsselt gespeichert werden.

**6. Vermeidung von Obfuscation -** Um sich vor Attacken durch Reverse-Engineering zu schützen, darf der IC-Eigenschlüsselgenerator nicht auf Basis eines verborgenen oder eines bekannten deterministischen Algorithmus funktionieren, der mit verborgenen Parametern parametrisiert wird. Er darf weder während noch nach der IC Produktion individuell parametrisiert werden, auch wenn dieses vertraulich durchgeführt wird und die Parameter im IC versteckt integriert werden. Der kryptografische Grundsatz, der die Verschleierung (engl. *obfuscation*) verbietet, soll eingehalten werden.

**7. Nichtdeterministische Generierung -** Der IC-Eigenschlüsselgenerator muss also auf Basis eines *nichtdeterministischen Verfahrens* funktionieren. Die einzelnen Bitwerte des IC-Eigenschlüssels sollen durch eine *echte, zeitinvariante* und *wertkontinuierliche Zufallsquelle* innerhalb des ICs bestimmt werden.

**8. Unklonbarkeit -** Die wertkontinuierliche, zeitinvariante Zufallsquelle soll nur durch eine untrennbar mit ihr integrierte *Extraktionsschaltung* und nur nach einem Initialisierungsbefehl als richtiger Wert des IC-Eigenschlüssels interpretiert werden. Dieser binäre Wert darf mit keinen anderen Mitteln und Methoden aus der wertkontinuierlichen Zufallsquelle rekonstruierbar und damit kompromittierbar sein.

**9. Zuverlässige Extraktion -** Die Wahrscheinlichkeit einer fehlerhaften Interpretation bei der Extraktion des IC-Eigenschlüssels durch die Extraktionsschaltung selbst, die durch verschiedene Messstörungen entstehen kann, soll möglichst klein sein. Diese *Extraktionsfehlerwahrscheinlichkeit* soll auch von Änderungen der Umgebungsbedingungen möglichst wenig beeinflusst werden. Sie kann durch Einsatz von einem fehlerkorrigierenden Code einigermaßen reduziert werden. Um eine fehlerfreie Extraktion sicherzustellen, kann man ein kryptografischer Hash-Wert von dem IC-Eigenschlüssel in der Personalisierungsphase erzeugen und in einem nichtflüchtigen Speicher aufbewahren.

**10. Großer Hamming-Abstand -** Der kleinste auftretende *Hamming-Abstand* $dH_m$ zwischen zwei beliebigen IC-Eigenschlüsseln soll möglichst groß sein, um nach einer Kompromittierung die vollständige Suche (engl. *brute force*) nach weiteren IC-Eigenschlüsseln möglichst aufwendig (komplex) zu halten. Weiterhin müssen die IC-Eigenschlüssel einer IC-Produktionsserie lang genug sein (N groß genug), um den Wert dieses minimalen Hamming-Abstandes hoch genug zu halten. Diese Forderung ist optimal erfüllt, wenn alle M IC-Eigenschlüssel einer IC-Produktionsserie, als Bit-Folgen interpretiert, den Kriterien einer echt zufälligen (engl. *true random*) Bit-Sequenz genügen. Informationstheoretisch ausgedrückt stellen alle IC-Eigenschlüssel einer IC-Produktionsserie einen binären *zufälligen Block-Code* **(N, M, $d_{Hm}$)$_2$** im Sinne von Shannon [6] dar, der eine sehr kleine Coderate **R = ($log_2$ M)/N** haben soll [7, 8, 9].

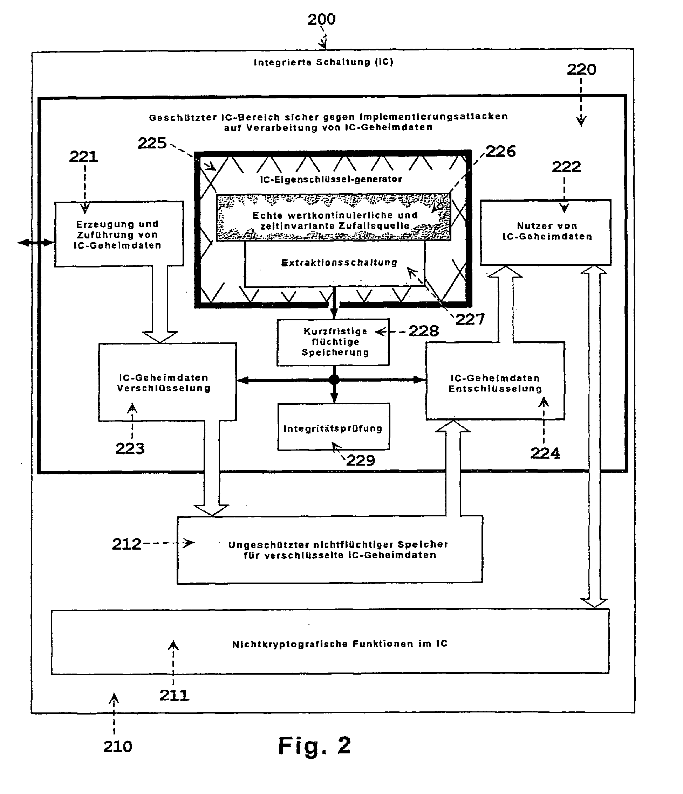

In der weiter unten im Detail erläuterten **Figur 2** ist der prinzipielle Aufbau eines IC-Eigenschlüsselgenerators dargestellt.

In diesem Dokument wird eine Erfindung vorgestellt, die den Schutz von IC-Geheimdaten und einen IC-Identitätsnachweis mit Hilfe eines IC-Eigenschlüssels mit oben postulierten Eigenschaften ermöglicht.

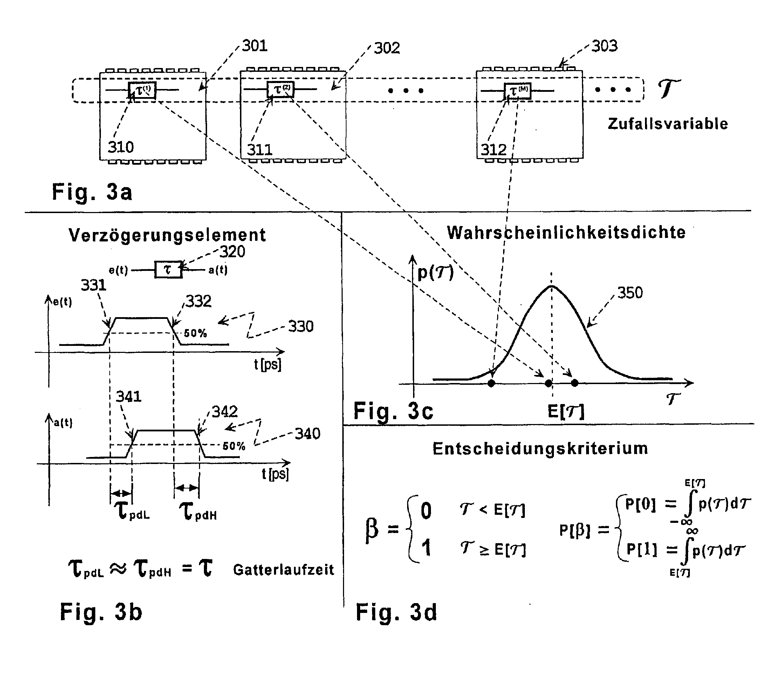

Es ist bekannt, dass in einem IC die *Gatterlaufzeit* τ von funktional gleichen logischen Gattern, beispielsweise UND-Schaltungen, ODER-Schaltungen, Invertern (NICHT-Schaltungen) oder reinen Verzögerunsgliedern, auch bei Herstellung gleicher Ausführungsformen unter Verwendung derselben Technologie und lithografischen Masken von IC zu IC zufällig variiert (siehe **Figur 3a**). Hinzu kommt ein zusätzlicher Einfluss der jeweiligen Umgebungsbedingungen -beispielsweise von Temperatur, Versorgungsspannung und Alterung- auf die absoluten Laufzeiten der jeweiligen Gatter, aber kaum auf das Verhältnis der Gatterlaufzeiten unterschiedlicher Gatter eines IC zueinander. Dementsprechend ist es naheliegend, die Gatterlaufzeit (siehe Definition in **Figur 3b**) eines solchen *Verzögerungselementes* als *wertkontinuierliche Zufallsvariable* τ zur Erzeugung eines IC-Eigenschlüssels zu verwenden. Ein typischer Verlauf der *Wahrscheinlichkeitsdichte* dieser Zufallsvariable ist in **Figur 3c** dargestellt.

Allerdings können in der praktischen Anwendung nur binäre IC-Eigenschlüssel verwendet werden, weshalb eine Transformation der wertkontinuierlichen in eine wertdiskrete, binäre uniform verteilte Zufallsvariable β notwendig ist. Dies ist zum Beispiel durch Einführen des Erwartungswertes **E**[τ] als Schwellenwert möglich. Liegt der aktuelle Wert der kontinuierlichen Zufallsvariablen unterhalb dieses Schwellenwertes, wird der binären Zufallsvariablen der Wert 0 zugeordnet, andernfalls der Wert 1, wie in **Figur 3d** dargestellt.

Insbesondere bei Verwendung eines einzelnen Verzögerungselementes pro IC zur Erzeugung einer binären Zufallsvariablen stellen sich bei dieser Transformation aber drei wesentliche Realisierungsprobleme: Erstens kann man mit einem Schwellenwert nur eine ein Bit breite binäre Zufallszahl erzeugen, zweitens ist eine hinreichend präzise Schätzung und Realisierung des Schwellenwertes schwierig und drittens sind die Differenzen zwischen dem Messwert und dem Schwellenwert sehr klein, so dass Messstörungen eine eindeutige Feststellung des binären Wertes häufig verhindern und dadurch die Extraktionsfehlerwahrscheinlichkeit erhöhen (siehe oben Eigenschaft 9. Zuverlässige Extraktion).

Diese Probleme löst eine Schaltung mit den Merkmalen des Anspruchs 1 und ein Verfahren mit den Merkmalen des Anspruchs 12.

Der Erfindung liegt die Erkenntnis zu Grunde, dass bei Verwendung einer **Matrix von Verzögerungselementen**, die variabel miteinander zu Ketten von Verzögerungselementen verschaltbar sind, durch die variable Verschaltung eine Vielzahl binärer Zufallsvariablen bereitgestellt werden kann, durch Vergleich der Verzögerungszeiten jeweils zweier solcher Ketten miteinander. Somit wird die Realisierung eines Schwellenwertes auf einfache Weise vermieden. An die Stelle der Differenzen zwischen Messwert und Schwellenwert tritt dann die Differenz der Verzögerungszeiten von zwei Ketten von Verzögerungselementen, die im Vergleich zu der Variation der Verzögerungszeiten zweier einzelner Verzögerungselemente genau dann deutlich erhöht ist, wenn die Ketten von Verzögerungselementen sich ausreichend voneinander unterscheiden.

Dementsprechend weist die erfindungsgemäße Schaltung zur Erzeugung einer echten, schaltungsspezifischen und zeitinvarianten binären Zufallszahl zumindest eine Matrix von K·L Verzögerungselementen, die mittels L-1 einfachen oder zweifachen Kommutationsschaltungen miteinander zu Ketten von Verzögerungselementen der Länge L verschaltbar sind, einen vor die Matrix geschalteten einfachen oder zweifachen Demultiplexer und eine hinter die Matrix geschalteten einfachen oder zweifachen Multiplexer, und einen Laufzeit- oder Zahlenkomparator auf, wobei die Stellung der Kommutationsschaltungen, des Demultiplexers und des Multiplexers durch ein Steuersignal vorgebbar ist. Erfindungsgemäß weist die Schaltung weiter einen **Kanalcode-Codierer,** mit dem Codeworte eines **Kanalcodes** erzeugbar sind, und einen **Umcodierer,** mit dem Codeworte des Kanalcodes zum Steuersignal der L-1 einfachen oder zweifachen Kommutationsschaltungen umcodierbar sind, auf.

Ein Kanalcode ist ein Blockcode mit $N < q^L$ Codeworten, die aus q möglichen Codesymbolen zusammengesetzt sind, und der einen bestimmten minimalen Hamming-Abstand $d_{Hm} > 1$ zwischen seinen Codeworten der Länge L aufweist. Je grösser $d_{Hm}$ ist, desto besser ist ein Kanalcode, vorausgesetzt man vergleicht Paare von Codeworte für gegebene N, L und q.

Die einzelnen Codeworte des Kanalcodes steuern erfindungsgemäß nach einer entsprechenden Umcodierung durch einen Umcodierer, die das Codewort des Kanalcodes in ein Codewort eines **Auswahlcodes** umwandelt, die Einstellung der Kommutationsschaltungen, des Demultiplexers und des Multiplexers, was insbesondere über die entsprechenden Steuerbusse möglich ist, also einerseits welche Verzögerungselemente aus jeweils benachbarten Spalten der Matrix von Verzögerungselementen miteinander verbunden werden, in welches bzw. welche Verzögerungselemente der ersten Spalte der Matrix ein Signal zur Laufzeitbestimmung eingespeist wird und an welchem bzw. welchen Verzögerungselementen der letzten Spalte der Matrix das Signal zur Laufzeitbestimmung abgegriffen wird.

Der Kanalcode-Codierer und der entsprechende Umcodierer bestimmen den Auswahlcode für Kettenpaare. Durch das Vorsehen dieser Codierer wird also sichergestellt, dass solche Kettenpaare mittels des Laufzeit- oder Zahlenkomparators miteinander verglichen werden, die einander möglichst unähnlich sind.

Die Vorteile dieser Anordnung liegen darin, dass durch die variable Verschaltung eine Vielzahl binärer Zufallsvariablen bereitgestellt werden kann und dass bei Vergleich der von den Verzögerungszeiten jeweils zweier solcher Ketten abhängigen Größen miteinander die Realisierung eines Schwellenwertes auf einfache und stabile Weise ersetzt wird. An die Stelle der Differenzen zwischen Messwert und Schwellenwert tritt dann die Differenz der Verzögerungszeiten von zwei Ketten von Verzögerungselementen oder eine von dieser Differenz abhängige Größe wie z.B. die Zahl der in einer gegebenen Zeit möglichen Durchläufe durch die jeweiligen rückgekoppelten Ketten von Verzögerungselementen. Die Stabilität dieser Größen ist im Vergleich zu der Variation der Verzögerungszeiten zweier einzelner Verzögerungselemente deutlich erhöht. Der IC-Eigenschlüssel kann dann bitweise aus den entsprechenden binären Zufallsvariablen erzeugt werden, was im Gegensatz zu einer Vorgehensweise, bei der sofort ein kompletter IC-Eigenschlüssel erzeugt wird die Extraktionsfehlerwahrscheinlichkeit signifikant verringert und das Vorsehen zusätzlicher, fehlerkorrigierender Codes unnötig macht (siehe Eigenschaft 9 oben).

In einer besonders bevorzugten Ausführungsform sind die Verzögerungselemente Inverter. Vorzugsweise ist weiter die erster Kette von L Verzögerungselementen zur Bildung eines ersten Ringoszillators an ihren Eingang rückgekoppelt und der Ausgang der zweiten Kette von L Verzögerungselementen zur Bildung eines zweiten Ringoszillators an ihren Eingang rückgekoppelt, wobei entweder die Kettenlänge L ungerade ist oder die Kettenlänge L gerade ist und die Rückkopplung über einen zusätzlichen Inverter erfolgt.

Die Verwendung einer Vorrichtung mit den so entstehenden Ringoszillatoren bringt den großen Vorteil mit sich, dass die auch bei Ketten von Verzögerungselementen noch relativ kleinen auftretenden Laufzeitunterschiede aufaddiert werden. Zur Kontrolle der Ringoszillatoren ist es weiter vorteilhaft, wenn ein erster Zähler und ein zweiter Zähler vorgesehen sind, wobei der erste Zähler mit dem ersten Ringoszillator und dem ersten Eingang des Komparators in Signalverbindung steht und der zweite Zähler mit dem zweiten Ringoszillator sowie dem zweiten Eingang des Komparators in Signalverbindung steht, so dass die über eine vorbestimmte Zahl von Rückkopplungszyklen akkumulierten Verzögerungen des ersten Ringoszillators und des zweiten Ringoszillators an die jeweiligen Eingänge des Komparators weitergeleitet werden.

Im Rahmen von Versuchen hat sich ergeben, dass es sinnvoll ist, wenn mindestens eine der Ketten an ihrem Anfang oder Ende mindestens ein zusätzliches, nicht zur Matrix von L·K Verzögerungselementen gehörendes Verzögerungselement aufweist, das direkt und nicht über eine zweifache Kommutationsschaltung mit den ihm benachbarten Verzögerungselementen der Kette verbunden ist und beide Ketten unterschiedlich viele Verzögerungselemente umfassen, da dadurch das Auftreten von Querkopplungseffekten im Schwingungsverhalten des ersten und des zweiten Ringoszillators vermieden werden kann. Damit der Vergleich der Verzögerungszeiten dadurch nicht beeinträchtigt wird, muss dann eine entsprechend angepasste Korrektur vorgenommen werden.

Besonders bevorzugt ist eine Ausführungsform, in der ein Generator für Anfangszustände des Kanalcode-Codierers vorgesehen ist, wodurch die Erzeugung der Codeworte des Kanalcodes initiiert wird. Dies kann mit einem einfachen Zähler erfolgen, es kann aber gegebenenfalls schaltungstechnisch einfacher sein, als Generator für Anfangszustände eine Lookup-Tabelle zu verwenden, der die Anfangszustände zu entnehmen sind.

Im Fall K > 2 hat sich für die Erzeugung von Codeworten ein Kanalcode-Codierer bewährt, der die Codeworte gemäß einem Reed-Solomon Kanalcode erzeugt.

In einer schaltungstechnisch besonders einfachen Ausgestaltung der Erfindung ist K=2, so dass als zweifache Kommutationsschaltungen einfache Multiplexer verwendet werden können. Vorteilhaft ist es weiter, L so zu wählen, dass es als $2^l-1$ mit natürlicher Zahl $l \neq 0$ darstellbar ist. Offensichtlich hat die Wahl von L bzw. 1 darüber hinaus, wie unten genauer dargestellt wird, einen entscheidenden Einfluss darauf, wie viele Bits der IC-Eigenschlüssel maximal umfassen kann, da sie bei gegebenem K die maximale Zahl unterschiedlicher Ketten von Verzögerungselementen bestimmt.

Eine vereinfachte Ausführung des Kanalcode-Codierers ist im Fall K=2 möglich, in dem statt des Reed-Solomon Kanalcodes ein Simplex-Kanalcode anwendbar ist. Als aus schaltungstechnischen Gründen zu bevorzugende Ausgestaltung des Kanalcode-Codierers bietet sich in diesem Fall ein rückgekoppeltes Schieberegister mit $L = 2^l-1$ Verschiebungen und $L+1 - 2^l$ Anfangszuständen an, dessen Rückkopplungen durch ein primitives Polynom bestimmt sind.

In einer besonders einfachen Ausgestaltung der Erfindung können der Kanalcode-Codierer als Lookup-Tabelle ausgeführt sein oder Kanalcode-Codierer und der Umcodierer als Lookup-Tabelle ausgeführt sein.

Das erfindungsgemäße Verfahren zur Erzeugung einer echten, schaltungsspezifischen und zeitinvarianten Zufallszahl mittels einer Matrix von L•K Verzögerungselementen, L-1 einfachen oder zweifachen Kommutationsschaltungen, eines vor die Matrix geschalteten einfachen oder zweifachen Demultiplexers, eines hinter die Matrix geschalteten einfachen oder zweifachen Multiplexer, und eines Laufzeit- oder Zahlenkomparators, weist zumindest die Schritte des Erzeugens eines Codewortes eines Kanalcodes, des Umcodierens eines Codewortes eines Kanalcodes zu einem Auswahlcode, des Erzeugens von Ketten von L Verzögerungselementen durch Einstellen einer einem der Codeworte des Auswahlcodes entsprechenden Einstellung der L-1 einfachen oder zweifachen Kommutationsschaltungen, des einfachen oder zweifachen Demultiplexers und des einfachen oder zweifachen Multiplexers und des Paarweisen Vergleichens von durch die Verzögerungszeiten von zwei durch die dem Codewort des Kanalcodes entsprechende Einstellung der L-1 Kommutationsschaltungen definierten Ketten von L Verzögerungselementen bestimmten Größen mittels eines Zahlen- oder Verzögerungskomparators zur Erzeugung eines Bits der echten, schaltungsspezifischen und zeitinvarianten Zufallszahl auf.

Dabei kann für jedes Bit des IC-Eigenschlüssels jeweils ein Codewort des Kanalcodes erzeugt, umcodiert und zur Zusammenschaltung in die entsprechenden Ketten von L Verzögerungselementen verwendet werden, es können aber auch im Vorfeld die Codeworte des Kanalcodes und/oder die Codeworte des Auswahlcodes erzeugt und beispielsweise in einer Lookup-Tabelle gespeichert werden.

Die Vorteile dieses Verfahrens liegen darin, dass durch die variable Verschaltung eine Vielzahl binärer Zufallsvariablen bereitgestellt werden kann, und bei Vergleich der Verzögerungszeiten jeweils zweier solcher Ketten miteinander die Realisierung des Schwellenwertes auf einfache und stabile Weise vermieden wird. An die Stelle der Differenzen zwischen Messwert und Schwellenwert tritt dann die Differenz der Verzögerungszeiten von zwei Ketten von Verzögerungselementen, die im Vergleich zu der Variation der Verzögerungszeiten zweier einzelner Verzögerungselemente deutlich erhöht ist. Der IC-Eigenschlüssel kann dann bitweise aus den entsprechenden binären Zufallsvariablen erzeugt werden, was im Gegensatz zu einer Vorgehensweise, bei der sofort ein kompletter IC-Eigenschlüssel erzeugt wird, die Exraktionsfehlerwahrscheinlichkeit signifikant verringert und das Vorsehen zusätzlicher, fehlerkorrigierender Codes unnötig macht (siehe Eigenschaft 9 oben).

Es hat sich als besonders vorteilhaft erwiesen, wenn die von den Verzögerungszeiten der zwei durch die Einstellung der L-1 zweifache Kommutationsschaltungen definierten Ketten von L Verzögerungselementen bestimmten Größen, die mittels des Komparators verglichen werden, durch Betreiben der Ketten als Ringoszillatoren über eine vorgegebene Anzahl von Oszillationen hinweg erzeugt werden. Durch das dadurch bewirkte vielmalige Durchlaufen der entsprechenden Ketten von Verzögerungselementen wird die Differenz zwischen den Laufzeiten deutlich erhöht, so dass eine verbesserte Stabilität (kleinere Exraktionsfehlerwahrscheinlichkeit) der Bestimmung des gerade ermittelten Bits des IC-Eigenschlüssels erreicht wird. Selbstverständlich kann man auch (umgekehrt) diese Bits durch den Vergleich der gezählten Oszillationen in einem vorgegebenen Zeitintervall bestimmen.

Besonders stabil gegenüber einer wechselseitigen Beeinflussung der zu vergleichenden Ketten ist ein Vorgehen, bei dem die beiden Ketten von L Verzögerungselementen jeweils einzeln betrieben werden.

Eine zeitsparende Vorgehensweise zur Vermeidung einer wechselseitigen Beeinflussung der zu vergleichenden Ketten besteht darin, dass die erste Kette von L Verzögerungselementen und die zweite Kette von L Verzögerungselementen gleichzeitig als Ringoszillatoren betrieben werden, wobei jedoch zwischen den Ketten durch eine ungleiche Anzahl hinzugefügter weiterer, nicht zur L•K Matrix von Verzögerungselementen gehörender Verzögerungselemente ein mit jeder Oszillation wachsender definierter zeitlicher Versatz erzeugt wird. In diesem Fall werden, um die Wahrscheinlichkeitsverteilung des durch den Komparator bestimmten Bits des IC-Eigenschlüssels nicht zu verfälschen, vorteilhafterweise die Zählerstände vor dem Vergleich um den definierten Versatz korrigiert.

Besonders elegant ist eine Umcodierung im Fall K=2 nach der unten detaillierter diskutierten XOR-Regel möglich.

Besonders vorteilhaft ist es, wenn die erste Kette von L Verzögerungselementen und die zweite Kette von L Verzögerungselementen mit Hilfe einer Parity-Check Schaltung an ihren jeweiligen Eingang zurückgekoppelt sind.

Zur Erzeugung der Codeworte des Auswahlcodes hat sich der Reed-Solomon-Code als einfaches Verfahren bewährt, wenn K > 2. Speziell im Fall K = 2 ist aber eine vorteilhafte Alternative darin zu sehen, die Auswahlcodes gemäß einem Simplex-Code zu erzeugen. Die einfachste technische Realisation dafür wird dadurch erzielt, dass die Codeworte durch ein rückgekoppeltes Schieberegister mit $L = 2^{l-1}$ Verschiebungen und L+1 Anfangszuständen, dessen Rückkopplungen durch ein primitives Polynom bestimmt sind, erzeugt werden.

Im Folgenden wird die Erfindung anhand von in Zeichnungen dargestellten Ausführungsbeispielen näher erläutert. Es zeigt:

**Fig.1a:** eine prinzipielle schematische Darstellung einer ge- schützten integrierten Schaltung für eine Strategie der Abschirmung und Bewachung der IC-Geheimdaten.

**Fig.1b:** eine prinzipielle schematische Darstellung einer ge- schützten integrierten Schaltung für eine Strategie der Verschlüsselung der IC-Geheimdaten und Tarnung des IC-Eigenschlüssels.

**Fig. 2:** eine detailliertere schematische Darstellung einer ge- schützten integrierten Schaltung für eine Strategie der Verschlüsselung der IC-Geheimdaten und Tarnung des IC-Eigenschlüssels.

**Fig. 3a:** eine Reihe von IC-Bausteinen mit Verzögerungselementen

**Fig. 3b:** eine grafische Darstellung der Gatterlaufzeit $\tau$ eines Verzögerungselementes

**Fig. 3c:** ein Beispiel für eine Wahrscheinlichkeitsdichte der Signallaufzeiten von Verzögerungselementen

**Fig. 3d:** ein Kriterium zur Transformation einer wertkontinu- ierlichen Zufallsvariablen $\tau$ in eine wertdiskrete, binäre, uniform verteilte Zufallsvariable $\beta$

**Fig. 4a:** eine Matrix $M_{KXL}$ von Verzögerungselementen $\tau_{kl}$

**Fig. 4b:** die Zuordnung von zwei wertkontinuierlichen Zufalls- variablen $\tau_{VK'}$ und $\tau_{VK''}$ zu zwei Verzögerungsketten

**Fig. 4c:** einen Vergleich der Wahrscheinlichkeitsdichten der Laufzeitverteilung von einzelnen Verzögerungselementen mit Wahrscheinlichkeitsdichten der Laufzeit von Ketten von Verzögerungselementen

**Fig. 4d:** ein im Rahmen der Erfindung verwendbares Entschei- dungskriterium zum Erhalt einer wertdiskreten, binären Zufallsvariablen $\beta_{ij}$

**Fig. 5:** eine Schaltungsanordnung gemäß einer ersten Ausfüh- rungsform der Erfindung

**Fig. 6a:** schematische Darstellung einer zweifachen Kommutati- onsschaltung

**Fig. 6b:** den allgemeinen Aufbau einer zweifachen Kommutationss- chaltung

**Fig. 7a:** eine beispielhafte Einstellung einer zweifachen Kommu- tationsschaltung für K=4

**Fig. 7b:** den detaillierten Aufbau einer zweifachen Kommutati- onsschaltung für K=4

**Fig. 8a:** eine erste Verschaltung einer 4x4-Matrix von Verzöge- rungselementen zu Ketten der Länge 4 und die daraus resultierenden Hamming-Abstände

**Fig. 8b:** eine zweite Verschaltung einer 4x4-Matrix von Verzöge- rungselementen zu Ketten der Länge 4 und die daraus resultierenden Hamming-Abstände

**Fig. 8c:** eine dritte Verschaltung einer 4x4-Matrix von Verzöge- rungselementen zu Ketten der Länge 4 und die daraus resultierenden Hamming-Abstände

**Fig. 9a:** Beispiel eines einfachen nichtlinearen Kanalcodes mit den Parametern $(L=4, N=6, d_{Hm}=3)_{q=6}$

**Fig. 9b:** ein Beispiel für die Konstruktion einer verschaltba- ren Verzögerungsmatrix gesteuert mit dem Kanalcode in der **Figur 9a**

**Fig. 10:** eine Schaltungsanordnung gemäß einer zweiten Ausfüh- rungsform der Erfindung

**Fig. 11 :** eine Schaltungsanordnung gemäß einer dritten Ausfüh- rungsform der Erfindung

**Fig. 12a:** den Aufbau einer binären Kommutationsschaltung 1200 im Detail

**Fig. 12b:** eine Kurzschreibweise für die Schaltung gemäß **Figur 12a**

**Fig. 13a:** eine konkrete Ausgestaltung der Erfindung mit einer verschaltbaren Verzögerungsmatrix für K=2 und L=5 ge- mäß dem allgemeinen Prinzip nach **Figur 10**

**Fig. 13b:** alle 16 Paare von Verzögerungsketten, die mit der An- ordnung aus **Figur 13a** gebildet werden können

**Fig. 14a:** ein Simplex-Code für den Fall $K=2$, $l=_2$, $L=_3$ $(=2^l-1)$

**Fig. 14b:** die grafische Veranschaulichung eines Simplex-Codes für den Fall $K=2$, $l=2$, $L=3$ $(=2^l-1)$

**Fig. 14c:** ein Simplex-Code für den Fall $K=2$, $l=3$, $L=7$ $(=2^l-1)$

**Fig. 15:** eine alternative Ausführungsform der Erfindung für den Fall K=2.

Sichere Speicherung und sichere Verarbeitung von IC-Geheimdaten kann man durch den Einsatz bekannter Maßnahmen gegen Implementierungsattacken gewährleisten. Beispielhaft für eine auf **Abschirmung und Bewachung der IC-Geheimdaten** ausgerichtete IC-Architektur ist in **Figur 1a** schematisch eine integrierte Schaltung 100 gezeigt, die aus einem ungeschützten IC-Bereich 110 und einem vor Implementierungsattacken geschützten IC-Bereich 120 besteht. Nichtkryptografische Funktionen 111 des IC befinden sich im ungeschützten IC-Bereich 110, während Verarbeitung der IC-Geheimdaten, konkret die Erzeugung und Zuführung von IC-Geheimdaten 121 und die Nutzung von IC- Geheimdaten 122 im geschützten IC-Bereich 120 erfolgen. Darüber hinaus befindet sich im geschützten IC-Bereich 120 ein besonders geschützter (abgeschirmter und bewachter), nichtflüchtiger Speicher 123 für unverschlüsselte IC- Geheimdaten. Dieser Speicher ist aber statischen Implementierungsattacken (bei ausgeschaltetem IC) ausgesetzt, gegen die Sicherungsmaßnahmen viel aufwendiger und schwieriger durchzusetzen sind als die Maßnahmen gegen dynamische Implementierungsattacken (bei laufendem IC) auf die sichere Verarbeitung von IC-Geheimdaten. Das liegt hauptsächlich daran, dass der Angriff bei ausgeschaltetem IC keinen Einschränkungen bzgl. Zeit oder Programmablauf unterliegt. Deshalb muss der geschützter IC-Bereich 120 (oder eventuell nur 123) abgeschirmt werden und durch diverse Sensoren ständig (auch bei ausgeschaltetem IC) bewacht werden.

Beispielhaft für eine auf **Tarnung des IC-Eigenschlüssels** und **Verschlüsselung der IC-Geheimdaten** ausgerichtete IC-Architektur ist in. **Figur 1b** schematisch eine integrierte Schaltung 150 gezeigt, die ebenfalls aus einem ungeschützten IC-Bereich 160 und einem vor Implementierungsattacken geschützten IC-Bereich 170 besteht. Der wesentliche Unterschied zur **Figur 1a** besteht darin, dass nun im ungeschützten Bereich nicht nur die nichtkryptografischen Funktionen 161 des IC sondern auch ein ungeschützter, nichtflüchtiger Speicher für verschlüsselte IC-Geheimdaten 162 liegen. Im geschützten Bereich 170 erfolgt lediglich die Verarbeitung der Geheimdaten, die in diesem Fall neben einer Erzeugung und Zuführung von IC-Geheimdaten 171 und einer Nutzung von IC-Geheimdaten 172 auch eine IC-Geheimdatenverschlüsselung 173 und eine IC-Geheimdatenentschlüsselung 174 umfasst. Dabei erfolgt die IC-Geheimdatenverschlüsselung 173 und die IC-Geheimdatenverschlüsselung 174 unter Verwendung des von einem IC-Eigenschlüsselgenerator 175 generierten IC-Eigenschlüssels. Es sind also nur noch Schutzmaßnahmen gegen dynamische Implementierungsattacken auf die Verarbeitung von IC-Geheimdaten in geschütztem Bereich 170 notwendig. Die IC-Geheimdaten sind auch im ungeschützten, nichtflüchtigen Speicher 162 sicher, denn sie sind mittels eines besonders getarnten IC-Eigenschlüssels, den der IC selbst erzeugt hat und der niemandem bekannt sein darf, symmetrisch verschlüsselt. Dieser Speicher 162 kann sogar außerhalb des ICs liegen.

Der dafür eingesetzte IC-Eigenschlüssel darf nicht durch einen deterministischen Algorithmus erzeugt werden und muss besonders sicher (getarnt) nichtflüchtig gespeichert werden, da die Sicherheit aller IC-Geheimdaten von ihm abhängt. Deswegen muss auch die Erzeugung, Speicherung und Verarbeitung des IC-Eigenschlüssels möglichst allen bekannten Implementierungsattacken widerstehen.

Für die Realisierung dieser Eigenschaften reichen die Standardmethoden der Erzeugung und nichtflüchtigen Speicherung von Schlüsseln in einem IC nicht aus. Es müssen spezielle physikalische Eigenschaften und technische Mechanismen eingesetzt werden, um den IC-Eigenschlüssel in einer nicht-digitalen Form nichtflüchtig im IC zu bewahren, die anhand der detaillierteren schematischen Darstellung einer geschützten integrierten Schaltung für eine in dieser Erfindung verfolgte Strategie der Tarnung des IC-Eigenschlüssels und Verschlüsselung der IC-Geheimdaten in **Figur 2** nachvollziehbar sind.

**Figur 2** zeigt einen IC 200 mit einem ungeschützten IC-Bereich 210 und einem vor Implementierungsattacken geschützten IC-Bereich 220. Im ungeschützten IC-Bereich 210 befinden sich nichtkryptografische Funktionen 211 und ein ungeschützter nichtflüchtiger Speicher 212 für verschlüsselte IC-Geheimdaten. Im geschützten IC-Bereich 220 erfolgt die Verarbeitung der IC-Geheimdaten, insbesondere neben einer Erzeugung und Zuführung von IC-Geheimdaten 221 und einer Nutzung von IC-Geheimdaten 222 auch eine IC-Geheimdatenverschlüsselung 223 und eine IC-Geheimdatenentschlüsselung 224. Ferner ist im geschützten Bereich 220 ein IC-Eigenschlüsselgenerator 225 angeordnet, der aus einer echten, wertkontinuierlichen und zeitinvarianten Zufallsquelle 226 und einer Extraktionsschaltung 227 besteht.

Der IC-Eigenschlüssel soll nur bei Bedarf aus der echten, wertkontinuierlichen und zeitinvarianten Zufallsquelle 226, in der er in einer sicheren, unerkennbaren und nicht-digitalen Form vorliegt (getarnt ist), durch die Extraktionsschaltung 227 extrahiert und in digitale Form konvertiert werden. Diese digitale Form soll nach möglichst kurzer Nutzung sofort wieder gelöscht werden. Daher ist im geschützten IC-Bereich 220 weiterhin ein Modul zur kurzfristigen flüchtigen Speicherung 228 des IC-Eigenschlüssels vorgesehen. Sinnvollerweise ist im geschützten Bereich 220 zusätzlich eine Integritätsprüfung 229, wie z.B. die Erzeugung eines Hash-Wertes des IC-Eigenschlüssels, vorgesehen.

Im Gegensatz zur sicheren Speicherung von IC-Geheimdaten im Klartext, verlangt die Verschlüsselung von IC-Geheimdaten mit dem IC-Eigenschlüssel mehr Datenverarbeitung, wie z.B. Extrahierung des IC-Eigenschlüssels in die digitale Form, Erzeugung eines Hash-Wertes zur Integritätsprüfung und die Ver- und Entschlüsselung der IC-Geheimdaten selbst. Andererseits ist in diesem Fall der Einsatz von Maßnahmen gegen Implementierungsattacken wesentlich einfacher, da nur Schutzmaßnahmen gegen Implementierungsattacken auf die Verarbeitung von IC-Geheimdaten notwendig sind. Abschirmung und ständige Bewachung sind dagegen nicht mehr notwendig.

Kritische Komponente des in **Figur 2** dargestellten schematischen Aufbaus ist die echte, wertkontinuierliche und zeitinvarianten Zufallsquelle 226, deren Aufbau nun anhand weiterer Figuren diskutiert wird.

**Figur 3a** zeigt eine Reihe von IC-Bausteinen 301, 302,...,303, die jeweils als Verzögerungselement eine gegebene, auf allen IC-Bausteinen 301, 302,...,303 identisch aufgebaute integrierte Elementarschaltung 310, 311,...,312 aufweisen. Wie nachfolgend näher erläutert wird, existieren auch bei identisch aufgebauten IC-Bausteinen 301, 302, ..., 303 Unterschiede in den Verzögerungen entsprechend den Laufzeiten $\tau^{(1)}$, $\tau^{(2)}$,...,$\tau^{(M)}$, die ein an die entsprechende integrierte Elementarschaltung angelegtes Signal beim Durchlaufen der Schaltung erfährt. Konkret könnte es sich bei den identisch aufgebauten integrierten Elementarschaltungen 310, 311, ...,312 beispielsweise um funktional gleiche logische Gatter, beispielsweise Inverter, ODER-Schaltungen oder UND-Schaltungen handeln.

In **Figur 3b** wird eine Gatterlaufzeit $\tau$ eines Verzögerungselementes 320 schematisch dargestellt. Am Verzögerungselement 320 lässt sich ein Eingangssignal e(t) und ein Ausgangssignal a(t) abgreifen. In einer Darstellung 330 des Eingangssignal e(t) gegen die Zeit t erkennt man eine ansteigende Flanke 331 des Eingangssignals e(t) und eine abfallende Flanke 332 des Eingangssignals e(t).

Die Lage der ansteigenden Flanke 331 bzw., der abfallenden Flanke 332 auf der Zeitskala lässt sich vorteilhaft durch die Zeitpunkte definieren, in dem die Signalstärke des ansteigenden bzw. abfallenden Signals 50 % des Maximalwertes des Eingangssignals e(t) annimmt.

Analog erkennt man in einer Darstellung 340 des Ausgangssignals a(t) gegen die Zeit t eine ansteigende Flanke 341 des Ausgangssignals a(t) und eine abfallende Flanke 342 des Ausgangssignals a(t), deren Lage auf der Zeitskala sich vorteilhaft durch die Zeitpunkte definieren lässt, in denen die Signalstärke des ansteigenden bzw. abfallenden Signals 50% des Maximalwertes des Ausgangssignals annimmt.

Zwischen dem Zeitpunkt, der der ansteigenden Flanke 331 des Eingangssignals e(t) zugeordnet wird und dem Zeitpunkt, der der ansteigenden Flanke 341 des Ausgangssignals a(t) zugeordnet wird, besteht eine Zeitdifferenz $\tau_{pdL}$. Analog besteht zwischen dem Zeitpunkt, der der abfallenden Flanke 332 des Eingangssignals e(t) zugeordnet wird und dem Zeitpunkt, der der abfallenden Flanke 342 des Ausgangssignals a(t) zugeordnet wird, eine Zeitdifferenz $\tau_{pdH}$. Beide Zeitdifferenzen sind bei den meisten Verzögerungselementen ungefähr gleich groß, d.h. $\tau$. Die entsprechende Zeitdifferenz wird als Gatterlaufzeit $\tau$ bezeichnet, da sie die Zeit wiederspiegelt, die ein Signal zum Passieren der entsprechenden Schaltung benötigt.

Auch bei gleichartigen, innerhalb desselben Fertigungsprozesses hergestellten Verzögerungselementen stellt man messbare Variationen der Gatterlaufzeit fest, die einer Wahrscheinlichkeitsdichte p($\tau$) folgen. **Figur 3c** veranschaulicht eine solche Wahrscheinlichkeitsdichtekurve 350. Wie durch die gestrichelten Linien, die zwischen den **Figuren 3a** und **3c** gezeichnet sind, veranschaulicht wird, entsprechen die Laufzeiten $\tau^{(1)}, \tau^{(2)}, ..., \tau^{(M)}$, die ein an die entsprechenden integrierten Elementarschaltung 310, 311, ...,312 angelegtes Signal benötigt, jeweils einzelnen Stichproben (Realisierungen der Zufallsvariable $\tau$) der Wahrscheinlichkeitsdichte p($\tau$).

Um die kontinuierliche Zufallsvariable $\tau$ zur Bildung eines praktisch einsetzbaren binären IC-Eigenschlüssels überhaupt einsetzen zu können, ist eine Transformation der wertkontinuierlichen Zufallsvariablen $\tau$ in eine wertdiskrete, binäre, uniform verteilte Zufallsvariable $\beta$ notwendig. Dies ist zum Beispiel durch Einführen eines Erwartungswertes **E** [$\tau$] als Schwellenwert möglich. Liegt der aktuelle Wert der kontinuierlichen Zufallsvariablen unterhalb dieses Schwellenwertes, wird der binären Zufallsvariablen der Wert 0 zugeordnet, andernfalls der Wert 1, wie in **Figur 3d** dargestellt ist.

Insbesondere bei Verwendung eines einzelnen Verzögerungselementes pro IC zur Erzeugung einer binären Zufallsvariablen stellen sich bei dieser Transformation aber drei wesentliche Realisierungsprobleme: Erstens kann man mit einem Schwellenwert nur eine ein Bit breite binäre Zufallszahl erzeugen, zweitens ist eine hinreichend präzise Schätzung und Realisierung des Schwellenwertes schwierig und drittens sind die Differenzen zwischen dem Messwert und dem Schwellenwert sehr klein, so dass Messstörungen eine eindeutige Feststellung des binären Wertes häufig verhindern und dadurch die Extraktionsfehlerwahrscheinlichkeit erhöhen.

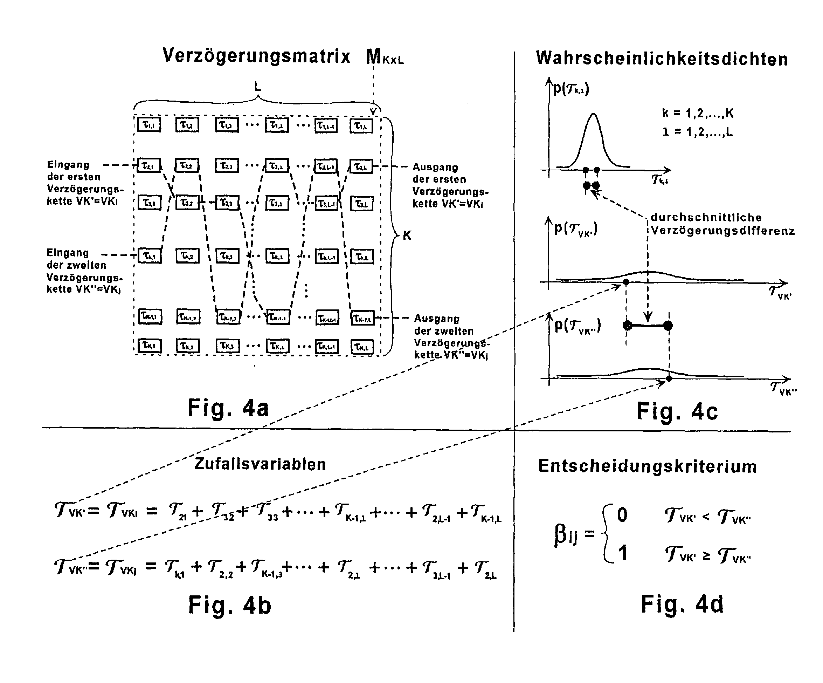

Deswegen wird erfindungsgemäß eine Matrix $M_{KXL}$ von Verzögerungselementen mit Verzögerungszeiten bzw. Laufzeiten $\tau_{kl}$ (k=1,...,**K**; l=1,...,**L**), verwendet, bei der die einzelnen Verzögerungselemente variabel miteinander zu *Verzögerungsketten* (VK) der Kettenlänge L verschaltbar sind. In **Figur 4a** ist eine solche Matrix $M_{KXL}$ von Verzögerungselementen gezeigt. Ferner sind Verschaltungen zwischen Verzögerungselementen der Matrix $M_{KXL}$ zu zwei beispielhaften Verzögerungsketten VK' und VK" gestrichelt dargestellt.

Durch die variable Verschaltung von Verzögerungselementen in benachbarten Spalten kann eine Vielzahl binärer Zufallsbits bereitgestellt werden. Jeder Verzögerungskette ist eine wertkontinuierliche Zufallsvariable $\tau_{VK}$ zugeordnet, die aus der Summe der einzelnen Zufallsvariablen gebildet wird wie in **Figur 4b** am konkreten Beispiel der Verzögerungsketten VK' und VK" bzw. der zugehörigen Zufallsvariablen $\tau_{VK'}$ und $\tau_{VK"}$ dargestellt ist. Dabei geht man davon aus, dass die einzelnen Zufallsvariablen (die den einzelnen Verzögerungselementen entsprechen) $\tau_{kl}$ (k=1, ..., K l=1,...,L) unkorreliert oder nur schwach korreliert sind, so dass die Wahrscheinlichkeitsdichten **p($\tau_{VK'}$)** bzw. **p($\tau_{VK}$")** von ganzen Verzögerungsketten, wie in **Figur 4c** dargestellt, breiter verteilt sind (mit größerer Varianz) als die von einzelnen Verzögerungselementen **p($\tau_{kl}$)**. Als Konsequenz ist die in **Figur 4c** durch Punkte dargestellte durchschnittliche Verzögerungsdifferenz ebenfalls größer, was zu einer geringeren Extraktionsfehlerwahrscheinlichkeit (siehe oben Eigenschaft 9) bei Verwendung von Ketten von Verzögerungselementen führt.

Der Vergleich der Verzögerungszeiten jeweils zweier solcher Verzögerungsketten VKi und VKj miteinander ersetzt in dieser Ausführungsform den Einsatz eines Schwellenwertes auf einfache und stabile Weise, wenn man das in **Figur 4d** dargestellte Entscheidungskriterium verwendet. An die Stelle der Differenz zwischen Messwert und Schwellenwert tritt demnach die Differenz der Verzögerungszeiten zweier Verzögerungsketten. Ist die Differenz zwischen der Verzögerungszeit $\tau_{VK'}$ = $\tau_{VKi}$ einer als erste gewählten Verzögerungskette (bezeichnet mit VK'= VKi) und der Verzögerungszeit $\tau_{VK"}$ = $\tau_{VKj}$ einer als zweite gewählten Verzögerungskette (bezeichnet mit VK" = VKj) positiv, wird der binären Zufallsvariablen $\beta_{ij}$ der Wert 1 zugeordnet, andernfalls der Wert 0, wie in **Figur 4d** dargestellt.

Auch die Messstörungen fallen bei Verwendung solcher Verzögerungsketten weit weniger ins Gewicht. Die Verzögerung der gesamten Kette ist die Summe der Verzögerungen ihrer einzelnen Elemente. Damit ist, wie aus der Wahrscheinlichkeitstheorie bekannt, auch die Varianz der Gesamtverzögerung größer als die Varianz der Verzögerung einzelner Verzögerungselemente. Die Varianz der Kettenverzögerung wächst mit der Länge der Kette. Somit wird die durchschnittliche Differenz der Verzögerungszeiten (Verzögerungsdifferenz) zweier Verzögerungsketten mit wachsender Kettenlänge L immer größer und dadurch die Extraktionsfehlerwahrscheinlichkeit kleiner.

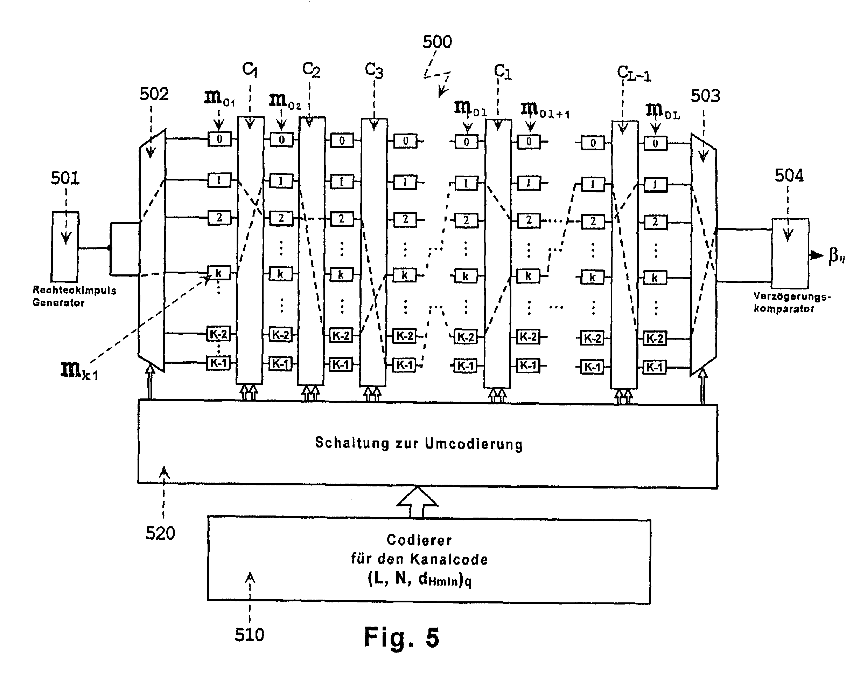

**Figur 5** zeigt eine erfindungsgemäße Schaltungsanordnung 500 in einer ersten Ausführungsform. Zu erkennen sind ein Rechteckimpulsgenerator 501, ein zweifacher Demultiplexer 502 mit zwei Signaleingängen und K Signalausgängen sowie ein durch einen Pfeil gekennzeichneter Steuerbus, KxL Verzögerungselemente $m_{kl}$ (k=0,...,K-1; l=1,..., L) mit jeweils einem Signaleingang und einem Signalausgang, L-1 zweifache Kommutationsschaltungen $C_1$, $C_2$,...,$C_{L-1}$, mit jeweils K Signaleingängen und K Signalausgängen sowie zwei jeweils durch Pfeile gekennzeichnete Steuerbusse, ein zweifacher Multiplexer 503 mit K Signaleingängen und zwei Signalausgängen sowie einem durch einen Pfeil gekennzeichneten Steuerbus und ein Verzögerungskomparator 504 mit zwei Signaleingängen und einem Signalausgang. Durch an den Steuerbussen anliegende Steuercodes wird dabei jeweils vorgegeben, welche Verbindungen zwischen Signaleingängen und Signalausgängen des zweifachen Demultiplexers 502, der zweifachen Kommutationsschaltungen $C_1$, $C_2$,...,$C_{L-1}$. bzw. des zweifachen Multiplexers 503 hergestellt werden bzw. hergestellt sind. Diese Vebindungen sind in **Figur 5** für ein bestimmtes Paar von Verzögerungsketten VK', VK" exemplarisch mit gestrichelten Linien dargestellt.

Es stehen in Signalkommunikation miteinander:

-    der Ausgang des Rechteckimpulsgenerators 501 mit den beiden Eingängen des zweifachen Demultiplexers 502,
-    jeder der Eingänge des zweifachen Multiplexers 502 mit genau einem Ausgang des zweifachen Demultiplexers, 502, wobei jeder Eingang mit einem anderen Ausgang verbunden ist und wobei in Abhängigkeit von der Einstellung des Demultiplexers 502 jeder Eingang mit jedem Ausgang verbindbar ist,
-    der k-te Ausgang des zweifachen Demultiplexers 502 mit dem Eingang des Verzögerungselements $m_{kl}$,
-    der Ausgang des Verzögerungselementes $m_{kl}$ für l<L mit dem k-ten Eingang der zweifachen Kommutationsschaltung $C_1$ und für l=L mit dem k-ten Eingang des zweifachen Multiplexers 502,
-    jeder der Eingänge der zweifachen Kommutationsschaltung $C_1$ mit genau einem Ausgang derselben zweifachen Kommutationsschaltung $C_1$, wobei jeder Eingang mit einem anderen Ausgang verbunden ist und wobei in Abhängigkeit von der Einstellung der zweifachen Kommutationsschaltung $C_1$ jeder Eingang mit jedem Ausgang verbindbar ist,
-    der Ausgang des Verzögerungselementes $m_{kL}$ mit dem k-ten Eingang des zweifachen Multiplexers 503 und
-    die Ausgänge des zweifachen Multiplexers 503 mit den Eingängen des Verzögerungskomparators 504.

Weiter zeigt **Figur 5** einen Codierer 510 für einen Kanalcode, dessen Ausgangssignale als Eingangssignale für eine Schaltung zur Umcodierung 520 dienen. Die Schaltung zur Umcodierung erzeugt Steuersignale, die an die Steuerbusse des zweifachen Demultiplexers 502, der zweifachen Kommutationsschaltungen $C_1$, $C_2$,---, $C_{L-1}$. bzw. des zweifachen Multiplexers 503 angelegt werden. Details zu dem Codierer 510 für einen Kanalcode und dem Kanalcode selbst sowie zur Schaltung zur Umcodierung 520 sind weiter unten beschrieben.

Um ein bestimmtes Bit des IC-Eigenschlüssels zu erzeugen, wird zunächst ein diesem Bit entsprechendes Codewort des Kanalcodes vom Codierer 510 für einen Kanalcode bereitgestellt und mittels der Schaltung zur Umcodierung 520 in entsprechende Steuersignale umgewandelt. Diese Steuersignale werden an die Steuereingänge des zweifachen Demultiplexers 502, der zweifachen Kommutationsschaltungen $C_1$, $C_2$, ... , $C_{L-1}$. bzw. des zweifachen Multiplexers 503 angelegt, um die beiden Ketten von Verzögerungselementen zu bilden, aus deren Vergleich sich das gewünschte Bit des IC-Eigenschlüssels ergibt. Anschließend wird im Rechteckimpulsgenerator 501 ein Rechtecksignal erzeugt, der zeitgleich an beide Signaleingänge des zweifachen Demultiplexers 502 angelegt wird und dann die beiden eingestellten (durch der Codewort des Kanalcodes und seine Umcodierung ausgewählten) Ketten von Verzögerungselementen durchläuft. Aus der zufälligen Verteilung der Verzögerungszeiten der einzelnen Verzögerungselemente $m_{kl}$ ergibt sich dann eine je nach der gerade eingestellten Kette unterschiedliche Laufzeit des Rechtecksignals durch die entsprechende Kette von Verzögerungselementen $m_{kl}$. Diese Laufzeitdifferenz wird mit Hilfe des Verzögerungskomparators 504 ausgewertet. Ergibt sich im vorliegenden Fall, dass das Rechtecksignal der ersten Kette nach dem der zweiten Kette den Verzögerungskomparator erreicht hat, entspricht dies einem Wert 1 des erzeugten Bits $\beta_{ij}$. Wäre das Rechtecksignal der zweiten Kette nach dem der ersten Kette angekommen, hätte man diesem Bit den Wert 0 zugeordnet.

Weitere Bits des IC-Eigenschlüssels werden durch andere Codeworte des Kanalcodes erhalten.

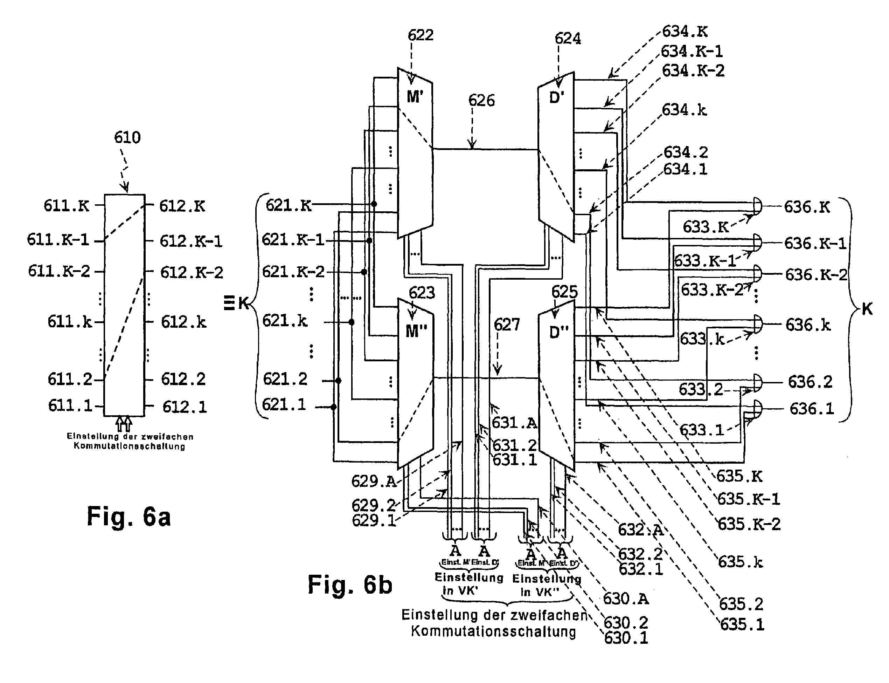

**Figur 6a** zeigt eine beispielhafte Einstellung der zweifachen Kommutationsschaltung 610. Für eine Matrix von KxL Verzögerungselementen sind K Signaleingänge 611.1,..., 611.K und K Signalausgänge 612.1,..., 612.K notwendig, von denen, wie durch die gestrichelten Linien angedeutet, in **Figur 6a** nur eine Auswahl dargestellt ist. Welche Signaleingänge und welche Signalausgänge dabei miteinander verbunden sind, hängt von den in **Figur 6a** durch Pfeile angedeuteten, an die Steuereingänge (Steuerbus) der zweifachen Kommutationsschaltung angelegten Steuersignalen ab.

Die schaltungstechnische Umsetzung einer zweifachen Kommutationsschaltung mit K Signaleingängen und K Signalausgängen ist detaillierter in **Figur 6b** angegeben. **Figur 6b** zeigt jeweils eine Auswahl von K Signalleitungen 621.1,...,621.K und K Signalleitungen 636.1, ..., 636.K; die nicht dargestellten Signalleitungen sind jeweils durch die Punkte angedeutet. Ferner zeigt **Figur 6b** zwei Multiplexer 622,623 mit jeweils K Signaleingängen, jeweils A Steuereingängen, wobei A die auf $\log_2(K)$ folgende ganze Zahl ist, und einem Signalausgang sowie zwei Demultiplexer 624, 625 mit jeweils einem Signaleingang, K Signalausgängen und A Steuereingängen.

Jede der K Signalleitungen 621,1,..., 621.K steht mit genau einem der K Signaleingänge des Multiplexers 622 und mit genau einem der K Signaleingänge des Multiplexers 623 in Signalkommunikation, wobei jeweils die Signalleitung 621.k mit dem k-ten Signaleingang der Multiplexer 622 bzw. 623 in Signalkommunikation steht.

In einem gegebenen Multiplexer 622, 623 besteht eine Signalverbindung zwischen genau einem der K Signaleingänge und dem Signalausgang. Welcher der K Signaleingänge mit dem Signalausgang verbunden ist, hängt von dem jeweils an den Steuereingängen des Multiplexers 622, 623 anliegenden Signal ab.

Ferner zeigt **Figur 6b** jeweils eine Auswahl aus A Signalleitungen 629.1,..., 629.A; 630.1,..., 630.A, 631.1,..., 631,A, 632.1,..., 632.A für jeden der Multiplexer 622, 623 und jeden der Demultiplexer 624, 625, wobei die nicht gezeichneten Signalleitungen durch Punkte dargestellt sind. Jede der Signalleitungen 629.1,..., 629.A. steht in Signalkommunikation mit einem anderen Steuereingang des Multiplexers 622, jede der Signalleitungen 630.1,...,630.A steht in Signalkommunikation mit einem anderen Steuereingang des Multiplexers 623, jede der Signalleitungen 631,1...,631.A steht in Signalkommunikation mit einem anderen Steuereingang des Demultiplexers 624 und jede der Signalleitungen 632.1,...632.A steht in Signalkommunikation mit einem anderen Steuereingang des Demultiplexers 625. Das Steuersignal, das die jeweilige Einstellung der Multiplexer 622, 623 und der Demultiplexer 624, 625 bestimmt, wird über die jeweils mit deren Steuereingängen in Signalkommunikation stehenden Signalleitungen 629.1,..., 629.A; 630.1,..., 630.A, 631.1,..., 631,A, 632.1,..., 632.A zugeführt.

Außerdem zeigt **Figur 6b** eine Signalleitung 626, die den Signalausgang des Multiplexers 622 mit dem Signaleingang des Demultiplexers 624 verbindet und eine Signalleitung 627, die den Signalausgang des Multiplexers 623 mit dem Signaleingang des Demultiplexers 625 verbindet.

Der Signaleingang des Demultiplexers 624 steht in Signalverbindung mit genau einem der K Signalausgänge des Demultiplexers 624. Welcher dies ist, wird durch die über die Signalleitungen 631,1...,631.A an den A Steuereingängen des Demultiplexers 624 angelegten Signale festgelegt und ändert sich dementsprechend bei Änderung dieses Signals.

Analog dazu steht der Signaleingang des Demultiplexers 625 in Signalverbindung mit genau einem der K Signalausgänge des Demultiplexers 625. Welcher dies ist, wird durch die über die Signalleitungen 632.1...,632.A an den A Steuereingängen des Demultiplexers 625 angelegten Signale festgelegt und ändert sich dementsprechend bei Änderung dieses Signals.

Ferner zeigt **Figur 6b** eine Auswahl von K ODER-Schaltungen 633.1,...,633.K mit jeweils zwei Signaleingängen und einem Signalausgang, wobei die nicht dargestellten ODER-Schaltungen durch Punkte repräsentiert werden und weitere Signalleitungen 634.1,..., 634.K, 635.1,...,635.K sowie 636.1,...636.K. Die Signalleitungen 634.1,...,634.K verbinden jeweils einen der K Signalausgänge des Demultiplexers 624 mit dem ersten Signaleingang einer der ODER-Schaltungen 633.1,...,633.K. Die Signalleitungen 635.1,...,635.K verbinden jeweils einen der K Signalausgänge des Demultiplexers 625 mit dem zweiten Signaleingang einer der ODER-Schaltungen 633.1,...,633.K. Die Signalleitungen 636.1,...,636.K stehen in Signalkommunikation mit den Signalausgängen der K oder-Schaltungen und entsprechen den in **Figur 6a** dargestellten K Ausgängen 612.1,...,612.K der zweifachen Kommutationsschaltung.

Die Gatter und Leitungsverbindungen in diesen zweifachen Kommutationsschaltungen sowie in zweifachen Multiplexern und Demultiplexern tragen durch ihre eigene Verzögerung zusätzlich zu den eigentlichen Verzögerungselementen zur Gesamtverzögerung einer Verzögerungskette bei. Deshalb werden zur Interpretation der Gesamtschaltung in **Figur 5** die Verzögerungen innerhalb einer zweifachen Kommutationsschaltung dem nächststehendem Verzögerungselement zugeordnet, und so wird ein äquivalentes Verzögerungselement geschaffen. Durch den gleichmäßigen Aufbau der zweifachen Kommutationsschaltungen und Multiplexer sowie Demultiplexer werden die statistischen Eigenschaften der äquivalenten Verzögerungsmatrix qualitativ nicht verändert.

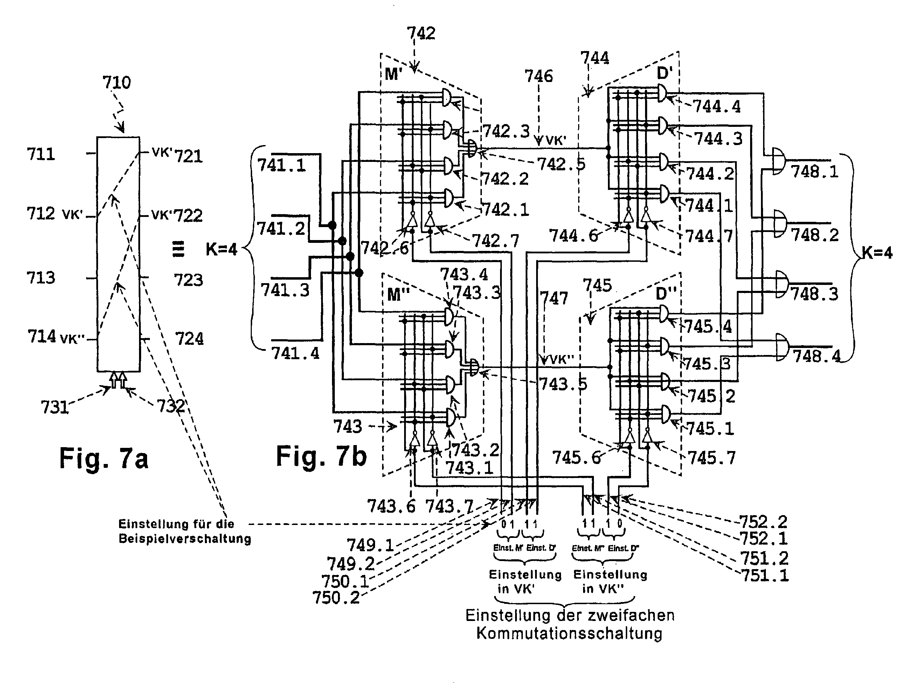

**Figur 7a** zeigt eine weiter konkretisierte zweifache Kommutationsschaltung 710 für den Fall K=4. Die zweifache Kommutationsschaltung weist vier Signaleingänge 711, 712, 713, 714 und vier Signalausgänge 721, 722, 723, 724 auf. Zusätzlich verfügt die zweifache Kommutationsschaltung über zwei durch Pfeile gekennzeichnete Steuereingänge 731, 732. Von den an den Steuereingängen 731, 732 anliegenden Signalen hängt ab, welche beiden der Signaleingänge 711, 712, 713, 714 mit jeweils welchem der Signalausgänge 721, 722, 723, 724 verbunden sind. Wie durch die gestrichelten Linien angedeutet, sollen in diesem Beispiel der Signaleingang 712 mit dem Signalausgang 721 und der Signaleingang 714 mit dem Signalausgang 722 verbunden sein.

Der **Figur 7b** ist die schaltungstechnische Umsetzung dieser Schaltung zu entnehmen. **Figur 7b** zeigt 4 Signalleitungen 741.1,...,741.4 Ferner zeigt **Figur 7b** zwei Multiplexer 742,743 mit jeweils 4 Signaleingängen und jeweils 2 Steuereingängen und einem Signalausgang sowie zwei Demultiplexer 744, 745 mit jeweils einem Signaleingang, 4 Signalausgängen und 2 Steuereingängen.

Darüber hinaus zeigt **Figur 7b** für jeden der Multiplexer 742, 743 und für jeden der Demultiplexer 744, 745 jeweils zwei Signalleitungen 749.1, 749.2; 750.1, 750.2; 751.1,751.2; 752.1,752.2. Jede der Signalleitungen 749.1, 749.2 steht in Signalkommunikation mit einem anderen Steuereingang des Demultiplexers 744, jede der Signalleitungen 750.1, 750.2 steht in Signalkommunikation mit einem anderen Steuereingang des Multiplexers 743, jede der Signalleitungen 751.1, 751.2 steht in Signalkommunikation mit einem anderen Steuereingang des Multiplexers 743 und jede der Signalleitungen 752.1,...752.2 steht in Signalkommunikation mit einem anderen Steuereingang des Demultiplexers 745. Das Steuersignal, das die jeweilige Einstellung der Multiplexer 742, 743 und der Demultiplexer 744, 745 bestimmt, wird über die jeweils mit deren Steuereingängen in Signalkommunikation stehenden Signalleitungen 749.1, 749.2; 750.1, 750.2; 751.1, 751.2; 752.1, 752.2 zugeführt.

Jede der 4 Signalleitungen 741.1,..., 741.4 steht mit genau einem der 4 Signaleingänge des Multiplexers 742 und mit genau einem der 4 Signaleingänge des Multiplexers 743 in Signalkommunikation.

Die Multiplexer 742, 743 weisen ferner jeweils 4 dreifache UND-Schaltungen 742.1,..., 742.4 bzw. 743.1,..., 743.4 und eine vierfache ODER-Schaltung 742.5 bzw. 743.5 sowie zwei Inverter 742.6, 742.7 bzw. 743.6, 743.7 auf. Jede der dreifachen UND-Schaltungen 742.1,..., 742.4 bzw. 743.1,...,743.4 weist drei Signaleingänge und einen Signalausgang auf. An den Signaleingängen der dreifachen UND-Schaltungen 742.1,..., 742.4 bzw. 743.1,...,743.4 werden durch Signalverbindungen die folgenden Eingangssignale bereitgestellt:

- an den Eingängen der dreifachen UND-Schaltung 742.1 das durch die Signalleitung 741.1 über den ersten Signaleingang des Multiplexers 742 bereitgestellte Signal, das durch die Signalleitung 749.1 bereitgestellte und durch Durchlauf durch den Inverter 742.6 invertierte Signal und das durch die Signalleitung 749.2 bereitgestellte und durch Durchlauf durch den Inverter 742.7 invertierte Signal
- an den Eingängen der dreifachen UND-Schaltung 742.2 das durch die Signalleitung 741.2 über den zweiten Signaleingang des Multiplexers 742 bereitgestellte Signal, das durch die Signalleitung 749.1 bereitgestellte und durch Durchlauf durch den Inverter 742.6 invertierte Signal und das durch die Signalleitung 749.2 bereitgestellte Signal
- an den Eingängen der dreifachen UND-Schaltung 742.3 das durch die Signalleitung 741.3 über den dritten Signaleingang des Multiplexers 742 bereitgestellte Signal, das durch die Signalleitung 749.1 bereitgestellte Signal und das durch die Signalleitung 749.2 bereitgestellte und durch Durchlauf durch den Inverter 742.7 invertierte Signal
- an den Eingängen der dreifachen UND-Schaltung 742.4 das durch die Signalleitung 741.4 über den vierten Signaleingang des Multiplexers 742 bereitgestellte Signal, das durch die Signalleitung 749.1 bereitgestellte Signal und das durch die Signalleitung 749.2 bereitgestellte Signal
- an den Eingängen der dreifachen UND-Schaltung 743.1 das durch die Signalleitung 741.1 über den ersten Signaleingang des Multiplexers 743 bereitgestellte Signal, das durch die Signalleitung 751.1 bereitgestellte und durch Durchlauf durch den Inverter 743.6 invertierte Signal und das durch die Signalleitung 751.2 bereitgestellte und durch Durchlauf durch den Inverter 743.7 invertierte Signal
- an den Eingängen der dreifachen UND-Schaltung 743.2 das durch die Signalleitung 741.2 über den zweiten Signaleingang des Multiplexers 743 bereitgestellte Signal, das durch die Signalleitung 751.1 bereitgestellte und durch Durchlauf durch den Inverter 743.6 invertierte Signal und das durch die Signalleitung 751.2 bereitgestellte Signal
- an den Eingängen der dreifachen UND-Schaltung 743.3 das durch die Signalleitung 741.3 über den dritten Signaleingang des Multiplexers 743 bereitgestellte Signal, das durch die Signalleitung 751.1 bereitgestellte Signal und das durch die Signalleitung 751.2 bereitgestellte und durch Durchlauf durch den Inverter 743.7 invertierte Signal
- an den Eingängen der dreifachen UND-Schaltung 743.4 das durch die Signalleitung 741.4 über den vierten Signaleingang des Multiplexers 743 bereitgestellte Signal, das durch die Signalleitung 751.1 bereitgestellte Signal und das durch die Signalleitung 751.2 bereitgestellte Signal.

Die Signalausgänge der dreifachen UND-Schaltungen 742.1,..., 742.4 sind mit den Signaleingängen der vierfachen ODER-Schaltung 742.5 verbunden, deren Signalausgang den Signalausgang des Multiplexers 742 bildet. Analog sind die Signalausgänge der dreifachen UND-Schaltungen 743.1,..., 743.4 sind mit den Signaleingängen der vierfachen ODER-Schaltung 743.5 verbunden, deren Signalausgang den Signalausgang des Multiplexers 743 bildet.

Dieser Aufbau der Multiplexer führt dazu, dass,

- wenn an die Signalleitungen 749.1, 749.2 bzw. 751.1, 751.2 die schaltungslogische Signalkombination 00 angelegt wird, das am ersten Signaleingang des Multiplexers 742 bzw. 743 anliegende Signal an seinen Ausgang weitergeleitet wird
- wenn an die Signalleitungen 749.1, 749.2 bzw. 751.1, 751.2 die schaltungslogische Signalkombination 01 angelegt wird, das am zweiten Signaleingang des Multiplexers 742 bzw. 743 anliegende Signal an seinen Ausgang weitergeleitet wird
- wenn an die Signalleitungen 749.1, 749.2 bzw. 751.1, 751.2 die schaltungslogische Signalkombination 10 angelegt wird, das am dritten Signaleingang des Multiplexers 742 bzw. 743 anliegende Signal an seinen Ausgang weitergeleitet wird
- wenn an die Signalleitungen 749.1, 749.2 bzw. 751.1, 751.2 die schaltungslogische Signalkombination 11 angelegt wird, das am vierten Signaleingang des Multiplexers 742 bzw. 743 anliegende Signal an seinen Ausgang weitergeleitet wird

Das Anlegen einer schaltungslogische Signalkombination "ab" an zwei Signalleitungen X, Y bedeutet dabei, dass an die Signalleitung X das Signal a angelegt wird und and die Signalleitung Y das Signal b.

Außerdem zeigt **Figur 7b** eine Signalleitung 746, die den Signalausgang des Multiplexers 742 mit dem Signaleingang des Demultiplexers 744 verbindet und eine Signalleitung 747, die den Signalausgang des Multiplexers 743 mit dem Signaleingang des Demultiplexers 745 verbindet.

Die Demultiplexer 744 bzw. 745 weisen ferner jeweils vier dreifache UND-Schaltungen 744.1,...,744.4 bzw. 745.1,...,745.4 auf, die über jeweils drei Signaleingänge und einen Signalausgang verfügen. An den Signaleingängen der dreifachen UND-Schaltungen 744.1,..., 744.4 bzw. 745.1,...,745.4 werden durch Signalverbindungen die folgenden Eingangssignale bereitgestellt:

- an den Eingängen der dreifachen UND-Schaltung 744.1 das durch die Signalleitung 746 über den Signaleingang des Demultiplexers 744 bereitgestellte Signal, das durch die Signalleitung 750.1 bereitgestellte und durch Durchlauf durch den Inverter 744.6 invertierte Signal und das durch die Signalleitung 750.2 bereitgestellte und durch Durchlauf durch den Inverter 744.7 invertierte Signal

- an den Eingängen der dreifachen UND-Schaltung 744.2 das durch die Signalleitung 746 über den Signaleingang des Demultiplexers 744 bereitgestellte Signal, das durch die Signalleitung 750.1 bereitgestellte und durch Durchlauf durch den Inverter 744.6 invertierte Signal und das durch die Signalleitung 750.2 bereitgestellte Signal

- an den Eingängen der dreifachen UND-Schaltung 744.3 das durch die Signalleitung 746 über den Signaleingang des Demultiplexers 744 bereitgestellte Signal, das durch die Signalleitung 750.1 bereitgestellte Signal und das durch die Signalleitung 750.2 bereitgestellte und durch Durchlauf durch den Inverter 744.7 invertierte Signal

- an den Eingängen der dreifachen UND-Schaltung 744.4 das durch die Signalleitung 746 über den Signaleingang des Demultiplexers 744 bereitgestellte Signal, das durch die Signalleitung 750.1 bereitgestellte Signal und das durch die Signalleitung 750.2 bereitgestellte Signal

- an den Eingängen der dreifachen UND-Schaltung 745.1 das durch die Signalleitung 747 über den Signaleingang des Demultiplexers 745 bereitgestellte Signal, das durch die Signalleitung 752.1 bereitgestellte und durch Durchlauf durch den Inverter 745.6 invertierte Signal und das durch die Signalleitung 752.2 bereitgestellte und durch Durchlauf durch den Inverter 745.7 invertierte Signal

- an den Eingängen der dreifachen UND-Schaltung 745.2 das durch die Signalleitung 747 über den Signaleingang des Demultiplexers 745 bereitgestellte Signal, das durch die Signalleitung 752.1 bereitgestellte und durch Durchlauf durch den Inverter 745.6 invertierte Signal und das durch die Signalleitung 752.2 bereitgestellte Signal

- an den Eingängen der dreifachen UND-Schaltung 745.3 das durch die Signalleitung 747 über den Signaleingang des Demultiplexers 745 bereitgestellte Signal, das durch die Signalleitung 752.1 bereitgestellte Signal und das durch die Signalleitung 752.2 bereitgestellte und durch Durchlauf durch den Inverter 745.7 invertierte Signal

- an den Eingängen der dreifachen UND-Schaltung 745.4 das durch die Signalleitung 747 über den Signaleingang des Demultiplexers 745 bereitgestellte Signal, das durch die Signalleitung 752.1 bereitgestellte Signal und das durch die Signalleitung 752.2 bereitgestellte Signal.

Dieser Aufbau der Demultiplexer 744, 745 führt dazu, dass,

- wenn an die Signalleitungen 750.1, 750.2 bzw. 752.1, 752.2 die schaltungslogische Signalkombination 00 angelegt wird, das am Signaleingang des Demultiplexers 744 bzw. 745 anliegende Signal an seinen ersten Ausgang weitergeleitet wird

- wenn an die Signalleitungen 751.1, 751.2 bzw. 752.1, 752.2 die schaltungslogische Signalkombination 01 angelegt wird, das am Signaleingang des Demultiplexers 744 bzw. 745 anliegende Signal an seinen zweiten Ausgang weitergeleitet wird

- wenn an die Signalleitungen 751.1, 751.2 bzw. 752.1, 752.2 die schaltungslogische Signalkombination 10 angelegt wird, das am Signaleingang des Demultiplexers 744 bzw. 745 anliegende Signal an seinen dritten Ausgang weitergeleitet wird

- wenn an die Signalleitungen 751.1, 751.2 bzw. 752.1, 752.2 die schaltungslogische Signalkombination 11 angelegt wird, das Signaleingang des Multiplexers 742 bzw. 743 anliegende Signal an seinen vierten Ausgang weitergeleitet wird

Dabei wird der n-te Ausgang des Demultiplexers 744 bzw. 745 jeweils vom Ausgang der dreifachen UND-Schaltung 744.n bzw. 745.n gebildet.

Ferner zeigt **Figur 7b** vier ODER-Schaltungen 748.1, ...,748.4 mit jeweils zwei Signaleingängen und einem Signalausgang. Die Signaleingänge der ODER-Schaltung 748.1 stehen in Signalverbindung mit dem Ausgang der dreifachen UND-Schaltung 744.1 bzw. mit dem Ausgang der dreifachen UND-Schaltung 745.1, die Signaleingänge der ODER-Schaltung 748.2 stehen in Signalverbindung mit dem Ausgang der dreifachen UND-Schaltung 744.2 bzw. mit dem Ausgang der dreifachen UND-Schaltung 745.2, die Signaleingänge der ODER-Schaltung 748.3 stehen in Signalverbindung mit dem Ausgang der dreifachen UND-Schaltung 744.3 bzw. mit dem Ausgang der dreifachen UND-Schaltung 745.3 und die Signaleingänge der ODER-Schaltung 748.4 stehen in Signalverbindung mit dem Ausgang der dreifachen UND-Schaltung 744.4 bzw. mit dem Ausgang der dreifachen UND-Schaltung 745.4.

Die Ausgänge der ODER-Schaltungen 748.1,...,748.4 bilden die Signalausgänge der zweifachen Kommutationsschaltung und entsprechen den Ausgängen 721,...,724 in **Figur 7a.**

Aus der Informationstheorie ist bekannt, dass zufällige binäre Codes, mit Codeworten, deren Bits statistisch unabhängig (unkorreliert) sind, den größtmöglichen minimalen Hamming-Abstand zwischen allen Codeworten erreichen, wenn die Länge der Codeworte ausreichend groß ist (Gilbert-Warshamov Schranke. Um die Korrelation zwischen den Bits zu minimieren, soll man dementsprechend bei der Auswahl von N Kettenpaaren, die einen N Bit langen IC-Eigenschlüssel erzeugen, diejenigen Kettenpaare wählen, die paarweise (Paare von Kettenpaaren) am wenigsten gemeinsame Verzögerungselemente nutzen.

Hierfür kann man einen ***Hamming-Abstand zwischen zwei Kettenpaaren*** definieren. Dieser Hamming-Abstand sei maximal (gleich der Länge L der Kette), wenn die beiden Kettenpaare kein gemeinsames Verzögerungselement nutzen. Wenn zwei Kettenpaare in $G_s$ Spalten von der Verzögerungsmatrix $M_{KXL}$ mindestens ein gemeinsames Verzögerungselement nutzen, sei der Hamming-Abstand zwischen den Kettenpaaren $KP_{ij}$ und $KP_{km}$ gleich

$$dH_s(KP_{ij}, KP_{km}) = L - G_s. \qquad (1)$$

Er wird als ***starker Hamming-Abstaad zwischen zwei Kettenpaare*** bezeichnet (engl. *strong Hamming Distance*).

Bei einer Verzögerungsmatrix mit nur zwei oder drei Zeilen (K<4) ist ein so definierter Hamming-Abstand immer gleich Null (weil zwei völlig unabhängige Kettenpaare 4 verschiedene Verzögerungselemente in einer Spalte benötigen). Um auch in diesem Fall ein Maß für die Unterschiedlichkeit zweier Kettenpaare zu definieren, wird hier der ***schwache Hammiag-Abstand zwischen zwei Kettenpaare*** $dH_w(KP_{ij}, KP_{km})$ (engl. *weak Hamming Distance*) eingeführt:

Sei $G_w$ die Anzahl der Spalten in $M_{KXL}$, in denen sowohl die jeweils ersten Verzögerungsketten (VK'), als auch die jeweils zweiten Verzögerungsketten (VK") von zwei Kettenpaaren jeweils dasselbe Verzögerungselement nutzen. Dann ist der schwache Hamming-Abstand zwischen diesen Kettenpaaren

$$dH_w(KP_{ij}, KP_{km}) = L - G_w. \qquad (2)$$

Ausgehend von der allgemeinen Annahme, dass die einzelnen Verzögerungselemente der Verzögerungsmatrix $M_{KXL}$ im Idealfall untereinander unkorreliert sind, liefern so definierte Hamming-Abstände zwischen zwei Kettenpaaren ein Maß für die Korrelation der Bits die durch diese Kettenpaare erzeugt werden. Nur wenn der starke Hamming-Abstand maximal ist ($dH_s(KP_{ij}, KP_{km}) = L$), sind die erzeugten Zufallsbits unkorreliert. Bei gleichem Wert zeigt der starke Hamming-Abstand eine wesentlich geringere Korrelation als der schwache. Je kleiner der Hamming-Abstand (stark oder schwach) der erzeugenden Kettenpaare, desto größer ist die Korrelation der erzeugten Bits.

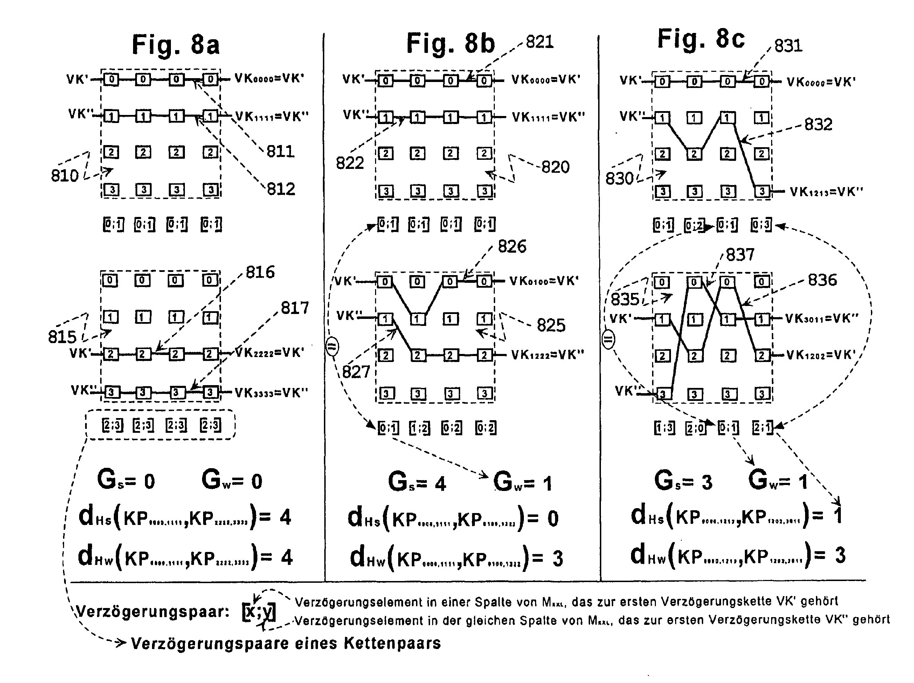

In **Figur 8** sind drei Beispiele für die Bestimmung dieser Abstände dargestellt. Im Beispiel **8a** sind die durch die zwei Kettenpaare erzeugten Bits völlig unkorreliert, während die erzeugten Bits in den beiden anderen Beispielen mehr (in **8b**) oder weniger (in **8c**) korreliert sind.

Die oben definierten Hamming-Abstände zwischen Kettenpaaren können als Kriterium zur Auswahl von Kettenpaaren verwendet werden, die bezüglich der oben geforderten **Eigenschaft 10.** (großer Hamming-Abstand zwischen Eigenschlüsseln) zur Erzeugung eines IC-Eigenschlüssels geeignet sind. Dies wird zur Bestimmung eines ***Auswahlcodes für Kettenpaare*** genutzt, der im weiteren Verlauf dieses Dokuments näher erläutert wird.

Um zwischen zwei beliebigen, durch das Verfahren ermittelten IC-Eigenschlüsseln in unterschiedlichen ICs einen möglichst hohen minimalen Hamming-Abstand zu erreichen, ist es vorteilhaft, wenn die einzelnen Bits der IC-Eigenschlüssel so unkorreliert wie möglich sind (wie im Idealfall bei zufälligen binären Codes).

Um das zu erreichen, müssen die Paare von Kettenpaaren, die die IC-Eigenschlüssel-Bits erzeugen, untereinander einen möglichst großen minimalen starken (oder wenigstens schwachen) Hamming-Abstand haben. Dies kann durch den Einsatz eines ***Kanalcodes*** gewährleistet werden, der selbst einen möglichst großen minimalen Hamming-Abstand ***zwischen seinen Codeworten*** aufweist. Die einzelnen Codeworte dieses Kanalcodes steuern nach einer entsprechenden Umcodierung (durch die Schaltung 520 in **Figur 5)** die Einstellung der L-1 zweifachen Kommutationsschaltungen (über die entsprechende Steuerbusse). Der **Kanalcode-Codierer** und der entsprechender **Umcodierer** bestimmen den *Auswahlcode für Kettenpaare.*

Wie man sich anhand der **Figur 8a**, **b**, **c** veranschaulichen kann, bestimmen die *Verzögerungspaare* (bezeichnet mit **[x;y]**) eines Kettenpaars die jeweiligen Hamming-Abstände zwischen zwei Kettenpaaren. In allen **Figuren 8a, 8b** und **8c** werden jeweils zwei Bits einer unter Verwendung einer 4x4 Matrix von Verzögerungselementen bestimmte Bits eines IC-Eigenschlüssels zueinander in Beziehung gesetzt. Beim Entwurf eines Auswahlcodes werden dementsprechend zuerst alle q zugelassenen Verzögerungspaare aus $K^2$ möglichen bestimmt. Für K = 4 zum Beispiel gibt es 16 mögliche Verzögerungspaare: [0;0], [0;1], [0;2], [0;3], [1;0], [1;1], [1;2], [1;3], [2;0], [2;1], [2;2], [2;3], [3;0], [3;1], [3;2] und [3;3]. Da die Kettenpaare mit gemeinsamen Verzögerungselementen nicht zugelassen sind, entfallen [0;0], [1:1], [2;2] und [3;3], so dass noch q = 12 zugelassene Verzögerungspaare übrig bleiben.

In **Figur 8a** ist eine erste Verschaltung (Kettenpaar) 810 einer 4x4-Matrix von Verzögerungselementen dargestellt, in der eine erste Kette 811 und eine zweite Kette 812 gebildet ist und eine zweite Verschaltung (Kettenpaar) 815, in der eine erste Kette 816 und eine zweite Kette 817 gebildet ist, wobei die Bildung **eines** Kettenpaares durch Anlegen **eines** Codewortes der entsprechenden *Auswahlcode für Kettenpaare* (Kanalcode mit entsprechenden Umcodierung) an eine Schaltungsanordnung, die analog der aus **Figur 5** aufgebaut ist, erfolgt. Der konkrete Aufbau dieser Schaltungsanordnung wird weiter unten beschrieben.

Unter jeder Spalte der Verschaltungen 810 bzw. 815 sind die in dieser Spalte miteinander verglichenen Verzögerungspaare [x;y] angegeben, die sich aus den dieser Spalte zugehörigen den Kettenpaaren (811, 812) und (816, 817) angehörigen Verzögerungselementen ergeben.

Die zwei Kettenpaare (811, 812) und (816, 817) enthalten in keiner Spalte der 4x4-Matrix ein gemeinsames Verzögerungspaar eines Kettenpaares, also ist $G_w = 0$ und der schwache Haming-Abstand $d_{Hw} = 4$. Darüber hinaus verwenden die Kettenpaare (811, 812) und (816, 817) in jeder Spalte verschiedene Verzögerungselemente, also ist auch $G_s = 0$ und somit auch die starke Haming-Abstand $d_{Hs} = 4$.

In **Figur 8b** ist eine erste Verschaltung (Kettenpaar) 820 einer 4x4-Matrix von Verzögerungselementen dargestellt, in der eine erste Kette 821 und eine zweite Kette 822 gebildet ist und eine zweite Verschaltung (Kettenpaar) 825, in der eine erste Kette 826 und eine zweite Kette 827 gebildet ist, wobei die Bildung **eines** Kettenpaares durch Anlegen **eines** Codewortes der entsprechenden *Auswahlcodes für Kettenpaare* (Kanalcode mit entsprechenden Umcodierung) an eine Schaltungsanordnung, die analog der aus **Figur 5** aufgebaut ist, erfolgt. Der konkrete Aufbau dieser Schaltungsanordnung wird weiter unten beschrieben.

Unter jeder Spalte der Verschaltungen 820 bzw. 825 sind die in dieser Spalte miteinander verglichenen Verzögerungspaare [x;y] angegeben, die sich aus den dieser Spalte zugehörigen den Kettenpaaren (821, 822) und (826, 827) angehörigen Verzögerungselementen ergeben.

Die zwei Kettenpaare (821, 822) und (826, 827) enthalten in der ersten Spalte der 4x4-Matrix ein gemeinsames Verzögerungspaar eines Kettenpaares, denn sowohl in der Verschaltung 820 als auch in der Verschaltung 825 geht in der ersten Spalte ein Vergleich der Verzögerungselemente 0 und 1 in das erhaltene Ergebnis ein, wie in **Figur 8b** durch den gestrichelten Pfeil veranschaulicht wird. Also ist $G_w = 1$ und der schwache Haming-Abstand $d_{Hw} = 3$.

Darüber hinaus verwenden die Kettenpaare (821, 822) und (826, 827) in jeder Spalte mindestens ein gemeinsames Verzögerungselement. In den Spalten 1, 3 und 4 geht jeweils das Verzögerungselement 0 in den Vergleich der Kettenpaare ein, da es in der ersten Kette 821 der ersten Verschaltung 820 und in der ersten Kette 826 der zweiten Verschaltung 825 in den Spalten 1, 3 und 4 verwendet wird. In der Spalte 2 geht jeweils das Verzögerungselement 1 in den Vergleich der Kettenpaare ein, da es in der zweiten Kette 822 der ersten Verschaltung 820 und in der ersten Kette 826 der zweiten Verschaltung 825 auftaucht. Also ist $G_s = 4$ und somit $d_{Hs} = 0$.

In **Figur 8c** ist eine erste Verschaltung (Kettenpaar) 830 einer 4x4-Matrix von Verzögerungselementen dargestellt, in der eine erste Kette 831 und eine zweite Kette 832 gebildet ist und eine zweite Verschaltung (Kettenpaar) 835, in der eine erste Kette 836 und eine zweite Kette 837 gebildet ist, wobei die Bildung **eines** Kettenpaares durch Anlegen **eines** Codewortes der entsprechenden *Auswahlcodes für Kettenpaare* (Kanalcode mit entsprechenden Umcodierung) an eine Schaltungsanordnung, die analog der aus **Figur 5** aufgebaut ist, erfolgt. Der konkrete Aufbau dieser Schaltungsanordnung wird weiter unten beschrieben.

Unter jeder Spalte der Verschaltungen 830 bzw. 835 sind die in dieser Spalte miteinander verglichenen Verzögerungspaare [x;y] angegeben, die sich aus den dieser Spalte zugehörigen den Kettenpaaren (831, 832) und (836, 837) angehörigen Verzögerungselementen ergeben.

Die zwei Kettenpaare (831, 832) und (836, 837) enthalten in der dritten Spalte der 4x4-Matrix ein gemeinsames Verzögerungspaar eines Kettenpaares, denn sowohl in der Verschaltung 830 als auch in der Verschaltung 835 geht in der dritten Spalte ein Vergleich der Verzögerungselemente 0 und 1 in das erhaltene Ergebnis ein, wie in **Figur 8c** durch den linken gestrichelten Pfeil veranschaulicht wird. Also ist $G_w = 1$ und der schwache Haming-Abstand $d_{Hw} = 3$.

Darüber hinaus verwenden die Kettenpaare (831, 832) und (836, 837) in drei Spalten mindestens ein gemeinsames Verzögerungselement. In den Spalte 1, ist dies das Verzögerungselement 1, in der Spalte 2 das Verzögerungselement 0 und in der Spalte 3 die Verzögerungselemente 0 und 1. In der vierten Spalte werden hingegen nur unterschiedliche Verzögerungselemente verwendet, worauf der rechte gestrichelte Pfeil in **Figur 6c** hinweist. Also ist $G_s = 3$ und somit $d_{Hs} = 1$.

Da die Codeworte des gewählten Kanalcodes **die *Kettenpaaren über ihre einzelnen Verzögerungspaare definieren,*** die Ansteuerung der Schaltung aber durch die entsprechende Einstellung der L-1 zweifachen Kommutationsschaltungen erfolgt, muss eine Umcodierung der Codeworten des Kanalcodes zu einer Einstellung der zweifachen Kommutationsschaltungen stattfinden. Dafür wird zwischen dem Codierer 510 für den Kanalcode und der verschaltbaren Verzögerungsmatrix eine Schaltung zur Umcodierung (Umcodierer) 520 eingesetzt, wie in **Figur 5** dargestellt. Diese Schaltung übernimmt auch die Steuerung der zweifachen Demultiplexer und Multiplexer. Ein ausgewählter Kanalcode $(L,N,d_{Hm})_q$ und die entsprechende Schaltung zur Umcodierung bestimmen einen Auswahlcode für Kettenpaare. In der Bezeichnung $(L,N,d_{Hm})_q$ bedeutet L die Länge des Codeworts, N die Anzahl von Codeworten, $d_{Hm}$ den minimalen Hamming-Abstand zwischen zwei Codeworten im Kanalcode und q die Anzahl der möglichen Codesymbole.

Für Verzögerungsmatrizen mit K > 2, haben sich in einigen Fällen die ***Reed-Solomon-Codes*** als Kanalcodes mit einfachen Codierverfahren und maximal möglichem minimalen Hamming-Abstand $d_{Hm}$ bewährt (sie erreichen die obere Singleton-Schranke). Diese Kanalcodes existieren nur für bestimmte Anzahlen $q = 2^n \leq K^2$ (n = 2,3,...) von Codesymbolen und $q^k = N$ Codeworten (0< k < n) der Länge $L = 2^n -1$, mit $d_{Hm} = L - N$. Damit ist für manche Formate der Verzögerungsmatrix und bestimmte Werte der Länge N des IC-Eigenschlüssels der direkte Einsatz von Reed-Solomon-Codes nicht möglich, außer sie werden entsprechend modifiziert (verkürzt oder punktiert), oder es wird nur eine Untermenge von Codeworten des Reed-Solomon-Codes genutzt. Auch die Auswahl der möglichen Codesymbolen kann man in bestimmten Grenzen variieren und damit an den gewählten Kanalcode anpassen, indem man von insgesamt $K^2$ möglichen Verzögerungspaaren (die einzelnen Codesymbolen zugeordnet sind) nur q bestimmte zulässt. Auf diese Weise ist es möglich, den starken Hamming-Abstand zwischen den ausgewählten Kettenpaaren zu erhöhen.

Für ein beliebiges Format der Verzögerungsmatrix $M_{KXL}$ und eine beliebig vorgegebene Anzahl N von Bits des IC-Eigenschlüssels, bietet sich als Alternative ein maßgeschneiderter ***nichtlinearer Kanalcode*** $(L,N,d_{Hm})_q$ mit größtmöglichem minimalen Hamming-Abstand $d_{Hm}$ an, der durch ein computergesteuertes Such- und Optimierungsverfahren gewonnen wird. Da die Coderate $R = (log_2 N)/L$ dieser Kanalcodes sehr klein ist (für realistische Parameterwerte in den Bereichen $64 \leq N \leq 256$ und $32 \leq L \leq 256$), liegen die meisten Such- und Optimierungsalgorithmen in realisierbaren Komplexitätsgrenzen.

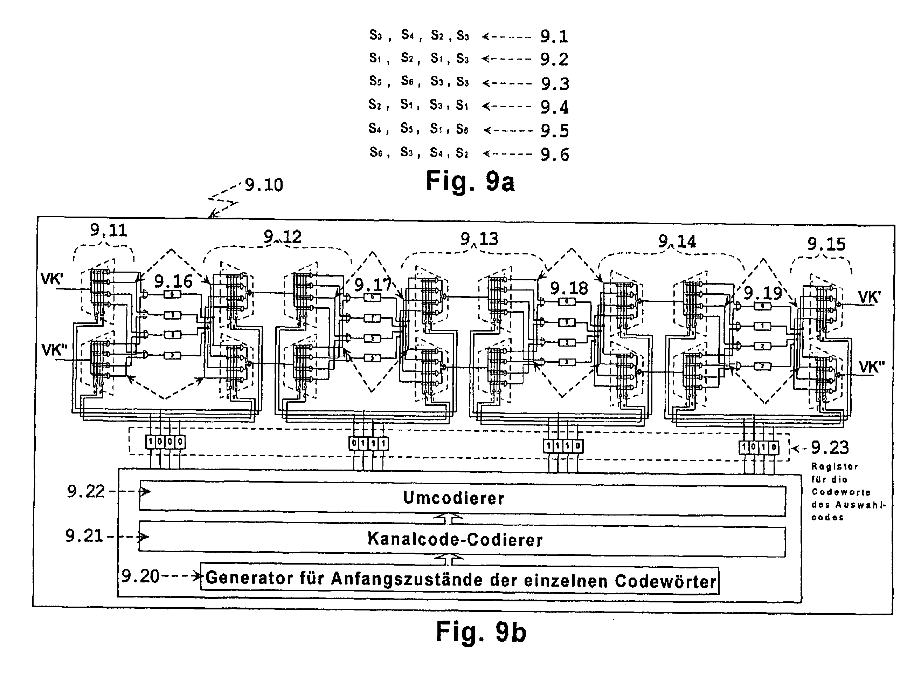

In **Figur 9a** ist ein einfaches Beispiel für einen nichtlinearen Kanalcode (L=4, N=6, $d_{Hm}=3)_{q=6}$ dargestellt. Die N=6 Codeworte 9.1, 9.2, 9.3, 9.4, 9.5 und 9.6 der Länge L=4 sind aus q=6 möglichen Codesymbolen $\{s_1, s_2, s_3, s_4, s_5, s_6\}$ zusammengesetzt. Durch den paarweisen Vergleich aller Codeworte kann man feststellen, dass der minimale Hamming-Abstand $d_{Hm}=3$ in diesem Kanalcode beträgt.

Mit diesem Kanalcode sollen beispielhaft, neben vier anderen Kettenpaaren, auch die zwei Kettenpaare in der **Figur 8c** konfiguriert werden. Das erste Kettenpaar 830 besteht aus L=4 Verzögerungspaaren [0; 1], [0;2], [0;1] und [0; 3]. Drei davon [0;1], [0;2] und [0;3] unterscheiden sich voneinander. In dem zweiten Kettenpaar 835, bestehend aus Verzögerungspaaren [1;3], [2;0], [0;1] und [2;1], gibt es zusätzlich noch drei unterschiedliche Verzögerungspaare [1:3], [2;0] und [2:1].

Da die einzelnen Codesymbole des Kanalcodes verschiedenen Verzögerungspaaren zugeordnet werden müssen, ist eine mögliche Zuordnung:

$s_1$ =[0;1], $s_2$ = [0; 2], $s_3$ =[0;3], $s_4$ =[1;3], $s_5$ =[2;0], $s_6$ =[2:1]. Dementsprechend wird das Kettenpaar 830 mit dem Codewort 9.2 und das Kettenpaar 835 mit dem Codewort 9.5 dargestellt. Die übrigen zehn Verzögerungspaare [0; 0], [1;0] [1;1], [1;2] [2;2], [2;3] [3;0], [3;1] [3;2] und [3;3] werden in diesem Beispiel nicht benutzt.

Der in **Figur 9a** gewählter Kanalcode, mit obiger gewählten Codesymbol-zu-Verzögerungspaar Zuordnung, muss dann in Steuersignale für die richtige Einstellungen der entsprechenden zweifachen Kommutationsschaltungen umcodiert werden.

Da eine Verzögerungskette immer ununterbrochen ist, müssen die Demultiplexer 624 und 625 die links von Verzögerungselementen in einer Spalte der Verzögerungsmatrix und die Multiplexer 622 und 623 die rechts von Verzögerungselementen der gleichen Spalte angeschlossen sind, mit gleichem Steuersignal angesteuert werden, wie in **Figur 9b** dargestellt. Sonst hätte die Verzögerungskette Unterbrechungen und wäre damit funktionsunfähig.

Diese gemeinsame Steuersignale kann man immer durch eine passende ***binäre Darstellung*** (Umcodierung) von mehrwertigen Codesymbolen $s_i$; i = 1,2,...,q, des eingesetzten Kanalcodes als Codeworte des Auswahlcodes erhalten.

Für das Codewort 9.5 des Kanalcodes in **Figur 9a,** dass das Kettenpaar 835 in der **Figur 8c** konfiguriert, sind die passenden binären Darstellungen der Codesymbole in **Figur 9b** als ein Beispiel für die Umcodierung eines Kanalcodes aufgeführt. Die gestrichelten Pfeile zeigen die Verbindungen von zwei Verzögerungsketten 836 und 837 des Kettenpaares 835.

**Figur 9b** zeigt die diesem Beispiel entsprechende Schaltung 9.10 dargestellt. Man erkennt einen zweifachen Demultiplexer 9.11, drei zweifache Kommutationsschaltungen 9.12, 9.13, 9.14, deren Aufbau im Detail in der **Figur 7b** und der zugehörigen Beschreibung dargestellt ist, einen zweifachen Multiplexer 9.15, die zwischen zweifachem Demultiplexer 9.11 und zweifacher Kommutationsschaltung 9.12, zwischen den zweifachen Kommutationsschaltungen 9.12 und 9.13, zwischen den zweifachen Kommutationsschaltungen 9.13 und 9.14 bzw. zwischen der zweifachen Kommutationsschaltung 9.14 und dem zweifachen Multiplexer 9.15 angeordneten Spalten 9.16, 9.17, 9.18 und 9.19 der 4x4 Matrix von Verzögerungselementen, einen Generator für Anfangszustände der Codewörter 9.20, einen Kanalcode-Codierer 9.21, einen Umcodierer 9.22 und ein Register 9.23 für die Codeworte des Auswahlcodes. Aus dem durch den Generator 9.20 vorgegebenen Anfangszustand wird in dem Kanalcode-Codierer 9.21 ein Codewort des Kanalcodes generiert, das durch den Umcodierer 9.22 in das entsprechenden Codewort des Auswahlcodes umcodiert wird, das im Register 9.23 bereitgestellt wird und über die Steuerleitungen bzw. den Steuerbus vorgibt, wie die Elemente der Matrix von Verzögerungselementen zu den beiden Ketten verschaltet werden.

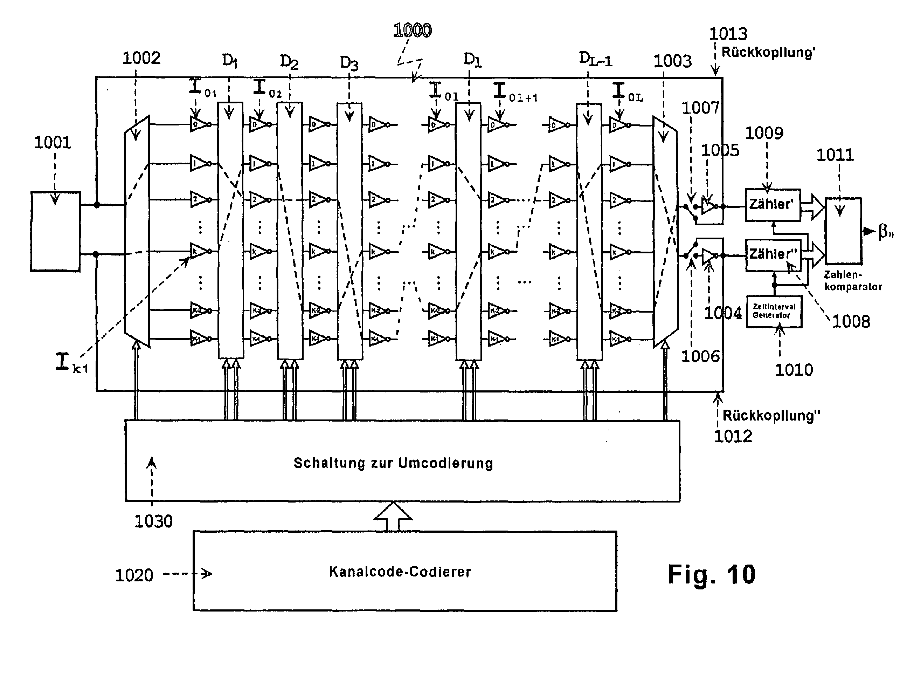

Eine besonders bevorzugte Ausführungsform der Erfindung ist in **Figur 10** dargestellt.

**Figur 10** zeigt einen Rechteckimpulsgenerator 1001, einen zweifachen Multiplexer 1002 mit zwei Signaleingängen und K Signalausgängen sowie einem durch einen Doppelpfeil gekennzeichneten Steuereingang (der an den Steuerbuss des zweifachen Multiplexers angelegt wird), KxL Inverter $I_{kl}$ (k=0,...,K-1; l=1,...,L) als Verzögerungselemente, wobei die Inverter $I_{kl}$ jeweils einem Signaleingang und einem Signalausgang aufweisen, L-1 zweifache Kommutations-schaltungen $D_1$, $D_2$,.., $D_{L-1}$, mit jeweils K Signaleingängen und K Signalausgängen sowie zwei durch Doppelpfeile gekennzeichneten Steuereingängen, einen zweifachen Demultiplexer 1003 mit K Signaleingängen und einem Signalausgang sowie einem durch einen Doppelpfeil gekennzeichneten Steuereingang, zwei Inverter 1004, 1005, zwei Schalter 1006, 1007, zwei Zähler 1008, 1009 mit jeweils einem Signaleingang, einem Steuereingang und einem Signalausgang, einen Zeitintervall-Generator 1010 mit einem Signalausgang und einen Zahlenkomparator 1011 mit zwei Signaleingängen und einem Signalausgang und zwei rückgekoppelten Signalleitungen 1012, 1013.

Durch an den Steuereingängen anliegenden Auswahlcode wird dabei jeweils vorgegeben, welche Verbindungen zwischen Signaleingängen und Signalausgängen des zweifachen Multiplexers 1002, der zweifachen Kommutationsschaltungen $D_1$, $D_2$, ... , $D_{L-1}$ bzw. des zweifachen Demultiplexers 1003 hergestellt werden bzw. hergestellt sind. Diese Vebindungen sind in **Figur 10** exemplarisch mit gestrichelten Linien dargestellt.

Es stehen in Signalkommunikation miteinander:

- der Signalausgang des Rechteckimpulsgenerators 1001 mit beiden Eingängen des zweifachen Multiplexers 1002
- jeder der Eingänge des zweifachen Multiplexers 1002 mit genau einem Ausgang des zweifachen Multiplexers, 1002, wobei jeder Eingang mit einem anderen Ausgang verbunden ist und wobei in Abhängigkeit von der Einstellung des Multiplexers 1002 jeder Eingang mit jedem Ausgang verbindbar ist,
- der k-te Ausgang des zweifachen Multiplexers 1002 mit dem Eingang des Verzögerungselements $I_{kl}$,
- der Ausgang des Verzögerungselementes $I_{kl}$ für 1<L mit dem k-ten Eingang der zweifachen Kommutationsschaltung $D_1$ und für 1=L mit dem k-ten Eingang des zweifachen Demultiplexers 1003,
- jeder der Eingänge der zweifachen Kommutationsschaltung $D_1$ mit genau einem Ausgang derselben zweifachen Kommutationsschaltung $D_1$, wobei jeder Eingang mit einem anderen Ausgang verbunden ist und wobei in Abhängigkeit von der Einstellung der zweifachen Kommutationsschaltung $K_1$ jeder Eingang mit jedem Ausgang verbindbar ist,
- der erste bzw. zweite Ausgang des zweifachen Demultiplexers 1003 nach Invertierung durch den Inverter 1004 bzw. 1005 falls L gerade ist oder ohne Invertierung bei geschlossenen Schaltern 1006 bzw. 1007 über diese Schalter mit den Eingängen der Zähler 1008 bzw. 1009 und rückkoppelnd über die Signalleitungen 1012, 1013, mit dem ersten bzw. zweiten Eingang des zweifachen Multiplexers 1002,
- der Signalausgang des Zeitintervallgenerators 1010 mit den Steuereingängen der Zähler 1008, 1009 und
- die Signalausgänge der Zähler 1008, 1009 mit den Signaleingängen des Zahlenkomparators 1011.

Weiter zeigt **Figur 10** einen Kanalcode-Codierer 1020 für einen Kanalcode, dessen Ausgangssignal als Eingangssignal für eine Schaltung zur Umcodierung (Umcodierer) 1030 dient. Die Schaltung zur Umcodierung erzeugt ein Steuersignal, das an die Steuereingänge des zweifachen Multiplexers 1002, der zweifachen Kommutationsschaltungen $D_1$, $D_2$,... , $D_{L-1}$. bzw. des zweifachen Demultiplexers 1003 angelegt wird. Details zu dem Kanalcode-Codierer 1020 für einen Kanalcode und dem Kanalcode selbst, sowie zur Schaltung zur Umcodierung 1030 sind weiter unten beschrieben.

Um ein bestimmtes Bit des IC-Eigenschlüssels zu erzeugen, wird zunächst ein diesem Bit entsprechendes Codewort des Kanalcodes vom Kanalcode-Codierer 1020 für einen gewählten Kanalcode bereitgestellt und mittels der Schaltung zur Umcodierung 1030 in ein entsprechendes Steuersignal umgewandelt. Dieses Steuersignal wird an die Steuereingänge des zweifachen Multiplexers 1002, der zweifachen Kommutationsschaltungen $D_1$, $D_2$,..,$D_{L-1}$. bzw. des zweifachen Demultiplexers 1003 angelegt, um die beiden miteinander Ketten von Verzögerungselementen zu bilden, aus deren Vergleich sich das gewünschte Bit des IC-Eigencodes ergibt. Anschließend wird der Zeitintervallgenerator 1010 gestartet und mit dem Rechteckimpulsgenerator 1001 zwei gleichzeitige Rechtecksignale erzeugt, die zeitgleich an beide Signaleingänge des zweifachen Multiplexers 1002 angelegt werden und dann die beiden eingestellten Ketten von Verzögerungselementen mehrfach (wegen rückgekoppelten Signalleitungen 1012, 1013) durchlaufen, wobei am Ende jedes Durchlaufes, der der Kette zugeordnete Zähler 1008 bzw. 1009 um eins erhöht wird. Aus der Verteilung der Verzögerungszeiten der einzelnen Verzögerungselemente ergibt sich innerhalb des vom Zeitintervallgenerator vorgegebenen Zeitintervalls ein wegen der je nach der gerade eingestellten Kette unterschiedliche Laufzeit des Rechtecksignals durch die entsprechende Kette von Verzögerungselementen unterschiedlicher Zählerstand. Ist das vorgegebene Zeitintervall verstrichen, gibt der Zeitintervallgenerator ein Steuersignal an die Zähler 1008, 1009 ab, das die Ausgabe des Zählerstands an den Zahlenkomparator 1011 und das anschließende Rücksetzen der Zähler 1008, 1009 bewirkt. Der Zahlenkomparator 1011 bestimmt dann aus der Differenz der Zählerstände das entsprechende Bit $\beta_{ij}$ des IC-Eigenschlüssels. Weitere Bits des IC-Eigenschlüssels werden durch andere Codeworte des Kanalcodes erhalten.

Gemäß dieser Ausführungsform werden also insbesondere die beiden Verzögerungsketten von L Verzögerungselementen an ihren jeweiligen Eingang rückgekoppelt, und Inverter als Verzögerungselemente eingesetzt.

Bei ungeradem L (oder auch bei geradem L, wenn Inverter 1004 und 1005 zusätzlich verwendet werden) entstehen zwei selbstoszillierende **Ringoszillatoren,** deren jeweilige Oszillations-Frequenz $\mathbf{f_{RO}=1/2\tau_{VK}}$ direkt von der Gesamtverzögerung $\tau_{VK}$ der Verzögerungskette abhängt. In diesem Fall, statt einen Rechteckimpulsgenerator 1001 (der wegen Selbstoszillationen nicht mehr gebraucht wird), kann man einen Start/Stopp Schalter einführen, der die rückgekoppelten Signalleitungen 1012, 1013 schaltet (ein/aus).

In dieser Implementierung der verschaltbaren Verzögerungsmatrix nehmen zwei binäre Zähler 1009, 1010 den Platz des Verzögerungskomparators ein. Der Eingang des ersten Zählers 1009 wird mit dem ersten Ringoszillator verbunden, der Eingang des zweiten Zählers 1010 mit dem zweiten Ringoszillator. Während eines festgesetzten Zeitintervalls zählen diese beiden Zähler 1009, 1010 die einzelnen Impulse der Ringoszillatoren. Danach werden die beiden Zählerstände durch den Zahlenkomparator 1011 verglichen, an dessen Ausgang dann das erzeugte Zufallsbit $\beta_{ij}$ anliegt. Ist der Zählerstand des ersten Zählers höher, wird dem Zufallsbit der Wert 1 zugewiesen, andernfalls 0.

Durch das Zählen der Impulse der Ringoszillatoren über einen längeren Zeitraum werden die beiden Verzögerungsketten mehrmals durchlaufen, wodurch sich die Differenz der Gesamtverzögerungen der Verzögerungsketten immer weiter aufaddiert. So wird, wie vorher bei der Erweiterung eines einzelnen Verzögerungselementes zu einer Verzögerungskette, die Extraktionsfehlerwahrscheinlichkeit, verursacht durch Messstörungen, weiter beliebig verringert, je länger die Oszillationsimpulse gezählt werden. So ist diese Implementierung besonders zuverlässig.

Damit die rückgekoppelten Verzögerungsketten tatsächlich oszillieren, müssen 2 Voraussetzungen erfüllt sein:

Erstens muss die Anzahl der Inverter in einer Verzögerungskette ungerade sein, und zweitens müssen durch die Rückkopplungen zwei getrennte Ringoszillatoren gebildet werden. Auf keinen Fall darf ein einzelner Ringoszillator doppelter Länge entstehen. Dies würde passieren nur im Fall K = 2, wenn die Verzögerungsketten in einer ungeraden Anzahl von zweifachen Kommutationsschaltungen überkreuzt würden. Die Erfüllung der ersten Vorraussetzung erfordert keine weiteren Maßnahmen, wenn die Breite L der Verzögerungsmatrix $M_{LxK}$ ungerade ist. Ist L gerade, wird hinter den nachgeschalteten zweifachen Multiplexer, vor jede der beiden Rückkoppelungen, je ein zusätzlicher Inverter 1004, 1005 gesetzt, sodass die Gesamtanzahl von Invertern in einem Ringoszillator ungerade ist (siehe **Figur 10**).

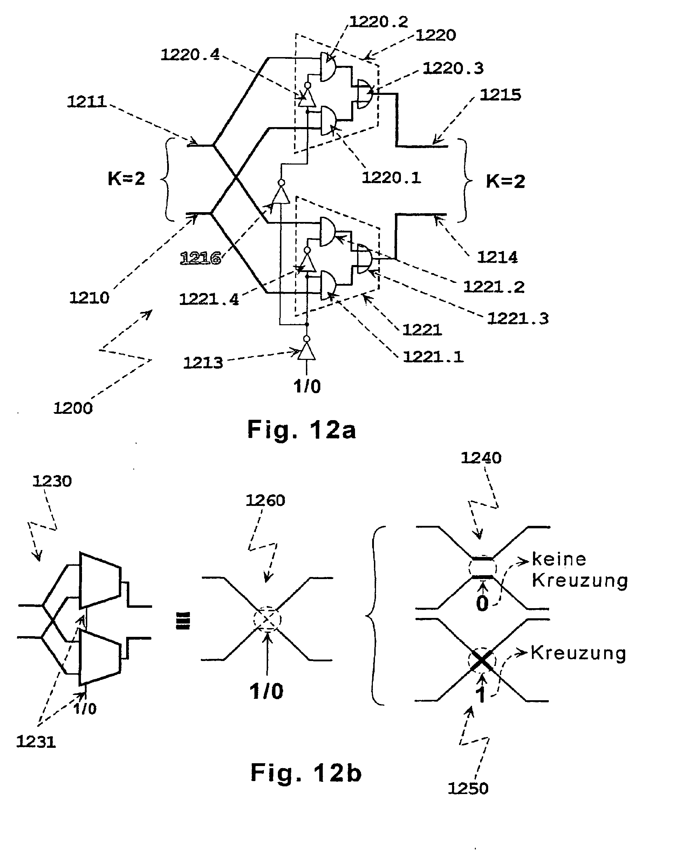

Zur Erfüllung der zweiten Vorraussetzung (für K = 2) muss erkannt werden, wann die Verzögerungsketten in einer ungeraden Anzahl $\chi$ von zweifachen Kommutationsschaltungen überkreuzt werden (für Überkreuzungen siehe **Figur 12b**), um in diesem Fall eine weitere Überkreuzung (durch eine Parity-Check-Schaltung) innerhalb des vorgeschalteten zweifachen Demultiplexers vorzunehmen. Ist $\chi$ bereits gerade, darf keine zusätzliche Überkreuzung erfolgen. Für K > 2 werden immer zwei getrennte Ringoszillatoren gebildet, sodass in diesem Fall die zweite Vorraussetzung immer erfüllt ist.

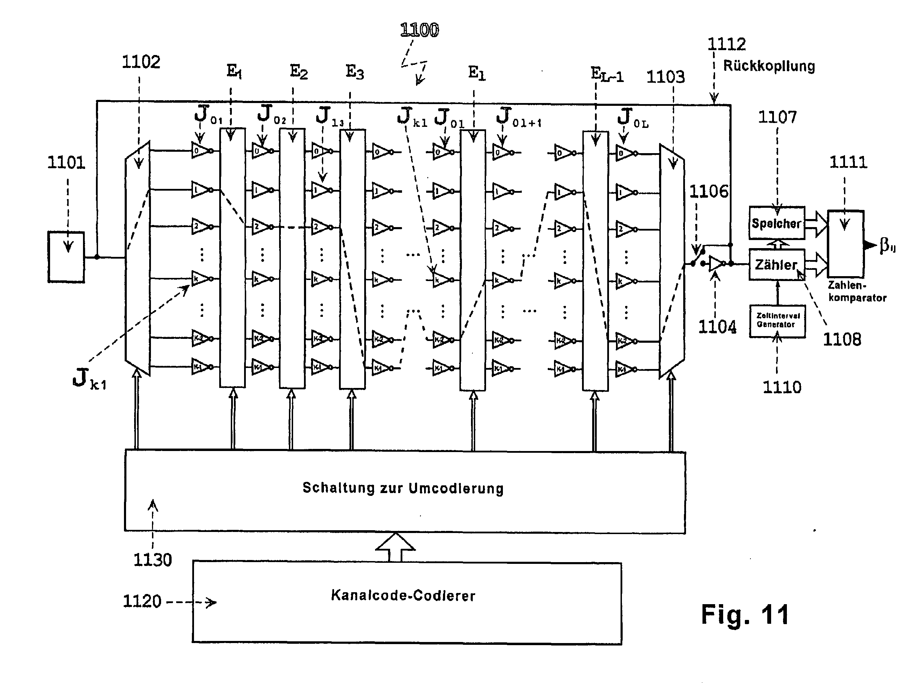

Eine weitere besonders vorteilhafte Ausführungsform der Erfindung ist in **Figur 11** dargestellt.

**Figur 11** zeigt einen Rechteckimpulsgenerator 1101 mit einem Signalausgang, einen Multiplexer 1102 mit einem Signaleingang und K Signalausgängen sowie einem durch einen Doppelpfeil gekennzeichneten Steuereingang, KxL Inverter $J_{k1}$ als Verzögerungselemente, wobei die Inverter $J_{k1}$ jeweils einem Signaleingang und einem Signalausgang aufweisen, L-1 einfache Kommutationsschaltungen $E_1$, $E_2$, ..., $E_{L-1}$, mit jeweils K Signaleingängen und K Signalausgängen sowie einem durch einen Pfeil gekennzeichneten Steuereingang, einen einfachen Demultiplexer 1103 mit K Signaleingängen und einem Signalausgang sowie einem durch einen Pfeil gekennzeichneten Steuereingang, einen Inverter 1104, einen Schalter 1106, einen Speicherbaustein 1107 mit einem Signaleingang und einem Signalausgang, einen Zähler 1108 mit einem Signaleingang, einem Steuereingang und zwei Signalausgängen, einen Zeitintervall-Generator 1110 mit einem Signalausgang und einen Zahlenkomparator 1111 mit zwei Signaleingängen und einem Signalausgang sowie eine rückgekoppelte Signalleitung 1112.

Durch an den Steuereingängen anliegende Auswahlcodes wird dabei jeweils vorgegeben, welche Verbindung zwischen Signaleingängen und Signalausgängen des einfachen Multiplexers 1102, der zweifachen Kommutationsschal-

tungen $E_1$, $E_2$, ... , $E_{L-1}$ bzw. des einfachen Demultiplexers 1103 hergestellt werden bzw. hergestellt sind. Diese Verbindung ist in **Figur 11** exemplarisch mit gestrichelten Linien dargestellt.

Es stehen in Signalkommunikation miteinander:

- der Eingang des einfachen Multiplexers 1102 mit genau einem Ausgang des einfachen Multiplexers, 1102, wobei der Eingang mit jedem Ausgang verbindbar ist,
- der k-te Ausgang des einfachen Multiplexers 1102 mit dem Eingang des Verzögerungselements $J_{k1}$,
- der Ausgang des Verzögerungselementes $J_{k1}$ für 1<L mit dem k-ten Eingang der einfachen Kommutationsschaltung $E_1$ und für l=L mit dem k-ten Eingang des einfachen Demultiplexers 1103,
- jeder der Eingänge der einfachen Kommutationsschaltung $E_1$ mit genau einem Ausgang derselben zweifachen Kommutationsschaltung $E_1$, wobei jeder Eingang mit einem anderen Ausgang verbunden ist und wobei in Abhängigkeit von der Einstellung der zweifachen Kommutationsschaltung $E_1$ jeder Eingang mit jedem Ausgang verbindbar ist,
- der Ausgang des einfachen Demultiplexers 1103 nach Invertierung durch den Inverter 1104 oder ohne Invertierung bei geschlossenem Schalter 1106 über den Schalter 1106 mit dem Eingang des Zählers 1108 falls L ungerade ist und, für gerades und ungerades L, rückkoppelnd über die Signalleitung 1112 mit dem Eingang des einfachen Multiplexers 1102,
- der Signalausgang des Zeitintervallgenerators 1110 mit dem Steuereingang des Zählers 1108
- die Signalausgänge des Zähler 1108 und des Speicherbausteins 1107 mit den Signaleingängen des Zahlenkomparators 1011.

Weiter zeigt **Figur 11** einen Kanalcode-Codierer 1120 für einen Kanalcode, dessen Ausgangssignal als Eingangssignal für eine Schaltung zur Umcodierung (Umcodierer) 1130 dient. Die Schaltung zur Umcodierung erzeugt ein Steuersignal, das an die Steuereingänge des einfachen Multiplexers 1102, der einfachen Kommutationsschaltungen $E_1$, $E_2$,..., $E_{L-1}$. bzw. des einfachen Demultiplexers 1003 angelegt wird. Details zu dem Kanalcode-Codierer 1120 für einen Kanalcode und dem Kanalcode selbst, sowie zur Schaltung zur Umcodierung 1130 sind weiter unten beschrieben.

Um ein bestimmtes Bit des IC-Eigenschlüssels zu erzeugen, wird zunächst ein diesem Bit entsprechendes Codewort des Kanalcodes vom Kanalcode-Codierer 1120 für einen Kanalcode bereitgestellt und mittels der Schaltung zur Umcodierung 1130 in ein entsprechendes Steuersignal umgewandelt. Dieses Steuersignal wird an die Steuereingänge des einfachen Multiplexers 1102, der einfachen Kommutationsschaltungen $E_1$, $E_2$,..., $E_{L-1}$ bzw. des einfachen Demultiplexers 1103 angelegt, um nacheinander die beiden miteinander zu verglichenen Ketten von Verzögerungselementen zu bilden, aus deren Vergleich sich das gewünschte Bit des IC-Eigenschlüssels ergibt. Anschließend wird der Zeitintervallgenerator 1110 gestartet und ein Rechtecksignal erzeugt, das an den Signaleingang des einfachen Multiplexers 1012 angelegt wird und dann die eingestellte Kette von Verzögerungselementen mehrfach (wegen rückgekoppelten Signalleitung 1112) durchläuft, wobei am Ende jedes Durchlaufs der der Kette zugeordnete Zähler 1108 um eins erhöht wird. Aus der Verteilung der Verzögerungszeiten der einzelnen Verzögerungselemente ergibt sich innerhalb des vom Zeitintervallgenerator 1110 vorgegebenen Zeitintervalls ein wegen der je nach der gerade eingestellten Kette unterschiedliche Laufzeit des erzeugten Signals durch die entsprechende Kette von Verzögerungselementen ein unterschiedlicher Zählerstand des Zählers 1108. Ist das vorgegebene Zeitintervall verstrichen, gibt der Zeitintervallgenerator 1110 ein erstes Steuersignal an den Zähler 1108 ab, das die Ausgabe des Zählerstands an den Speicherbaustein 1107 und das anschließende Rücksetzen des Zählers 1108 bewirkt. Anschließend wird durch die Schaltung zur Umcodierung 1130 das Steuersignal für die zweite, mit der ersten zu vergleichende Kette von Verzögerungselementen an die Steuereingänge des einfachen Multiplexers 1102, der einfachen Kommutationsschaltungen $E_1$,..., $E_{L-1}$ und des einfachen Demultiplexers 1103 angelegt, der Zeitintervallgenerator 1110 erneut gestartet (der einen, wie für die erste Kette, gleichen Zeitintervall erzeugt) und ein Signal an den Eingang des einfachen Multiplexers 1102 angelegt, das die zweite Verzögerungskette zyklisch durchläuft und bei jedem Durchlauf den Stand des Zählers 1108 um eins erhöht. Nach Verstreichen des vorgesehenen Zeitintervalls gibt der Zeitintervallgenerator 1110 ein zweites Steuersignal ab, das das Auslesen des Zählers 1108 und des Speicherbausteins 1107 durch den Zahlenkomparator 1111 bewirkt. Der Zahlenkomparator 1011 bestimmt dann aus der Differenz der Zählerstände das entsprechende Bit des IC-Eigenschlüssels.

Bei ungeradem L (oder auch bei geradem L, wenn der Inverter 1104 zusätzlich verwendet wird) entsteht ein selbstoszillierender **Ringoszillator**, mit eine Oszillations-Frequenz $f_{RO}=1/2\tau_{VK}$ die direkt von der Gesamtverzögerung $\tau_{VK}$ der Verzögerungskette abhängt. In diesem Fall, statt einen Rechteckimpulsgenerator 1101 (der wegen der Selbstoszillation nicht mehr gebraucht wird), kann man einen Start/Stopp Schalter einführen, der die rückgekoppelte Signalleitung 1112 schaltet (ein/aus).

Weitere Bits des IC-Eigenschlüssels werden durch andere Codeworte erhalten.

Gemäß dieser Ausführungsform liegt also nur ein Ringoszillator vor und die Bestimmung der Laufzeiten von zu vergleichenden Ketten von Verzögerungselementen erfolgt sequentiell statt parallel. Im Rahmen von Versuchen hat sich ergeben, dass es bei gleichzeitiger Oszillation beider Ringoszillatoren, durch das Auftreten von Querkopplungseffekten, zu einer Synchronisation der Frequenzen kommen kann, die sich einander angleichen. Um das zu vermeiden, ist es bei der eben unter Bezugnahme auf **Figur 11** beschriebenen Ausführungsform mit Ringoszillatoren und Impulszählern auch möglich, das Zählen der Impulse der beiden Ringoszillatoren nacheinander statt gleichzeitig vorzunehmen. Dabei ist der Ringoszillator, dessen Impulse nicht gezählt werden, ausgeschaltet, sodass die Querkopplungseffekten nicht auftreten können.

Ein zusätzlicher Vorteil dieser Variante ist die Möglichkeit einer weitgehenden Vereinfachung der Schaltung, da zur Erzeugung eines einzelnen Ringoszillators *einfache* Kommutationsschaltungen an Stelle der zweifachen ausreichend sind. Die einfachen Kommutationsschaltungen sind wie in **Figur 7b** aufgebaut, aber nur mit einer Multiplexer-Demultiplexer Verschaltung 742-744 (die Multiplexer-Demultiplexer Verschaltung 743-745 und dazugehörige Verbindungen entfallen). Allerdings wird dann ein Speicher 1107 notwendig, der mit dem ersten Eingang des Zahlenkomparators 1111 verbunden ist. In diesem wird der Zählerstand nach dem ersten Zählen gespeichert, bis nach dem zweiten Zählen beide Zählerstände miteinander verglichen werden können, wie in **Figur 11** dargestellt.

Eine weitere Möglichkeit, die Synchronisation der Ringoszillatoren bei gleichzeitiger Oszillation zu vermeiden, besteht darin, eine der beiden rückgekoppelten Verzögerungsketten durch zusätzliche Verzögerungselemente zu verlängern, beispielsweise durch eine geringe gerade Anzahl (z.B. zwei) an Invertern vor nur einer der beiden Rückkopplungen. Dies führt zu einer Desynchronisation der Ringoszillatoren. Das so verursachte Ungleichgewicht der Zählerwerte muss bei der Auswertung durch den Zahlenkomparator kompensiert werden.

In einer schaltungstechnisch besonders einfachen Ausgestaltung der Erfindung ist K = 2. In diesem Fall ist es ausreichend, an Stelle der zweifachen Kommutationsschaltungen nur zwei (2 zu 1)-Multiplexer zu verwenden. Das ist möglich, da die Demultiplexer der zweifachen Kommutationsschaltungen die Signale nicht mehr, wie im allgemeinen Fall, auf zwei von K>2 möglichen Ausgängen umleiten müssen, sondern immer auf dieselben zwei Ausgänge, die denen der beiden (2 zu 1)-Multiplexer entsprechen. Da dafür nur noch die Information codiert werden muss, ob sich die beiden Leitungen kreuzen oder nicht (1 oder 0), kann die Ansteuerung dieser *binären Kommutationsschaltung* binär erfolgen, wie in **Figur 12** ersichtlich.

**Figur 12a** stellt den Aufbau einer binären Kommutationsschaltung 1200 im Detail dar. Sie zeigt zwei Signalleitungen 1210, 1211 für Eingangssignal, zwei Demultiplexer 1220, 1221 mit jeweils zwei Signaleingängen, einem Steuereingang und einem Signalausgang, eine Signalleitung 1212 für Steuersignale, die vom Ausgang eines Inverters 1213 zum Steuereingang der Demultiplexer 1220 und 1221 geführt wird, und zwei Signalleitungen 1214, 1215 für Ausgangssignale.

Der Demultiplexer 1220 weist zwei UND-Schaltungen 1220.1, 1220.2 mit zwei Signaleingängen und einem Signalausgang und eine ODER-Schaltung 1220.3 mit zwei Signaleingängen und einem Signalausgang sowie einen Inverter 1220.4 auf. Völlig analog dazu weist der Demultiplexer 1221 zwei UND-Schaltungen 1221.1, 1221.2 mit zwei Signaleingängen und einem Signalausgang und eine ODER-Schaltung 1221.3 mit zwei Signaleingängen und einem Signalausgang sowie einen Inverter 1221.4 auf.

Dabei stehen in Signalkommunikation miteinander:

- die Signalleitung 1210 und der erste Signaleingang der UND-Schaltung 1220.1 des Demultiplexers 1220
- die Signalleitung 1211 und ein Signaleingang der UND-Schaltung 1220.2 des Demultiplexers 1220
- die Signalleitung 1212 und der zweite Signaleingang der UND-Schaltung 1220.1 des Demultiplexers 1220
- die Signalleitung 1212 und der zweite Signaleingang der UND-Schaltung 1220.2 des Demultiplexers 1220 über den Inverter 1220.4
- die Signalausgänge der UND-Schaltungen 1220.1 und 1220.2 mit den beiden Signaleingängen der ODER-Schaltung 1220.3
- der Signalausgang der ODER-Schaltung 1220.3 mit der Signalleitung 1215,
- die Signalleitung 1210 und der erste Signaleingang der UND-Schaltung 1221.1 des Demultiplexers 1221
- die Signalleitung 1211 und ein Signaleingang der UND-Schaltung 1221.2 des Demultiplexers 1221
- die Signalleitung 1212 und der zweite Signaleingang der UND-Schaltung 1221.1 des Demultiplexers 1221
- die Signalleitung 1212 und der zweite Signaleingang der UND-Schaltung 1221.2 des Demultiplexers 1221 über den Inverter 1221.4
- die Signalausgänge der UND-Schaltungen 1221.1 und 1221.2 mit den beiden Signaleingängen der ODER-Schaltung 1221.3 und
- der Signalausgang der ODER-Schaltung 1221.3 mit der Signalleitung 1214.

Durch diese Verschaltung ist gewährleistet, dass bei einer logischen 1 als Steuersignal das an der Signalleitung 1211 anliegende Signal nach Durchlaufen der binären Kommutationsschaltung 1200 an Signalleitung 1214 weitergeleitet wird und das an der Signalleitung 1210 anliegende Signal nach Durchlaufen der binären Kommutationsschaltung 1200 an Signalleitung 1215 weitergeleitet wird, so dass eine überkreuzende Signalverbindung hergestellt wird. Bei einer logischen 0 als Steuersignal wird hingegen das an der Signalleitung 1211 anliegende Signal nach Durchlaufen der binären Kommutationsschaltung 1200 an Signalleitung 1215 weitergeleitet und das an der Signalleitung 1210 anliegende Signal nach Durchlaufen der binären Kommutationsschaltung 1200 an Signalleitung 1214 weitergeleitet, so dass eine nicht überkreuzende Signalverbindung hergestellt wird.

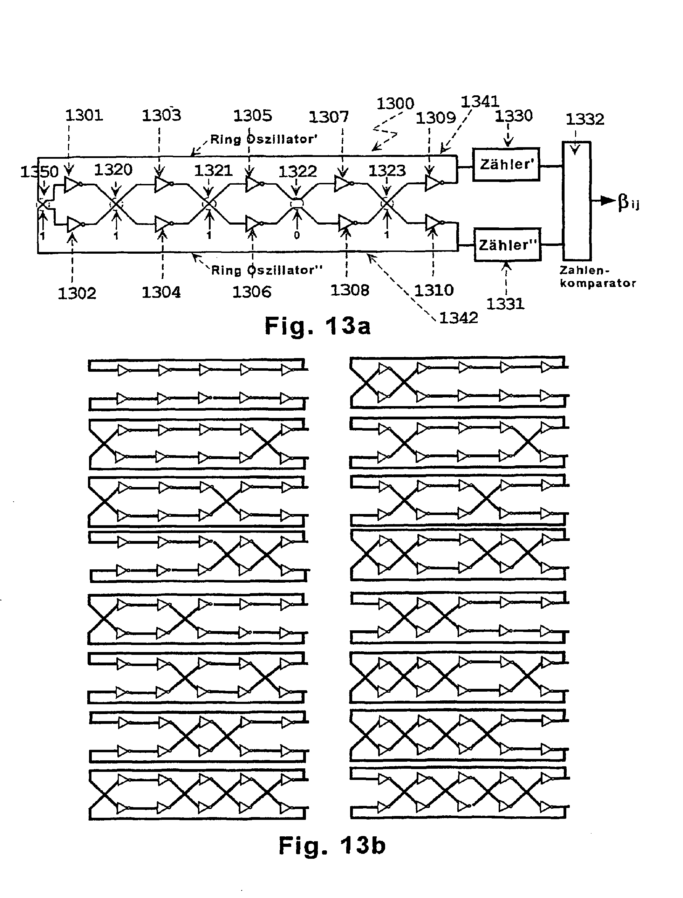

In **Figur 12b** wird eine Definition für die weiter unten in **Figur 13** verwendete Kurzschreibweise für die Schaltung gemäß **Figur 12a** bereitgestellt. **Figur 12b** zeigt in ihrer linken Spalte eine schematische Darstellung einer binären Kommutationsschaltung 1230, die sich aber von der in **Figur 12a** gezeigter binärer Kommutationsschaltung lediglich im Hinblick auf den gezeigten Detailgrad unterscheidet. Wie im vorangehenden Absatz detailliert beschrieben, entspricht diese Schaltung in Abhängigkeit von einem angelegten Steuersignal 1231 der nicht kreuzenden Signalverbindung 1240 bzw. der kreuzenden Signalverbindung 1250. Dies wird durch die der mittleren Spalte der **Figur 12b** zu entnehmende Schreibweise 1260 dargestellt.

In **Figur 13a** ist eine konkrete Ausgestaltung der Erfindung 1300 mit einer verschaltbaren Verzögerungsmatrix für K=2 und L=5 dargestellt, die dem in **Figur 10** dargestellten allgemeinen Prinzip folgt. Nicht dargestellt sind Rechteckgenerator, Codegenerator und Umcodierer. Man erkennt Inverter 1301,..., 1310, mit je einem Signaleingang und je einem Signalausgang, die als Verzögerungselemente dienen, vier binäre Kommutationsschaltungen 1320, 1321, 1322, 1323, zwei Zähler 1330, 1331 mit je einem Signaleingang und einem Signalausgang, einen Zahlenkomparator 1332 mit zwei Signaleingängen, zwei Rückkopplungssignalleitungen 1341, 1342 und eine zusätzliche binäre Kommutationsschaltung 1350, die von einer Parity-Check-Schaltung gesteuert wird, um zu verhindern, dass das aus einer Kette von Verzögerungselementen rückgekoppelte Signal in die andere Kette von Verzögerungselementen eingespeist wird.

Dabei bestehen die folgenden Signalverbindungen:

- die Signalausgänge der Inverter 1301, 1302 über die binäre Kommutationsschaltung 1320 mit den Signaleingängen der Inverter 1303, 1304,
- die Signalausgänge der Inverter 1303, 1304 über die binäre Kommutationsschaltung 1321 mit den Signaleingängen der Inverter 1305, 1306,
- die Signalausgänge der Inverter 1305, 1306 über die binäre Kommutationsschaltung 1322 mit den Signaleingängen der Invertern1307, 1308,
- die Signalausgänge der Inverter 1307, 1308 über die binäre Kommutationsschaltung 1323 mit den Signaleingängen der Inverter 1309, 1310,
- die Signalausgänge der Inverter 1309 bzw.1310 mit den Signaleingängen der Zähler 1330 bzw. 1331,
- die Signalausgänge der Inverter 1309 bzw. 1310 über die Rückkopplungssignalleitungen 1341, 1342 und die binäre Kommutationsschaltung 1350 mit den Signaleingängen der Inverter 1301, 1302
- die Signalausgänge der Zähler 1330 bzw. 1331 mit den Signaleingängen des Zahlenkomparators 1332

In **Figur 13a** ist nur die Schaltung für einen bestimmten angelegten Code dargestellt. Insbesondere sind nicht dargestellt ein an sich notwendiger Codegenerator, ein an sich notwendiger Umcodierer, ein an sich notwendiger Zeitintervallgenerator und ein Rechteckgenerator zum Anstossen der entsprechenden rückgekoppelten Oszillatoren.

**Figur 13b** veranschaulicht alle 16 Paare von Verzögerungsketten, die mit der Anordnung aus **Figur 13a** gebildet werden können. Man erkennt insbesondere, dass lediglich durch das notwendige Vorsehen einer Parity-Check-Schaltung, die die binäre Kommutationsschaltung 1350 steuert, gewährleistet werden kann, dass alle Schaltungsmöglichkeiten bzw. Codeworte realisiert werden können, ohne dass ein einzelner Ringoszillator doppelter Länge entsteht.

Der Nachteil dieser Implementierung besteht darin, dass der starke Hamming-Abstand zwischen zwei beliebigen Kettenpaaren, immer gleich Null ist, da in jeder Spalte von $M_{2xL}$ nur zwei Verzögerungselemente für alle vier Verzögerungsketten der beiden Kettenpaare zur Verfügung stehen. Somit ist immer $G_s$ = L (siehe Formel (1)). Das hat zur Folge, dass eine Korrelation der einzelnen Bits der erzeugten IC-Eigenschlüssel nicht zu vermeiden ist. Es muss also zur Konfiguration der Kettenpaare ein Kanalcode gefunden werden, der die Korrelation so weit wie möglich reduziert, also zumindest den schwachen Hamming-Abstand maximiert. Das ist optimal realisiert, wenn sich von einem Codewort zum nächsten möglichst viele Bits ändern, da eine Bit-Änderung des Kanalcodes eine Vertauschung eines Verzögerungspaares darstellt, und damit $G_w$ (siehe Formel (2)) verringert.

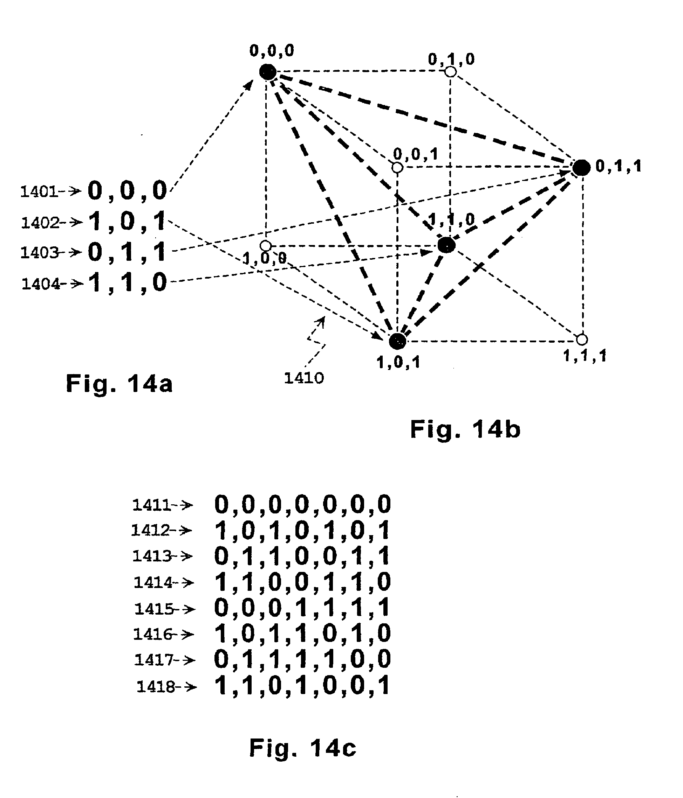

Deshalb bieten sich im Fall K=2 binäre *Simplex-Codes* $(L, N, d_{Hm})_2$ als lineare Kanalcodes an. Von allen Blockcodes haben sie den größtmöglichen minimalen Hamming-Abstand, $d_{Hm}$=N/2, und damit die meisten Bit-Änderungen zwischen zwei Codeworten. Die Simplex-Codes existieren nur für bestimmte Bitlängen L = $(2^n -1)$ und haben N= $2^n$ (n = 2,3,...) verschiedene Codeworte. Damit ist für manche Formate der Verzögerungsmatrix und bestimmte Werte der Länge N des IC-Eigenschlüssels der direkte Einsatz von Simplex-Codes nicht möglich, außer sie werden entsprechend modifiziert (verkürzt oder punktiert), oder es wird nur eine Untermenge von Codeworten genutzt. In **Figur 14a** ist ein binärer Simplex-Code für n=2, d.h. für die Bitlänge 3 aufgelistet, es besteht aus den vier Codeworten 1401, 1402, 1403, 1404.

**Figur 14b** zeigt die grafische Veranschaulichung 1410 des Simplex-Codes aus **Figur 14a** im dreidimensionalen Raum und den entsprechenden Hamming-Würfel, in dem die Codeworte einen Tetraeder aufspannen. Die Simplex-Codes beschreiben in diesem Fall also gerade, wie in einem Würfel der Kantenlänge 1 vier Punkte in jeweils maximalem wechselseitigem Abstand (Euklidisch sowie Hamming) voneinander angeordnet werden können.

In **Figur 14c** ist ein entsprechender Simplex-Code für n=3, d.h. mit eine Bitlänge von 7 Bit aufgelistet. Er besteht aus den acht Codeworten 1411, 1412, 1413, 1414, 1415, 1416, 1417 und 1418. Eine einfache grafische Veranschaulichung ist in diesem Fall jedoch nicht mehr möglich. Jedoch bleibt die Analogie mit der dreidimensionalen Veranschaulichung: acht Codeworte bestimmen die Ecken eines 7-dimensionalen Equivalents des Tetraeders - eines Simplex, der in einen 7-dimensionalen Hamming-Würfel eingeschrieben ist.

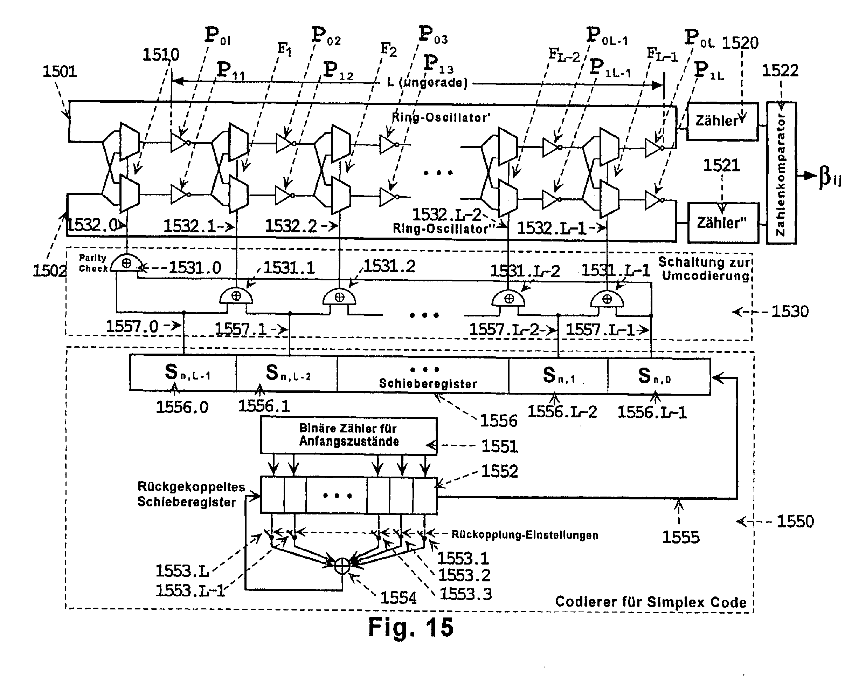

**Figur 15** zeigt eine spezielle Ausführungsform der Erfindung für den Fall K = 2. Wie aus der Codierungstheorie bekannt ist, können die Codeworte eines Simplex-Codes einfach durch ein rückgekoppeltes Schieberegister der Länge L erzeugt werden, dessen Rückkoppelungen über ein primitives Polynom definiert sind.

Damit die durch das Simplex-Codewort definierte Vertauschung der Verzögerungselemente durchgeführt werden kann, muss es, wie oben schon für den allgemeinen Fall (K>2) festgestellt, durch einen Umcodierer des Kanalcodes umcodiert werden zur Ansteuerung der binären Kommutationsschaltungen. Der Umcodierer des Kanalcodes nutzt, im Falle K = 2, unabhängig vom ausgewählten Kanalcode, die XOR-Verknüpfung zweier aufeinanderfolgender Bits des Codewortes zur Ansteuerung der binären Kommutationsschaltung die zwischen den durch diese Bits betroffenen Verzögerungspaaren liegt. Um zu verhindern, dass sich ein einzelner Ringoszillator doppelter Länge bildet, steuert der Umcodierer die der Verzögerungsmatrix vorgeschalteten Multiplexer durch die XOR-Verknüpfung des ersten und letzten Bits des Kanalcodewortes, wie in **Figur 15** dargestellt. Durch eine solche Umcodierung wird implizit bereits ein Parity-Check durchgeführt.

Im Einzelnen zeigt **Figur 15** eine 2xL Matrix von Invertern $P_{kl}$ mit k=0,1; l=1,...L mit L ungerade, L-1 binäre Kommutationsschaltungen $F_1$,..., $F_{L-1}$; zwei Rückkopplungssignalleitungen 1501, 1502, eine weitere binäre Kommutationsschaltung 1510, zwei Zähler 1520, 1521 mit jeweils einem Signaleingang und einem Signalausgang, einen Zahlenkomparator 1522, eine Schaltung zur Umcodierung 1530 und einen Codierer für Simplex Code 1550.

Der Codierer für Simplex-Code 1550 weist einen binären Zähler 1551 für Anfangszustände mit L Bits auf, dessen Inhalt in ein Schieberegister 1552 der Breite L Bits eingeschrieben werden kann. Das Schieberegister 1552 ist über Schalter 1553.1,..., 1553.L und eine Addierer-Schaltung 1554 rückgekoppelt und ferner über eine Signalleitung 1555 mit einem Schieberegister 1556 mit der Breite L Bits und den Registerzellen 1556.0,...,1556.L-1 verbunden. Zum Wechseln eines Codes wird der im Schieberegister 1552 enthaltenen Wert über die Signalleitung 1555 in das Schieberegister 1556 geschoben und gleichzeitig eine Aktualisierung des im Schieberegister 1552 enthaltenen Wertes mit einem in Abhängigkeit von den Rückkopplungs-Einstellungen, d.h. von der Position der Schalter 1553.1,...,1553.L, durch die Addierer-Schaltung 1554 neu berechneten Wert initiiert.

Die Zellen 1556.0,...,1556.L-1 fungieren als Ausgänge des Codierers für Simplex-Code 1550. Die in ihnen abgelegten Werte werden über Signalleitungen 1557.0,..., 1557.L-1 an die Schaltung zur Umcodierung 1530 übergeben.

Die Schaltung zur Umcodierung besteht in diesem Fall einfach aus L XOR-Schaltungen 1531.0,..., 1531.L-1 mit jeweils zwei Signaleingängen und jeweils einem Signalausgang. Dabei liegen an den Eingängen der XOR-Schaltung 1531.n für n=1,...,L-1 jeweils Signale der Signalleitungen 1557.n-1 und 1557.n an, an den Eingängen der XOR-Schaltung 1557.0 die Signale der Signalleitungen 1557.L-1 und 1557.0

Der Ausgang der XOR-Schaltung 1531.n liegt für n=1,...,L über eine Signalleitung 1532.n jeweils am Steuereingang der binären Kommutationsschaltung $F_n$. Dieses Signal bestimmt, wie anhand der **Figur 12** oben ausführlich erläutert wurde, die Signaldurchleitung durch die Kommutationsschaltung. Die Signalleitung 1532.0 liefert das Steuersignal für die Kommutationsschaltung 1510.

Ferner bestehen die folgenden Signalverbindungen:

- für l=1,...,L-1 die Signalausgänge der Inverter P 01, P11 über die binäre Kommutationsschaltung $E_1$ mit den Signaleingängen der Inverter $P_{01+1}$, $P_{11+1}$
- die Signalausgänge der Inverter $P_{0L}$ bzw. $P_{1L}$ mit den Signaleingängen der Zähler 1520 bzw. 1521,
- die Signalausgänge der Inverter $P_{0L}$ bzw. $P_{1L}$ über die Rückkopplungssignalleitungen 1501, 1502 und die Parity-Check-Schaltung 1510 mit den Signaleingängen der Inverter $P_{01}$, $P_{11}$,
- die Signalausgänge der Zähler 1520 bzw. 1521 mit den Signaleingängen des Zahlenkomparators 1522

In **Figur 15** sind insbesondere ein an sich notwendiger Zeitintervallgenerator und ein Rechteckgenerator zum Anstossen der entsprechenden rückgekoppelten Oszillatoren nicht dargestellt.

Die in **Figur 15** dargestellte Vorrichtung funktioniert folgendermaßen: Basierend auf einem im binären Zähler für Anfangszustände 1551 gespeicherten Anfangszustands des Codierers für Simplex-Code 1550 wird im Schieberegister 1556 ein erstes Codewort bereitgestellt, und durch die Schaltung zur Umcodierung 1530 in eine Konfiguration der binären Kommutationsschaltungen $F_1$ bis $F_{L-1}$ und 1510 übersetzt. Dadurch werden zwei unabhängige Ringoszillatoren gebildet. Der nicht gezeigte Zeitintervallgenerator wird gestartet, was zur Einspeisung eines beispielsweise durch einen nicht gezeigten Rechtecksignalgenerator erzeugten Signals in die unabhängigen Ringoszillatoren führt. In Abhängigkeit von den individuellen Laufzeiten des Signals durch die jeweils zu einem Ringoszillator beitragenden Inverter $P_{k1}$ benötigt das Signal zum Durchlaufen der unterschiedlichen gebildeten Ringoszillatoren unterscheidlich lange. Bei jedem erfolgten Durchlauf durch einen Ringoszillator wird der zugehörige Zähler 1520 bzw. 1521 um 1 erhöht.

Nach Ablauf des Zeitintervalls gibt der Zeitintervallgenerator ein Taktsignal aus, das einerseits das Auslesen der Zähler 1520, 1521 durch den Zahlenkomparator 1522 bewirkt und dadurch ein Bit des IC-Eigenschlüssels erzeugt und andererseits zu einer Berechnung eines neuen Codewortes durch Rückkopplung des Schieberegisters 1552 und der Bereitstellung eines nächsten Codewortes im Schieberegister 1556 führt. Dieses Codewort entspricht einer anderen Verschaltung der als Verzögerungselemente dienenden Inverter, mit der der vorstehend beschriebene Vorgang zur Gewinnung des nächsten Bits des IC-Eigenschlüssels erneut durchgeführt wird.

## Literatur

Kai Schramm, Kerstin Lemke, Christof Paar: "Embedded Cryptography: Side Channel Attacks", in Kerstin Lemke, Christof Paar Marko Wolf (Eds.): "Embedded Security in Cars", Springer-Verlag, ISBN 3-540-28384-6, pp. 187-206, 2006.
Kerstin Lemke: "Embedded Security: Physical Protection against Tampering Attacks", in Kerstin Lemke, Christof Paar, Marko Wolf (Eds.): "Embedded Security in Cars", Springer-Verlag, ISBN 3-540-28384-6, pp. 207-220, 2006.
Stefan Mangard, Elisabeth Oswald, Thomas Popp: "Power Analysis Attacks - Revealing the Secrets of Smart Cards", Springer, ISBN 0-387-30857-1, 2007, Chapt. 1, pp. 1-13.
Joint Interpretation Library: "Integrated Circuit Hardware Evaluation Methodology - Vulnerability Assessment", Version 1.3, IT-Sicherheitskriterien und Evaluierung nach ITSEC, http://www.bsi.de/zertifiz/itkrit/itsec.htm, April 2000.
Sean W. Smith, Steve Weingart: "Building a High-Performance, Programmable Secure Coprocessor", Technical Report, IBM T.J. Watson Research Center, P.O Box. Yorktown Heigts NY 10598, USA, www.research.ibm.com/secure_systems_department/projects/scop/p apers/arch.pdf, Revision of October 16, 1998.
Dejan E. Lazic, Vojin Senk: A Direct Geometrical Method for Bounding the Error Exponent for any Specific Family of Channel Codes - Part I: Cutoff Rate Lower Bound for Block Codes", IEEE Transactions on Information Theory, Vol. 38, No. 5, pp. 1548-1559, September 1992.
Stephen Wicker, Vijary Bhargava: "Reed-Solomon Codes and Their Applications", IEEE Press, ISBN 0-7803-1025-X, 1994, Chapt. 1, pp. 1-16, Chapt. 5, pp. 60-105.
F. J. MacWilliams and N. J. A. Sloane: "The theory of Error-Correcting Codes", North-Holland, Amsterdam, ISBN 0-444-85193-3, 1977, Chapter 1, pp. 1-34, Chapter 2, pp. 38-78, Chapter 10, pp. 294-315.
Solomon W. Golomb, Guang Gong: "Signal Design for Good Correlation: For Wireless Communication, Cryptography, and Radar", Cambridge University Press, ISBN 0-5218-2104-5, 2005, Chapt. 4, pp. 81-114.

## Patentansprüche

1. Schaltung zur Erzeugung einer echten, schaltungsspezifischen und zeitinvarianten binären Zufallszahl mit:

    einer Matrix von K•L Verzögerungselementen,
    wobei die Verzögerungselemente in K reihen und L spalten der Matrix angeordnet sind und mittels L-1 einfachen oder zweifachen Kommutationsschaltungen verschaltbar sind, und
    einem Laufzeit- oder Zahlenkomparator,
    **dadurch gekennzeichnet, dass**
    die Schaltung einen vor die Matrix geschalteten einfachen oder zweifachen Demultiplexer und
    einen hinter die Matrix geschalteten einfachen oder zweifachen Multiplexer aufweist,
    wobei die Stellung der Kommutationsschaltungen, des Demultiplexers und des Multiplexers durch ein Steuersignal vorgebbar ist, und dass die Schaltung einen Kanalcode-Codierer, mit dem Codeworte eines Kanalcodes erzeugbar sind,
    und einen Umcodierer, mit dem Codeworte des Kanalcodes zum Steuersignal der L-1 einfachen oder zweifachen Kommutationsschaltungen, des Demultiplexers und des Multiplexers umcodierbar sind, aufweist.

2. Schaltung nach Anspruch 1,
    **dadurch gekennzeichnet, dass** die Verzögerungselemente Inverter sind.

3. Schaltung nach Anspruch 2,
    **dadurch gekennzeichnet, dass** die erster Kette von L Verzögerungselementen zur Bildung eines ersten Ringoszillators an ihren Eingang rückgekoppelt ist und dass der Ausgang der zweiten Kette von L Verzögerungselementen zur Bildung eines zweiten Ringoszillators an ihren Eingang rückgekoppelt ist, wobei entweder die Kettenlänge L ungerade ist oder die Kettenlänge L gerade ist und die Rückkopplung über einen zusätzlichen Inverter erfolgt.

4. Schaltung nach Anspruch 3,
**dadurch gekennzeichnet, dass** ein Zahlenkomparator, ein erster Zähler und ein zweiter Zähler vorgesehen sind, wobei der erste Zähler mit dem ersten Ringoszillator und dem ersten Eingang des Zahlenkomparators in Signalverbindung steht und der zweite Zähler mit dem zweiten Ringoszillator sowie dem zweiten Eingang des Zahlenkomparators in Signalverbindung steht.

5. Schaltung nach Anspruch 3 oder 4,
**dadurch gekennzeichnet, dass** mindestens eine der Ketten an ihrem Anfang oder Ende mindestens ein zusätzliches, nicht zur Matrix der L•K Verzögerungselemente gehörendes Verzögerungselement aufweist, das direkt und nicht über eine Kommutationsschaltung mit den ihm benachbarten Verzögerungselementen der Kette verbunden ist und dass beide Ketten unterschiedlich viele Verzögerungselemente umfassen.

6. Schaltung nach einem vorstehenden Anspruch,
**dadurch gekennzeichnet, dass** ein Generator für Anfangszustände des Kanalcode-Codierers vorgesehen ist.

7. Schaltung nach Anspruch 6,
**dadurch gekennzeichnet, dass** der Generator für Anfangszustände des Kanalcode-Codierers ein Zähler ist.

8. Schaltung nach Anspruch 6,
**dadurch gekennzeichnet, dass** der Generator für Anfangszustände des Kanalcode-Codierers eine Lookup-Tabelle ist.

9. Schaltung nach einem vorstehenden Anspruch,
**dadurch gekennzeichnet, dass** K>2 ist und dass der Kanalcode-Codierer Mittel zur Erzeugung der Codeworte eines Reed-Solomon-Codes aufweist.

10. Schaltung nach einem vorstehenden Anspruch,
**dadurch gekennzeichnet, dass** K=2 ist und dass für eine natürliche Zahl l>0 der Kanalcode-Codierer ein rückgekoppeltes Schieberegister mit $L=2^{l-1}$ Verschiebungen und L+1 Anfangszuständen aufweist, dessen Rückkopplungen durch ein primitives Polynom bestimmt sind.

11. Schaltung nach einem der Ansprüche 1 bis 5,
**dadurch gekennzeichnet, dass** der Kanalcode-Codierer als Lookup-Tabelle ausgeführt ist oder dass der Kanalcode-Codierer und der Umcodierer als Lookup-Tabelle ausgeführt ist.

12. Verfahren zur Erzeugung einer echten, schaltungsspezifischen und zeitinvarianten Zufallszahl mittels einer Matrix von L•K Verzögerungselementen, L-1 einfachen oder zweifachen Kommutationsschaltungen, eines vor die Matrix geschalteten einfachen oder zweifachen Demultiplexers, eines hinter die Matrix geschalteten einfachen oder zweifachen Multiplexer, und eines Laufzeit- oder Zahlenkomparators, aufweisend zumindest die Schritte:

    a) Erzeugen eines Codewortes eines Kanalcodes
    b) Umcodieren eines Codewortes eines Kanalcodes zu einem Auswahlcode
    c) Erzeugen von Ketten von L Verzögerungselementen durch Einstellen einer einem der Codeworte des Auswahlcodes entsprechenden Einstellung der L-1 einfachen oder zweifachen Kommutationsschaltungen, des einfachen oder zweifachen Demultiplexers und des einfachen oder zweifachen Multiplexers
    d) Paarweises Vergleichen von durch die Verzögerungszeiten von zwei durch die dem Codewort des Kanalcodes entsprechende Einstellung der L-1 Kommutationsschaltungen definierten Ketten von L Verzögerungselementen bestimmten Größen mittels eines Zahlen- oder Verzögerungskomparators zur Erzeugung eines Bits der echten, schaltungsspezifischen und zeitinvarianten Zufallszahl.

13. Verfahren nach Anspruch 12,
**dadurch gekennzeichnet, dass** die von den Verzögerungszeiten der zwei durch die Einstellung der L-1 einfachen oder zweifachen Kommutationsschaltungen definierten Ketten von L Verzögerungselementen bestimmten Größen, die paarweise verglichen werden, durch Betreiben der Ketten als Ringoszillator über eine vorgegebene Anzahl von Oszillationen hinweg erzeugt werden.

14. Verfahren nach Anspruch 13,
    **dadurch gekennzeichnet, dass** die erste Kette von L Verzögerungselementen und die zweite Kette von L Verzögerungselementen nacheinander einzeln als Ringoszillator betrieben werden.

15. Verfahren nach Anspruch 13,
    **dadurch gekennzeichnet, dass** die erste Kette von L Verzögerungselementen und die zweite Kette von L Verzögerungselementen gleichzeitig als Ringoszillator betrieben werden, wobei zwischen den Ketten durch eine ungleiche Anzahl hinzugefügter weiterer, nicht zur L·K Matrix von Verzögerungselementen gehörender Verzögerungselemente ein mit jeder Oszillation wachsender definierter zeitlicher Versatz erzeugt wird.

16. Verfahren nach Anspruch 15,
    **dadurch gekennzeichnet, dass** die durch den Betrieb der Ketten als Ringoszillator zum Vergleich erzeugten Größen vor dem Vergleich um den definierten zeitlichen Versatz korrigiert werden.

17. Verfahren nach Anspruch 16,
    **dadurch gekennzeichnet, dass** K=2 ist und dass die Umcodierung nach der XOR-Regel erfolgt.

18. Verfahren nach Anspruch 17,
    **dadurch gekennzeichnet, dass** das Umcodieren einen Parity Check umfasst.

19. Verfahren nach einem der Ansprüche 12 bis 16,
    **dadurch gekennzeichnet, dass** K>2 und dass als Kanalcode ein Reed-Solomon-Code verwendet wird.

20. Verfahren nach einem der Ansprüche 12 bis 16,
    **dadurch gekennzeichnet, dass** K=2 ist und dass als Kanalcode ein Simplex-Code verwendet wird.

21. Verfahren nach Anspruch 20,
    **dadurch gekennzeichnet, dass** die Codeworte des Kanalcodes durch ein rückgekoppeltes Schieberegister, dessen Rückkopplungen durch ein primitives Polynom bestimmt sind, erzeugt werden.

**Claims**

1. Circuit for generating a real, circuit-specific and time-invariant binary random number, comprising:

   a matrix of K·L delay elements, wherein the delay elements are arranged in K rows and L
   columns of the matrix and are switchable by means of L - 1 single or double commutation switching actions, and
   a transit time or numerical comparator,
   **characterised in that**
   the circuit comprises a single or double demultiplexer connected in front of the matrix and
   a single or double multiplexer connected behind the matrix,
   wherein the setting of the commutation switching actions, of the Demultiplexer and of the multiplexer is predeterminable by a control signal and that the circuit comprises a channel-code coder by which code words of a channel-code can be generated,
   and a recoder by which the code words of the channel-code are recodable to form the control signal of the L - 1 single or double commutation switching actions, of the demultiplexer and of the multiplexer.

2. Circuit according to claim 1, **characterised in that** the delay elements are inverters.

3. Circuit according to claim 2, **characterised in that** the first chain of L delay elements is feedback coupled for formation of a first ring oscillator at the input thereof and that the output of the second chain of L delay elements is feedback-coupled for formation of a second ring oscillator at the input thereof, wherein either the chain length L is uneven or the chain length L is even and the feedback coupling is effected by way of an additional inverter.

4. Circuit according to claim 3, **characterised in that** a numerical comparator, a first counter and a second counter are provided, wherein the first counter is disposed in signal connection with the first ring oscillator and the first input of the numerical comparator and the second counter is disposed in signal connection with the second ring oscillator and the second input of the numerical comparator.

5. Circuit according to claim 3 or 4, **characterised in that** at least one of the chains has at the beginning or end thereof one additional delay element which does not belong to the matrix of L•K delay elements and which is directly connected and not by way of a commutation switching action with the delay elements adjacent thereto of the chain and that the two chains comprise different numbers of delay elements.

6. Circuit according to any one of the preceding claims, **characterised in that** a generator for initial states of the channel-code coder is provided.

7. Circuit according to claim 6, **characterised in that** the generator for initial states of the channel-code coder is a counter.

8. Circuit according to claim 6, **characterised in that** the generator for initial states of the channel-code coder is a look-up table.

9. Circuit according to any one of the preceding claims, **characterised in that** K is greater than 2 and that the channel-code coder comprises means for generating the codewords of a Reed-Solomon code.

10. Circuit according to any one of the preceding claims, **characterised in that** K is equal to 2 and that for a natural number 1 greater than 0 the channel-code coder comprises a feedback-coupled shift register with $L = 2^{l-1}$ shifts and $L + 1$ initial states, the feedback couplings of which are determined by a primitive polynomial.

11. Circuit according to any one of the claims 1 to 5, **characterised in that** the channel-code coder is executed as a look-up table or the channel-code coder and the recoder are executed as a look-up table.

12. Method of generating a real, circuit-specific and time-invariant random number by means of a matrix of L•K delay elements, L - 1 single or double commutation switching actions, a single or double demultiplexer connected in front of the matrix, a single or double multiplexer connected behind the matrix and a transit time or numerical comparator, comprising at least the steps:

   a) generating a code word of a channel code,
   b) recoding a code word of a channel code to form a selection code,
   c) generating chains of L delay elements by setting a setting, which corresponds with one of the code words of the selection code, of the L - 1 single or double commutation switching actions, of the single or double demultiplexer and of the single or double multiplexer and
   d) comparison in pairs of variables, which are determined by the delay elements of two chains - which are defined by the setting, which corresponds with the code word of the channel code, of the L - 1 commutation switching actions - of L delay elements by means of a numerical or delay comparator for generation of a bit of a real, circuit-specific and time-invariant random number.

13. Method according to claim 12, **characterised in that** the variables, which are determined by the delay times of the two chains - which are defined by the setting of the L - 1 single or double commutation switching actions - of L delay elements and which are compared in pairs, are generated by operation of the chains as a ring oscillator over a predetermined number of oscillations.

14. Method according to claim 13, **characterised in that** the first chain of L delay elements and the second chain of L delay elements are operated in succession individually as a ring oscillator.

15. Method according to claim 13, **characterised in that** the first chain of L delay elements and the second chain of L delay elements are operated simultaneously as a ring oscillator, wherein a defined offset in time increasing with each oscillation is produced between the chains by an unequal number of added further delay elements not belonging to the L•K matrix of delay elements.

16. Method according to claim 15, **characterised in that** the variables which are generated by operation of the chains as a ring oscillator and which are for comparison are corrected prior to the comparison by the defined offset in time.

**17.** Method according to claim 16, **characterised in that** K is equal to 2 and that the recoding takes place in accordance with the XOR rule.

**18.** Method according to claim 17, **characterised in that** the recoding includes a parity check.

**19.** Method according to any one of claims 12 to 16, **characterised in that** K is greater than 2 and that a Reed-Solomon code is used as channel code.

**20.** Method according to any one of claims 12 to 16, **characterised in that** K is equal to 2 and that a Simplex code is used as channel code.

**21.** Method according to claim 20, **characterised in that** the code words of the channel code are generated by a feedback coupled shift register, the feedback couplings of which are determined by a primitive polynomial.

**Revendications**

**1.** Circuit pour la génération d'un nombre aléatoire, réel, binaire, invariable dans le temps et spécifique du circuit, comprenant :

une matrice de K•L éléments à retard,
les éléments à retard étant agencés en K lignes et L colonnes de la matrice et peuvent être interconnectés au moyen de L-1 circuits de commutation simples ou doubles, et
un comparateur de durée ou de nombres,
**caractérisé en ce que** le circuit présente :

. un démultiplexeur simple ou double, branché en amont de la matrice, et
. un multiplexeur simple ou double, branché en aval de la matrice,

la position des circuits de commutation, du démultiplexeur et du multiplexeur étant susceptible d'être prédéterminée par un signal de commande,
et **en ce que**
le circuit présente un codeur de code de canal, avec lequel des mots de code d'un code de canal sont susceptibles d'être générés,
et un transcodeur, à l'aide duquel des mots de code du code de canal sont susceptibles d'être transcodés, pour un signal de commande des L-1 circuits de commutation simples ou doubles, du démultiplexeur et du multiplexeur.

**2.** Circuit selon la revendication 1, **caractérisé en ce que** les éléments à retard sont des inverseurs.

**3.** Circuit selon la revendication 2, **caractérisé en ce que** la première chaîne de L éléments à retard est rétroactive à son entrée pour la formation d'un premier oscillateur en anneau, et **en ce que** la sortie de la deuxième chaîne de L éléments à retard est rétroactive à son entrée pour la formation d'un deuxième oscillateur en anneau, sachant que soit la longueur de chaîne L est impaire, soit la longueur de chaîne L est paire et la rétroaction s'effectue par l'intermédiaire d'un inverseur supplémentaire.

**4.** Circuit selon la revendication 3, **caractérisé en ce qu'**un comparateur de nombres, un premier compteur et un deuxième compteur sont prévus, le premier compteur étant placé en liaison de signal avec le premier oscillateur en anneau et la première entrée du comparateur de nombres, et le deuxième compteur étant placé en liaison de signal avec le deuxième oscillateur en anneau et la deuxième entrée du comparateur de nombres.

**5.** Circuit selon la revendication 3 ou 4, **caractérisé en ce qu'**au moins l'une des chaînes présente, à son début ou à sa fin, au moins un élément à retard supplémentaire, n'appartenant pas à la matrice des L•K éléments à retard, relié, directement et non pas par l'intermédiaire d'un circuit de commutation, aux éléments à retard voisins de la chaîne.

**6.** Circuit selon l'une quelconque des revendications précédentes, **caractérisé en ce qu'**un générateur pour des états initiaux du codeur de code de canal est prévu.

**7.** Circuit selon la revendication 6, **caractérisé en ce que** le générateur pour des états initiaux du codeur de code de canal est un compteur.

**8.** Circuit selon la revendication 6, **caractérisé en ce que** le générateur pour des états initiaux du codeur de code de canal est une table de consultation.

**9.** Circuit selon l'une quelconque des revendications précédentes, **caractérisé en ce que** K > 2 et **en ce que** le codeur de code de canal présente des moyens pour générer les mots de code d'un code Reed-Solomon.

**10.** Circuit selon l'une quelconque des revendications précédentes, **caractérisé en ce que** K = 2 et **en ce que**, pour un nombre naturel 1 > 0, le codeur de code de canal présente un registre à décalage rétroactif, avec $L=2^{1-1}$ décalages et L+1 états initiaux, dont les rétroactions sont déterminées par un polynôme primitif.

**11.** Circuit selon l'une quelconque des revendications 1 à 5, **caractérisé en ce que** le codeur de code de canal est réalisé sous forme de table de consultation, ou **en ce que** le codeur de code de canal et le transcodeur sont réalisés sous forme de tables de consultation.

**12.** Procédé pour la génération d'un nombre aléatoire, réel, invariable dans le temps et spécifique du circuit, au moyen d'une matrice de L•K éléments à retard, L-1 circuits de commutation simples ou doubles, d'un démultiplexeur simple ou double branché en amont de la matrice, d'un multiplexeur simple ou double branché en aval de la matrice, et d'un comparateur de durée ou de nombres, présentant au moins les étapes consistant à :

a) générer un mot de code d'un code de canal,
b) transcoder un mot de code d'un code de canal en un code de sélection,
c) générer des chaînes de L éléments à retard, par ajustement d'un réglage, correspondant à l'un des mots de code du code de sélection, des L-1 circuits de commutation simples ou doubles, du démultiplexeur simple ou double et du multiplexeur simple ou double,
d) comparaison, deux à deux, de grandeurs, déterminées par les éléments à retard, de deux chaînes, définies par le réglage, correspondant au mot de code du code de canal, de L-1 circuits de commutation, de L éléments à retard, au moyen d'un comparateur de nombres ou de retard, pour générer un bit du nombre aléatoire, réel, invariable dans le temps et spécifique au circuit.

**13.** Procédé selon la revendication 12, **caractérisé en ce que** les grandeurs, déterminées par les éléments à retard, des deux chaînes, définies par le réglage des L-1 circuits de commutation simples ou doubles, de L éléments à retard, qui sont comparées deux à deux, sont générées par exploitation des chaînes en tant qu'oscillateur en anneau, sur un nombre prédéterminé d'oscillations.

**14.** Procédé selon la revendication 13, **caractérisé en ce que** la première chaîne de L éléments à retard et la deuxième chaîne de L éléments à retard sont exploitées l'une après l'autre, individuellement, en tant qu'oscillateur en anneau.

**15.** Procédé selon la revendication 13, **caractérisé en ce que** la première chaîne de L éléments à retard et la deuxième chaîne de L éléments à retard sont exploitées simultanément, en tant qu'oscillateur en anneau, un décalage temporel défini, croissant à chaque oscillation, étant généré entre les chaînes, au moyen d'un nombre impair d'autres éléments à retard ajoutés, n'appartenant pas à la matrice L•K d'éléments à retard.

**16.** Procédé selon la revendication 15, **caractérisé en ce que** les grandeurs, générées pour la comparaison par l'exploitation des chaînes en tant qu'oscillateur en anneau, sont corrigées, de la valeur du décalage temporel défini, avant la comparaison.

**17.** Procédé selon la revendication 16, **caractérisé en ce que** K > 2 et **en ce que** le transcodage s'effectue selon la règle XOR.

**18.** Procédé selon la revendication 17, **caractérisé en ce que** le transcodage comprend un contrôle de parité.

**19.** Procédé selon l'une des revendications 12 à 16, **caractérisé en ce que** K > 2 et **en ce qu'**on utilise un code Reed-Solomon en tant que code de canal.

**20.** Procédé selon l'une des revendications 12 à 16, **caractérisé en ce que** K = 2 et **en ce qu'**on utilise un code simplex en tant que code de canal.

**21.** Procédé selon la revendication 20, **caractérisé en ce que** les mots de code du code de canal sont générés par un registre à décalage rétroactif, dont les rétroactions sont déterminées par un polynôme primitif.

Fig. 1b

Fig. 1a

200

Integrierte Schaltung (IC)

220

Geschützter IC-Bereich sicher gegen Implementierungsattacken
auf Verarbeitung von IC-Geheimdaten

225

221

IC-Eigenschlüssel-generator

226

222

Echte wertkontinuierliche und
zeitinvariante Zufallsquelle

Erzeugung und
Zuführung von
IC-Geheimdaten

Nutzer von
IC-Geheimdaten

Extraktionsschaltung

227

Kurzfristige
flüchtige
Speicherung

228

IC-Geheimdaten
Verschlüsselung

IC-Geheimdaten
Entschlüsselung

223

Integritätsprüfung

229

224

212

Ungeschützter nichtflüchtiger Speicher
für verschlüsselte IC-Geheimdaten

Nichtkryptografische Funktionen im IC

211

210

**Fig. 2**

Fig. 3a

Zufallsvariable $\mathcal{T}$

Fig. 3b

Verzögerungselement

$\tau_{pdL} \approx \tau_{pdH} = \tau$ Gatterlaufzeit

Fig. 3c

Wahrscheinlichkeitsdichte

Fig. 3d

Entscheidungskriterium

$$\beta = \begin{cases} 0 & \mathcal{T} < E[\mathcal{T}] \\ 1 & \mathcal{T} \geq E[\mathcal{T}] \end{cases}$$

$$P[\beta] = \begin{cases} P[0] = \int_{-\infty}^{E[\mathcal{T}]} p(\mathcal{T})\,d\mathcal{T} \\ P[1] = \int_{E[\mathcal{T}]}^{\infty} p(\mathcal{T})\,d\mathcal{T} \end{cases}$$

EP 2 240 848 B1

**Verzögerungsmatrix** $\mathbf{M}_{K \times L}$

Eingang der ersten Verzögerungskette VK'=VK$_i$

Eingang der zweiten Verzögerungskette VK''=VK$_j$

Ausgang der ersten Verzögerungskette VK'=VK$_i$

Ausgang der zweiten Verzögerungskette VK''=VK$_j$

## Fig. 4a

**Wahrscheinlichkeitsdichten**

$p(\mathcal{T}_{k,l})$

$k = 1,2,...,K$
$l = 1,2,...,L$

$p(\mathcal{T}_{VK'})$

durchschnittliche Verzögerungsdifferenz

$p(\mathcal{T}_{VK''})$

## Fig. 4c

**Zufallsvariablen**

$$\mathcal{T}_{VK'} = \mathcal{T}_{VK_i} = \mathcal{T}_{21} + \mathcal{T}_{32} + \mathcal{T}_{33} + \cdots + \mathcal{T}_{K-1,1} + \cdots + \mathcal{T}_{2,L-1} + \mathcal{T}_{K-1,L}$$

$$\mathcal{T}_{VK''} = \mathcal{T}_{VK_j} = \mathcal{T}_{k,1} + \mathcal{T}_{2,2} + \mathcal{T}_{K-1,3} + \cdots + \mathcal{T}_{2,1} + \cdots + \mathcal{T}_{3,L-1} + \mathcal{T}_{2,L}$$

## Fig. 4b

**Entscheidungskriterium**

$$\beta_{ij} = \begin{cases} 0 & \mathcal{T}_{VK'} < \mathcal{T}_{VK''} \\ 1 & \mathcal{T}_{VK'} \geq \mathcal{T}_{VK''} \end{cases}$$

## Fig. 4d

Fig. 5

Fig. 6b

Fig. 6a

Fig. 7a

Fig. 7b

## Fig. 8a

$G_s = 0 \quad G_w = 0$

$d_{Hs}(KP_{...,....}, KP_{...,...}) = 4$

$d_{Hw}(KP_{...,....}, KP_{...,...}) = 4$

## Fig. 8b

$G_s = 4 \quad G_w = 1$

$d_{Hs}(KP_{...,....}, KP_{...,...}) = 0$

$d_{Hw}(KP_{...,....}, KP_{...,...}) = 3$

## Fig. 8c

$G_s = 3 \quad G_w = 1$

$d_{Hs}(KP_{...,....}, KP_{...,...}) = 1$

$d_{Hw}(KP_{...,....}, KP_{...,...}) = 3$

Verzögerungspaar: $[x;y]$ — Verzögerungselement in einer Spalte von $M_{xx_L}$, das zur ersten Verzögerungskette VK' gehört
— Verzögerungselement in der gleichen Spalte von $M_{xx_L}$, das zur ersten Verzögerungskette VK'' gehört

→ Verzögerungspaare eines Kettenpaars

$S_3$, $S_4$, $S_2$, $S_3$ ◄------ 9.1

$S_1$, $S_2$, $S_1$, $S_3$ ◄----- 9.2

$S_5$, $S_6$, $S_3$, $S_3$ ◄----- 9.3

$S_2$, $S_1$, $S_3$, $S_1$ ◄----- 9.4

$S_4$, $S_5$, $S_1$, $S_6$ ◄----- 9.5

$S_6$, $S_3$, $S_4$, $S_2$ ◄----- 9.6

## Fig. 9a

9.10

9,11    9,12    9,13    9,14    9.15

VK'    9.16    9.17    9.18    9.19    VK'

VK"    VK"

1000    0111    1110    1010 ◄-9.23

Register
für die
Codeworte
des Auswahlcodes

9.22 ---▶ | Umcodierer |

9.21 ---▶ | Kanalcode-Codierer |

9.20 ---▶| Generator für Anfangszustände der einzelnen Codewörter |

## Fig. 9b

EP 2 240 848 B1

**Fig. 10**

Fig. 11

**Fig. 12a**

**Fig. 12b**

Fig. 13a

Fig. 13b

0,0,0          0,1,0

0,0,1          0,1,1

1401-→ **0 , 0 , 0**

1402-→ **1 , 0 , 1**

1403-→ **0 , 1 , 1**

1404-→ **1 , 1 , 0**

1,1,0

1,0,0

1,0,1        1,1,1

**Fig. 14a**

1410

**Fig. 14b**

1411-→ **0,0,0,0,0,0,0**

1412-→ **1,0,1,0,1,0,1**

1413-→ **0,1,1,0,0,1,1**

1414-→ **1,1,0,0,1,1,0**

1415-→ **0,0,0,1,1,1,1**

1416-→ **1,0,1,1,0,1,0**

1417-→ **0,1,1,1,1,0,0**

1418-→ **1,1,0,1,0,0,1**

**Fig. 14c**

**Fig. 15**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **EDWARD SUH G et al.** Physical Unclonable Functions for Device Authentication and Secret Key Generation. *DESIGN AUTOMATION CONFER-ENCE, 2007. DAC '07 44TH ACM/IEEE, PI,* 01. Juni 2007, ISBN 978-1-59593-627-1, 9-14
- Identification and authentication of integrated circuits. **GASSEND B et al.** CONCURRENCY AND COMPUTA-TION: PRACTICE AND EXPERIENCE. WILEY, 01. Juni 2003, vol. 3, 1-26
- AEGLS: A single-chip secure processor. **SUH G E et al.** INFROMATION SECURITY TECHNICAL REPORT. ELSEVIER AD-VANCED TECHNOLOGY, 01. Januar 2005, vol. 10, 63-73
- **EDWARD SUH G et al.** Aegis: A Single -Chip Secure Processor. *IEEE DESIGN & TEST OF COMPUT-ERS, IEEE SERVICE CENTER,* 01. November 2007, vol. 24 (6), ISSN 0740-7475, 570-580
- PUF-HB: A Tamper-Resilient HB Based Authentication Protocol. **GHAITH KAMMOURI et al.** APPLIED CRYPTOHGRAPHY AND NETWORK SECURITY; [LECTURE NOTES IN COMPUTER SCIENDE]. SPRINGER, 05. Juni 2007, vol. 5037, 346-365
- **ALKABANI Y et al.** Remote activation of Ics for piracy prevention and digital right management. *COMPUTER-AIDED DESIGN, 2007. ICCAD 2007. IEEE/ACM INTERNATIONAL CONFER ENCE ON, IEEE, PI,* 04. November 2007, 674-677
- Embedded Cryptography: Side Channel Attacks. **Kai Schramm ; Kerstin Lemke ; Christof Paar.** Embedded Security in Cars. Springer-Verlag, 2006, 187-206
- Embedded Security: Physical Protection against Tampering Attacks. **Kerstin Lemke.** Embedded Security in Cars. Springer-Verlag, 2006, 207-220

- **Stefan Mangard ; Elisabeth Oswald ; Thomas Popp.** Power Analysis Attacks - Revealing the Secrets of Smart Cards. Springer, 2007, 1-13
- Integrated Circuit Hardware Evaluation Methodology - Vulnerability Assessment. *Version 1.3, IT-Sicherheitskriterien und Evaluierung nach ITSEC,* April 2000, www.bsi.de/zertifiz/itkrit/itsec.htm
- **Sean W. Smith ; Steve Weingart.** Building a High-Performance, Programmable Secure Coprocessor. *Technical Report, IBM T.J. Watson Research Center, P.O Box. Yorktown Heigts NY 10598, USA,* 16. Oktober 1998, www.research.ibm.com/secure_systems_department/projects/scop/p apers/arch.pdf
- **Dejan E. Lazic ; Vojin Senk.** A Direct Geometrical Method for Bounding the Error Exponent for any Specific Family of Channel Codes - Part I: Cutoff Rate Lower Bound for Block Codes. *IEEE Transactions on Information Theory,* September 1992, vol. 38 (5), 1548-1559
- **Stephen Wicker ; Vijary Bhargava.** Reed-Solomon Codes and Their Applications. IEEE Press, 1-16
- REED-SOLOMON CODES AND THEIR APPLICATIONS. 60-105
- **F. J. MacWilliams ; N. J. A. Sloane.** The theory of Error-Correcting Codes. 1977, 1-34
- THE THEORY OF ERROR-CORRECTING CODES. 38-78
- The theory of Error-Correcting Codes. 294-315
- **Solomon W. Golomb ; Guang Gong.** Signal Design for Good Correlation: For Wireless Communication, Cryptography, and Radar. Cambridge University Press, 2005, 81-114